# EUROPEAN PATENT APPLICATION

(11) **EP 4 480 915 A1**
(43) Date of publication of application: **25.12.2024**
(21) Application number: 23305978.1
(22) Date of filing: 20.06.2023
(51) Int. Cl.: C01B 33/24, C08L 27/16

(54) **WOLLASTONITE SUSBSTITUTE**

(71) Applicant: ImerTech SAS, 75015 Paris (FR)
(72) Inventor: Jacquemot, Rémy, 38080 L'Isle D'Abeau (FR); Masgalides, Cédric, 69100 Villeurbanne (FR); Leydier, Marlène, 38080 L'Isle D'Abeau (FR); Jakob, Alexandra, Toulouse, 31300 (FR); Meli, Gilles, Le Fauga, 31410 (FR)
(74) Representative: Haseltine Lake Kempner LLP

(57) **Abstract**

A method of making a synthetic mineral product for use as a wollastonite substitute comprises: providing a mixture comprising a silica-containing material and a calcium-containing material; and heating the mixture at no less than about 1200°C to form the synthetic mineral product.

## Description

### TECHNICAL FIELD

The present disclosure concerns synthetic mineral products for use as wollastonite substitutes, methods of making such synthetic mineral products, methods and uses associated with such synthetic mineral products, polymer compositions comprising such synthetic mineral products, methods of making such polymer compositions, and articles of manufacture formed from such polymer compositions.

### BACKGROUND

Wollastonite is a naturally occurring mineral form of calcium inosilicate (CaSiOs). Wollastonite finds industrial applications in ceramics, in paints, in plastics and in metallurgy. For example, wollastonite is added to ceramics to reduce shrinkage and gas evolution during firing and to increase both green and fired strength while maintaining brightness. Wollastonite is added to paints to increase durability and weather-resistance and to mattify paint films. Wollastonite is added to polymers (e.g., elastomers such as fluoroelastomers) to improve mechanical properties and to increase stability at elevated temperatures. In metallurgy, wollastonite is a common mineral component of mould fluxes for casting metals such as steel.

However, being a natural resource, wollastonite is becoming scarce and, consequently, expensive. Naturally occurring wollastonite particles are acicular (i.e., needle or fibre-like) and naturally occurring wollastonite can contain relatively high levels of crystalline silica, both of which contribute to wollastonite being considered a hazard for human health. Improvements in the properties of polymers typically filled with wollastonite would also be desirable.

Accordingly, it would be beneficial to provide a material suitable for use as a wollastonite substitute.

### SUMMARY

According to a first aspect, there is provided a method of making a synthetic mineral product (e.g., for use as a wollastonite substitute), the method comprising: providing a mixture comprising a silica-containing material and a calcium-containing material; and heating the mixture at no less than about 1200°C to form the synthetic mineral product.

According to a second aspect, there is provided a synthetic mineral product (e.g., for use as a wollastonite substitute), the synthetic mineral product obtained or obtainable by the method according to the first aspect.

According to a third aspect, there is provided a synthetic mineral product (e.g., for use as a wollastonite substitute), the synthetic mineral product having an X-ray diffraction pattern substantially as shown in the following Table:

| 2-Theta | d-spacing (nm) | Relative Intensity^{(a)} |
|---|---|---|
| 26 ± 0.10 | 3.42 | M |
| 27.56 ± 0.10 | 3.23 | VS |
| 31.84 ± 0.10 | 2.8 | VS |
| 45.46 ± 0.10 | 1.99 | M |
| 45.86 ± 0.10 | 1.98 | VS |

| | | |
|---|---|---|
| ^{(a)} W = weak (> 0 to ≤ 20); M = medium (> 20 to ≤ 40); S = strong (> 40 to ≤ 60); VS = very strong (> 60 to ≤ 100). | | |

According to a fourth aspect, there is provided a synthetic mineral product (e.g., for use as a wollastonite substitute), the synthetic mineral product comprising, as determined by X-ray fluorescence spectroscopy: from about 40 wt. % to about 60 wt. %, for example, from about 45 wt. % to about 55 wt. %, or from about 48 wt. % to about 52 wt. %, SiOz; and from about 40 wt. % to about 60 wt. %, for example, from about 42 wt. % to about 52 wt. %, or from about 45 wt. % about 50 wt. %, CaO; wherein the synthetic mineral product has a non-acicular particle shape, for example, wherein the synthetic mineral product has a blocky particle shape.

According to a fifth aspect, there is provided a polymer composition comprising a polymer and the synthetic mineral product according to any of the second, third or fourth aspects.

According to a sixth aspect, there is provided a method of making the polymer composition according to the fifth aspect, the method comprising combining a polymer or polymer precursors with the synthetic mineral product according to any of the second, third or fourth aspects.

According to a seventh aspect, there is provided an article of manufacture formed from the polymer composition according to the sixth aspect.

According to an eighth aspect, there is provided a use of the synthetic mineral product according to any of the second, third or fourth aspects in a polymer composition to: (a) increase the crosslink density of the polymer composition; (b) reduce the t90 vulcanization time to 90 % cure of the polymer composition; (c) increase the elongation at break of the polymer composition; and/or (d) reduce the compression set of the polymer composition; as compared to a reference polymer composition comprising the same amount of natural wollastonite or a wollastonite substitute not according to any of the second, third or fourth aspects.

According to a ninth aspect, there is provided a method of: (a) increasing the crosslink density of a polymer composition; (b) reducing the t90 vulcanization time to 90 % cure of the polymer composition; (c) increasing the elongation at break of the polymer composition; and/or (d) reducing the compression set of the polymer composition; as compared to a reference polymer composition comprising a reference amount of natural wollastonite or a wollastonite substitute not according to any of the second, third or fourth aspects, wherein the method comprises adding the synthetic mineral product according to any of the second, third or fourth aspects to the polymer composition in the reference amount.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

### FIGURES

Embodiments will now be described by way of example only, with reference to the Figures, in which:
**Figure 1** is a plot of powder X-ray diffraction patterns for the synthetic mineral product according to the present invention and for natural acicular wollastonite;
**Figure 2** is a scanning electron microscope image of the synthetic mineral product according to the present invention;
**Figure 3** shows scanning electron microscope images of untreated (left) and surface-treated (right) acicular wollastonite;
**Figure 4** is a plot of tensile strength, before and after ageing, for polymer compositions PC1, PC2 and PC3;
**Figure 5** is a plot of elongation at break, before and after ageing, for polymer compositions PC1, PC2 and PC3;
**Figure 6** is a plot of compression set for polymer compositions PC1, PC2 and PC3;
**Figure 7** is a plot of tensile strength, before ageing, after oil ageing, and after air ageing, for polymer compositions PC4, PC5 and PC6;
**Figure 8** is a plot of elongation at break, before ageing, after oil ageing, and after air ageing, for polymer compositions PC4, PC5 and PC6;
**Figure 9** is a plot of compression set for polymer compositions PC4, PC5 and PC6;
**Figure 10** is a plot of contact angle as a function of time for the synthetic mineral product according to the present invention and for natural acicular wollastonite when tested using a Dynamic Absorption Tester with water; and
**Figure 11** shows images of water droplets 0.1 seconds after application to (a) natural acicular wollastonite and (b) the synthetic mineral product according to the present invention during contact angle measurement using a Dynamic Absorption Tester.

### DETAILED DESCRIPTION

It has surprisingly been found that a synthetic mineral product suitable for use as a wollastonite substitute can be prepared by heating a mixture comprising a silica-containing material and a calcium-containing material at no less than about 1200°C.

### Silica-containing material

The silica-containing material may be any suitable material which contains silica (i.e., SiO₂).

The silica-containing material may comprise no less than about 50 wt. %, for example, no less than about 75 wt. %, or no less than about 90 wt. %, or no less than about 95 wt. %, or no less than about 99 wt. %, or no less than about 99.9 wt. %, silica. For example, the silica-containing material may consist, or consist essentially, of silica.

The silica-containing material may be selected from silica sand, quartz, fused quartz, tridymite, cristobalite, keatite, moganite, coesite, stishovite, seifertite, melanophlogite, fumed silica, silica fume, silica gel, silica aerogel, and/or any combination thereof.

Silica sand is a naturally occurring, granular material comprising finely divided rock and/or mineral particles comprising (e.g., consisting of, or consisting essentially of) silica. The silica in the silica sand may be in the form of quartz. The silica sand may also contain other components such as coral or shell fragments, gypsum, feldspar, magnetite, chlorite, glauconite, basalt, obsidian and/or olivine. The silica sand may predominantly comprise silica. For example, the silica sand may comprise no less than about 80 wt. %, for example, no less than about 90 wt. %, or no less than about 95 wt. %, or no less than about 97.5 wt. %, or no less than about 99 wt. %, silica. The silica sand may consist, or consist essentially, of silica.

Quartz is a crystalline mineral form of silica. Quartz may be α-quartz or β-quartz. α-quartz crystallises in the trigonal crystal system, with space group P3,21 or P3₂21. β-quartz crystallises in the hexagonal crystal system, with space group P6₄22 or P6₂22. The quartz may predominantly comprise silica. For example, the quartz may comprise no less than about 95 wt. %, for example, no less than about 97.5 wt. %, or no less than about 99 wt. %, or no less than about 99.5 wt. %, silica. The quartz may consist, or consist essentially, of silica. The quartz may be pure quartz, also known as rock crystal or clear quartz. Alternatively, the quartz may contain one or more impurities. For example, the quartz may contain trace quantities of metals such as iron. The quartz may be in the form of amethyst, blue quartz, dumortierite quartz, citrine, ametrine, milky quartz, rose quartz, chalcedony, carnelian, aventurine, agate, onyx, jasper, smoky quartz, tiger's eye, prasiolite and/or rutilated quartz.

Tridymite, cristobalite, keatite, moganite, coesite, stishovite, seifertite and melanophlogite are polymorphs of quartz which tend to form under different temperatures and/or pressures. Each of tridymite, cristobalite, keatite, moganite, coesite, stishovite, seifertite and melanophlogite may comprise no less than about 95 wt. %, for example, no less than about 97.5 wt. %, or no less than about 99 wt. %, or no less than about 99.5 wt. %, silica. Each of tridymite, cristobalite, keatite, moganite, coesite, stishovite, seifertite and melanophlogite may consist, or consist essentially, of silica.

Fumed silica, also known as pyrogenic silica, comprises microscopic droplets of amorphous silica fused into branched, chainlike, three-dimensional secondary particles which agglomerate into tertiary particles. Fumed silica can be prepared by flame pyrolysis of silicon tetrachloride or electric arc vaporisation of silica sand. Fumed silica may comprise no less than about 95 wt. %, for example, no less than about 97.5 wt. %, or no less than about 99 wt. %, or no less than about 99.5 wt. %, silica. Fumed silica may consist, or consist essentially, of silica.

Silica fume, also known as microsilica, is an amorphous polymorph of silica. Silica fume is typically produced as a by-product of silicon and ferrosilicon alloy production. Silica fume may comprise no less than about 95 wt. %, for example, no less than about 97.5 wt. %, or no less than about 99 wt. %, or no less than about 99.5 wt. %, silica. Silica fume may consist, or consist essentially, of silica.

Silica gel is an amorphous and porous form of silica comprising an irregular three-dimensional framework of alternating silicon and oxygen atoms with nanometre-scale voids or pores. Voids or pores may be filled with liquid such as water, with gas, or with vacuum. Silica gel may be silica aerogel or silica xerogel. Silica gel may comprise no less than about 95 wt. %, for example, no less than about 97.5 wt. %, or no less than about 99 wt. %, or no less than about 99.5 wt. %, silica. Silica gel may consist, or consist essentially, of silica.

The silica-containing material may be a particulate material.

Particle size properties of particulate materials may be determined by sedigraph (i.e., sedimentation) or by laser diffraction.

In the sedimentation technique, particle size properties are as measured in a well-known manner by sedimentation of the particulate material in a fully dispersed condition in an aqueous medium using a Sedigraph III machine as supplied by Micromeritics Instruments Corporation, Norcross, Georgia, USA (www.micromeritics.com), and based on application of Stokes' Law. Such a machine provides measurements and a plot of the cumulative percentage by weight of particles having a size, referred to in the art as the 'equivalent spherical diameter' (e.s.d), less than given e.s.d values. The mean particle size d_{50sedi} is the value determined in this way of the particle e.s.d at which there are 50% by weight of the particles which have an equivalent spherical diameter less than that d₅₀ value. The d_{95sedi} value is the value at which 95% by weight of the particles have an esd less than that d_{95sedi} value. Particle size properties may be determined in accordance with ISO 13317-3, or any method equivalent thereto.

In the laser diffraction technique, particle size properties are measured by wet Malvern laser scattering (standard ISO 13320-1). In this technique, the size of particles in powders, suspensions and emulsions may be measured using the diffraction of a laser beam, based on the application of Mie theory. Such a machine, for example a Malvern Mastersizer 2000 (as supplied by Malvern instruments) provides measurements and a plot of the cumulative percentage by volume of particles having a size, referred to in the art as the "equivalent spherical diameter" (e.s.d), less than given e.s.d values. The mean particle size d₅₀ is the value determined in this way of the particle e.s.d. at which there are 50% by weight of the particles which have an equivalent spherical diameter less than that d₅₀ value. For the avoidance of doubt, the measurement of particle size using laser light scattering is not an equivalent method to the sedimentation method referred to above.

Details of the sedigraph and laser particle size measurement methods used in the preparation of the present application are set out in the Examples.

The silica-containing material may have a d₁₀, by laser, no less than about 0.5 µm, for example, no less than about 1.0 µm, or no less than about 1.5 µm, or no less than about 1.9 µm, or no less than about 2.0 µm. The silica-containing material may have a d₁₀, by laser, no greater than about 5.0 µm, for example, no greater than about 4.0 µm, or no greater than about 3.0 µm, or no greater than about 2.5 µm, or no greater than about 2.1 µm. The silica-containing material may have a d₁₀, by laser, from about 0.5 µm to about 5.0 µm, for example, from about 1.0 µm to about 3.0 µm, or from about 1.5 µm to about 2.5 µm, or from about 1.5 µm to about 2.1 µm, or from about 2.0 µm to about 2.1 µm.

The silica-containing material may have a d₂₀, by laser, no less than about 2.0 µm, for example, no less than about 3.0 µm, or no less than about 4.0 µm, or no less than about 4.5 µm, or no less than about 5.0 µm, or no less than about 5.5 µm. The silica-containing material may have a d₂₀, by laser, no greater than about 10.0 µm, for example, no greater than about 9.0 µm, or no greater than about 8.0 µm, or no greater than about 7.0 µm, or no greater than about 6.5 µm, or no greater than about 6.0 µm. The silica-containing material may have a d₂₀, by laser, from about 2.0 µm to about 10.0 µm, for example, from about 3.0 µm to about 9.0 µm, or from about 4.0 µm to about 8.0 µm, or from about 5.0 µm to about 7.0 µm, or from about 5.0 µm to about 6.0 µm, or from about 5.5 µm to about 6.0 µm.

The silica-containing material may have a d₅₀, by laser, no less than about 15.0 µm, for example, no less than about 17.5 µm, or no less than about 20.0 µm, or no less than about 25.0 µm, or no less than about 27.0 µm, or no less than about 28.0 µm, or no less than about 28.5 µm. The silica-containing material may have a d₅₀, by laser, no greater than about 45.0 µm, for example, no greater than about 40.0 µm, or no greater than about 35.0 µm, or no greater than about 32.0 µm, or no greater than about 30.0 µm, or no greater than about 29.0 µm. The silica-containing material may have a d₅₀, by laser, from about 15.0 µm to about 45.0 µm, for example, from about 17.5 µm to about 40.0 µm, or from about 20.0 µm to about 40.0 µm, or from about 25.0 µm to about 35.0 µm, or from about 27.0 µm to about 32.0 µm, or from about 28.0 µm to about 29.0 µm.

The silica-containing material may have a d₈₀, by laser, no less than about 50.0 µm, for example, no less than about 55.0 µm, or no less than about 60.0 µm, or no less than about 65.0 µm, or no less than about 68.0 µm, or no less than about 69.0 µm, or no less than about 70.0 µm. The silica-containing material may have a d₈₀, by laser, no greater than about 100.0 µm, for example, no greater than about 95.0 µm, or no greater than about 90.0 µm, or no greater than about 85.0 µm, or no greater than about 80.0 µm, or no greater than about 75.0 µm, or no greater than about 72.0 µm, or no greater than about 71.0 µm. The silica-containing material may have a d₈₀, by laser, from about 50.0 µm to about 100.0 µm, for example, from about 55.0 µm to about 90.0 µm, or from about 60.0 µm to about 80.0 µm, or from about 65.0 µm to about 75.0 µm, or from about 69.0 µm to about 72.0 µm, or from about 70.0 µm to about 71.0 µm.

The silica-containing material may have a d₉₀, by laser, no less than about 70.0 µm, for example, no less than about 75.0 µm, or no less than about 80.0 µm, or no less than about 85.0 µm, or no less than about 90.0 µm, or no less than about 95.0 µm, or no less than about 96.0 µm, or no less than about 97.0 µm. The silica-containing material may have a d₉₀, by laser, no greater than about 130.0 µm, for example, no greater than about 125.0 µm, or no greater than about 120.0 µm, or no greater than about 115.0 µm, or no greater than about 110.0 µm, or no greater than about 105.0 µm, or no greater than about 100.0 µm, or no greater than about 99.0 µm, or no greater than about 98.0 µm. The silica-containing material may have a d₉₀, by laser, from about 70.0 µm to about 130.0 µm, for example, from about 80.0 µm to about 120.0 µm, or from about 90.0 µm to about 110.0 µm, or from about 95.0 µm to about 105.0 µm, or from about 95.0 µm to about 100.0 µm, or from about 96.0 µm to about 98.0 µm, or from about 97.0 µm to about 98.0 µm.

The silica-containing material may have a d₉₉, by laser, no less than about 120.0 µm, for example, no less than about 130.0 µm, or no less than about 140.0 µm, or no less than about 150.0 µm, or no less than about 155.0 µm, or no less than about 160.0 µm. The silica-containing material may have a d₉₉, by laser, no greater than about 200.0 µm, for example, no greater than about 190.0 µm, or no greater than about 180.0 µm, or no greater than about 170.0 µm, or no greater than about 165.0 µm, or no greater than about 162.0 µm. The silica-containing material may have a d₉₉, by laser, from about 120.0 µm to about 200.0 µm, for example, from about 130.0 µm to about 190.0 µm, or from about 140.0 µm to about 180.0 µm, or from about 150.0 µm to about 170.0 µm, or from about 155.0 µm to about 165.0 µm, or from about 160.0 µm to about 162.0 µm.

### Calcium-containing material

The calcium-containing material may be any suitable material which contains calcium (i.e., Ca).The calcium content of the calcium-containing material may be determined using X-ray based methods, for example, Energy Dispersive X-Ray Fluorescence (EDXRF) (for example using the Xepos instrument available from SPECTRO A. I. GmbH). The calcium content of the calcium-containing material determined using EDXRF may be expressed in terms of the oxide equivalent (i.e., CaO equivalent) of the calcium present, as is standard in the field.

Expressed in terms of the oxide equivalent, the calcium-containing material may comprise no less than about 50 wt. %, for example, no less than about 75 wt. %, or no less than about 90 wt. %, or no less than about 95 wt. %, or no less than about 99 wt. %, or no less than about 99.9 wt. %, of CaO.

The calcium-containing material may contain calcium in the form of one or more calcium-containing compounds. The calcium-containing material may consist of, or consist essentially of, or be, one or more calcium-containing compounds.

The calcium-containing material may contain calcium in the form of one or more oxides, carbonates and/or silicates of calcium, such as calcium oxide (i.e., CaO), calcium carbonate (i.e., CaCOs) and/or calcium silicate (i.e., Ca₂SiO₄).

The calcium-containing material may consist essentially of, consist of, or be, calcium oxide (i.e., CaO).

The calcium-containing material may consist essentially of, consist of, or be, calcium carbonate (i.e., CaCOs).

The calcium-containing material may consist essentially of, consist of, or be, calcium silicate (i.e., Ca₂SiO₄).

The calcium-containing material may consist essentially of, consist of, or be, a combination of two or more of calcium oxide (i.e., CaO), calcium carbonate (i.e., CaCOs) and calcium silicate (i.e., Ca₂SiO₄).

The calcium-containing material may be selected from lime, quick lime, calcite, aragonite, vaterite, limestone, chalk, marble, travertine, ground calcium carbonate, precipitated calcium carbonate, calcium silicate, dolomite, and/or any combination thereof.

Lime is a calcium-containing inorganic material predominantly comprising oxides, hydroxides and/or carbonates of calcium, silicon, magnesium, aluminium and/or iron. Lime may predominantly comprise oxides and/or carbonates of calcium. Lime may comprise no less than about 90 wt. %, for example, no less than about 95 wt. %, or no less than about 99 wt. %, or no less than about 99.9 wt. %, oxides and/or carbonates of calcium. Lime may consist, or consist essentially, of oxides and/or carbonates of calcium.

Quick lime, also known as burnt lime, is calcium oxide (CaO), which may be obtained by calcining calcium carbonate-containing materials such as limestone or seashells. The quick lime may be substantially pure. For example, the quick lime may comprise no less than about 90 wt. %, for example, no less than about 95 wt. %, or no less than about 99 wt. %, or no less than about 99.9 wt. %, calcium oxide (CaO).

Calcite is a polymorph of calcium carbonate (CaCOs) which crystallises in the trigonal crystal system with space group R3c. Aragonite is a polymorph of calcium carbonate (CaCOs) which crystallises in the orthorhombic crystal system with space group Pmcn. Vaterite is a polymorph of calcium carbonate (CaCOs) which crystallises in the hexagonal crystal system with space group P6₃/mmc. Each of calcite, aragonite and vaterite may predominantly comprise calcium carbonate (CaCOs). For example, each of calcite, aragonite and vaterite may comprise no less than about 95 wt. %, for example, no less than about 97.5 wt. %, or no less than about 99 wt. %, or no less than about 99.5 wt. %, calcium carbonate (CaCOs). Each of calcite, aragonite and vaterite may consist, or consist essentially, of calcium carbonate (CaCOs). Each of calcite, aragonite and vaterite may, respectively, be pure calcite, pure aragonite and pure vaterite. Alternatively, each of calcite, aragonite and vaterite may contain one or more impurities.

Limestone is a carbonate sedimentary rock predominantly comprising calcite and aragonite. Limestone may comprise no less than about 90 wt. %, for example, no less than about 95 wt. %, or no less than about 97.5 wt. %, or no less than about 99 wt. %, or no less than about 99.5 wt. %, calcium carbonate (CaCOs).

Chalk is a form of limestone predominantly comprising calcite. Chalk may comprise no less than about 90 wt. %, for example, no less than about 95 wt. %, or no less than about 97.5 wt. %, or no less than about 99 wt. %, or no less than about 99.5 wt. %, calcium carbonate (CaCOs).

Marble is a metamorphic rock predominantly comprising calcite and/or dolomite. Marble may comprise no less than about 90 wt. %, for example, no less than about 95 wt. %, or no less than about 97.5 wt. %, or no less than about 99 wt. %, or no less than about 99.5 wt. %, calcium carbonate (CaCO₃).

Travertine is a form of terrestrial limestone typically deposited around mineral springs. Travertine may comprise no less than about 90 wt. %, for example, no less than about 95 wt. %, or no less than about 97.5 wt. %, or no less than about 99 wt. %, or no less than about 99.5 wt. %, calcium carbonate (CaCO₃).

Ground calcium carbonate (i.e., GCC) is calcium carbonate obtained from a natural source by grinding. GCC is typically obtained by crushing and then grinding a mineral source of calcium carbonate such as chalk, marble or limestone. Crushing and grinding may be followed by a particle size classification step in order to obtain a product having a desired degree of fineness. Other techniques such as bleaching, flotation and magnetic separation may also be used to obtain a product having a desired degree of fineness and/or colour. The particulate may be ground autogenously, i.e. by attrition between the particles of the solid material themselves, or, alternatively, in the presence of a particulate grinding medium comprising particles of a different material from the calcium carbonate to be ground. These processes may be carried out with or without the presence of a dispersant and biocides, which may be added at any stage of the process.

Precipitated calcium carbonate (i.e., PCC) is calcium carbonate which is typically produced by precipitation from a solution. PCC may be made by any method known in the art.

The calcium silicate may be synthetic calcium silicate or any natural (e.g., mineral) form of calcium silicate. For example, the calcium silicate may be in the form of a calcium orthosilicate or a calcium nesosilicate (e.g., calcium orthosilicate (Ca₂SiO₄), grossular (Ca₃Al₂(SiO₄)₃), andradite (Ca₃Fe₂(SiO₄)₃), uvarovite (Ca₃Cr₂(SiO₄)₃), datolite (CaBSiO₄(OH)), or titanite (CaTiSiO₅), and the like), a calcium sorosilicate (e.g., lawsonite (CaAl₂(Si₂O₇)(OH)₂·H₂O), ilvaite (CaFe^{II}₂Fe^{III}O(Si₂O₇)(OH)), or epidote (Ca₂(Al,Fe)₃O(SiO₄)(Si₂O₇)(OH)), and the like), a calcium cyclosilicate (e.g., papagoite (CaCuAlSi₂O₆(OH)₃), a calcium inosilicate (e.g., pigeonite (Ca_{0.25}(Mg,Fe)_{1.75}Si₂O₆), diopside (CaMgSi₂O₆), or tremolite (Ca₂Mg₅Si₈O₂₂(OH)₂), and the like), a calcium phyllosilicate (e.g. margarite (CaAl₂(Al₂Si₂)O₁₀(OH)₂), and the like), or a calcium tectosilicate (e.g. meionite (Ca₄(Al₂Si₂O₈)₃(Cl₂CO₃,SO₄), and the like). Calcium silicate can be manufactured by reacting calcium oxide with silica.

Dolomite is an anhydrous carbonate mineral comprising mainly calcium magnesium carbonate in the form of CaMg(CO₃)₂. The mineral dolomite is typically found in sedimentary carbonate rock also known as dolomite or dolostone.

TAPPI Monograph Series No 30, "Paper Coating Pigments", pages 34-35, the contents of which are incorporated herein by reference, describes three main commercial processes for preparing precipitated calcium carbonate. In all three processes, limestone is first calcined to produce quick lime, and the quick lime is then slaked in water to yield calcium hydroxide or milk of lime. In the first process, the milk of lime is directly carbonated with carbon dioxide gas. This process has the advantage that little or no by-product is formed, and it is relatively easy to control the properties and purity of the calcium carbonate product. In the second process, the milk of lime is contacted with soda ash to produce, by double decomposition, a precipitate of calcium carbonate and a solution of sodium hydroxide. Typically, the sodium hydroxide is substantially completely separated from the calcium carbonate. In the third main commercial process, the milk of lime is first contacted with ammonium chloride to give a calcium chloride solution and ammonia gas. The calcium chloride solution is then contacted with soda ash to produce, by double decomposition, precipitated calcium carbonate and a solution of sodium chloride.

Alternatively, PCC may be made by reacting gypsum (calcium sulphate) with ammonium carbonate or ammonium bicarbonate.

Alternatively, PCC may be made by reacting calcium chloride with sodium carbonate or ammonium carbonate.

Alternatively, PCC may be obtained by carbonation of milk of lime in the presence of a crystallization controller selected from: polyacrylic acid, an aminopolycarboxylic acid (e.g. EDTA), citric acid, and salts thereof; aluminium sulphate; saccharose (e.g. sucrose); and any mixtures thereof. For instance, PCC may be prepared by one or more of the methods described in WO03/004414, the contents of which are incorporated herein by reference, particularly page 2, line 11 to page 3, line 38; page 4, line 29 to page 5, line 6; and page 5, line 36 to page 6, line 28 as well as examples 4 and 5.

The calcium-containing material may be a particulate material.

The calcium-containing material may have a d₁₀, by laser, no less than about 0.5 µm, for example, no less than about 1.0 µm, or no less than about 1.5 µm, or no less than about 2.0 µm, or no less than about 2.5 µm, or no less than about 2.8 µm, or no less than about 2.9 µm. The calcium-containing material may have a d₁₀, by laser, no greater than about 6.0 µm, for example, no greater than about 5.0 µm, or no greater than about 4.0 µm, or no greater than about 3.5 µm, or no greater than about 3.1 µm, or no greater than about 3.0 µm. The calcium-containing material may have a d₁₀, by laser, from about 0.5 µm to about 6.0 µm, for example, from about 1.0 µm to about 5.0 µm, or from about 2.0 µm to about 4.0 µm, or from about 2.5 µm to about 3.5 µm, or from about 2.8 µm to about 3.1 µm, or from about 2.9 µm to about 3.0 µm.

The calcium-containing material may have a d₂₀, by laser, no less than about 5.0 µm, for example, no less than about 6.0 µm, or no less than about 7.0 µm, or no less than about 8.0 µm, or no less than about 9.0 µm, or no less than about 10.0 µm, or no less than about 11.0 µm, or no less than about 12.0 µm, or no less than about 13.0 µm, or no less than about 13.5 µm. The calcium-containing material may have a d₂₀, by laser, no greater than about 20.0 µm, for example, no greater than about 18.0 µm, or no greater than about 17.0 µm, or no greater than about 16.0 µm, or no greater than about 15.0 µm, or no greater than about 14.5 µm, or no greater than about 14.0 µm, or no greater than about 13.7 µm. The calcium-containing material may have a d₂₀, by laser, from about 5.0 µm to about 20.0 µm, for example, from about 7.0 µm to about 18..0 µm, or from about 9.0 µm to about 17.0 µm, or from about 10.0 µm to about 16.0 µm, or from about 11.0 µm to about 15.0 µm, or from about 12.0 µm to about 15.0 µm, or from about 12.0 µm to about 14.0 µm, or from about 13.5 µm to about 13.7 µm.

The calcium-containing material may have a d₅₀, by laser, no less than about 80 µm, for example, no less than about 90 µm, or no less than about 100 µm, or no less than about 110 µm, or no less than about 120 µm, or no less than about 130 µm, or no less than about 140 µm, or no less than about 150 µm, or no less than about 160 µm. The calcium-containing material may have a d₅₀, by laser, no greater than about 300 µm, for example, no greater than about 250 µm, or no greater than about 200 µm, or no greater than about 190 µm, or no greater than about 180 µm, or no greater than about 170 µm, or no greater than about 165 µm. The calcium-containing material may have a d₅₀, by laser, from about 80 µm to about 300 µm, for example, from about 100 µm to about 250 µm, or from about 120 µm to about 200 µm, or from about 130 µm to about 190 µm, or from about 140 µm to about 180 µm, or from about 150 µm to about 170 µm, or from about 160 µm to about 170 µm, or from about 160 µm to about 165 µm.

The calcium-containing material may have a d₈₀, by laser, no less than about 300 µm, for example, no less than about 350 µm, or no less than about 400 µm, or no less than about 450 µm, or no less than about 500 µm, or no less than about 550 µm, or no less than about 600 µm, or no less than about 610 µm, or no less than about 615 µm. The calcium-containing material may have a d₈₀, by laser, no greater than about 900 µm, for example, no greater than about 800 µm, or no greater than about 750 µm, or no greater than about 700 µm, or no greater than about 650 µm, or no greater than about 630 µm, or no greater than about 620 µm. The calcium-containing material may have a d₈₀, by laser, from about 300 µm to about 900 µm, for example, from about 400 µm to about 800 µm, or from about 500 µm to about 700 µm, or from about 550 µm to about 750 µm, or from about 600 µm to about 700 µm, or from about 600 µm to about 650 µm, or from about 610 µm to about 630 µm, or from about 615 µm to about 620 µm.

The calcium-containing material may have a d₉₀, by laser, no less than about 600 µm, for example, no less than about 700 µm, or no less than about 800 µm, or no less than about 900 µm, or no less than about 950 µm, or no less than about 1000 µm, or no less than about 1020 µm, or no less than about 1030 µm. The calcium-containing material may have a d₉₀, by laser, no greater than about 1500 µm, for example, no greater than about 1400 µm, or no greater than about 1300 µm, or no greater than about 1200 µm, or no greater than about 1100 µm, or no greater than about 1050 µm. The calcium-containing material may have a d₉₀, by laser, from about 600 µm to about 1500 µm, for example, from about 700 µm to about 1400 µm, or from about 800 µm to about 1300 µm, or from about 800 µm to about 1200 µm, or from about 900 µm to about 1100 µm, or from about 950 µm to about 1100 µm, or from about 1000 µm to about 1100 µm, or from about 1000 µm to about 1050 µm, or from about 1030 µm to about 1050 µm.

The calcium-containing material may have a d₉₅, by laser, no less than about 1500 µm, for example, no less than about 1600 µm, or no less than about 1700 µm, or no less than about 1800 µm, or no less than about 1900 µm, or no less than about 2000 µm, or no less than about 2100 µm, or no less than about 2200 µm, or no less than about 2300 µm, or no less than about 2400 µm, or no less than about 2450 µm, or no less than about 2480 µm. The calcium-containing material may have a d₉₅, by laser, no greater than about 5000 µm, for example, no greater than about 4000 µm, or no greater than about 3500 µm, or no greater than about 3000 µm, or no greater than about 2900 µm, or no greater than about 2800 µm, or no greater than about 2700 µm, or no greater than about 2600 µm, or no greater than about 2500 µm. The calcium-containing material may have a d₉₅, by laser, from about 1500 µm to about 5000 µm, for example, from about 1600 µm to about 4000 µm, or from about 1700 µm to about 3000 µm, or from about 1800 µm to about 2900 µm, or from about 1900 µm to about 2800 µm, or from about 2000 µm to about 3000 µm, or from about 2200 µm to about 2700 µm, or from about 2300 µm to about 2600 µm, or from about 2400 µm to about 2600 µm, or from about 2450 µm to about 2500 µm, or from about 2480 µm to about 2500 µm.

### Mixture

The mixture comprises the silica-containing material and the calcium-containing material.

The mixture may comprise one single silica-containing material as described herein. Alternatively, the mixture may comprise more than one (i.e., different) silica-containing materials as described herein.

The mixture may comprise one single calcium-containing material as described herein. Alternatively, the mixture may comprise more than one (i.e., different) calcium-containing materials as described herein.

For example, the mixture may comprise one single silica-containing material and one single calcium-containing material. Alternatively, the mixture may comprise one single silica-containing material and more than one calcium-containing materials. Further alternatively, the mixture may comprise more than one silica-containing materials and one single calcium-containing material. Further alternatively, the mixture may comprise more than one silica-containing materials and more than one calcium-containing materials.

The mixture may comprise the silica-containing material(s) and the calcium-containing material(s) in appropriate amounts such that the ratio of calcium (Ca) atoms to silicon (Si) atoms in the mixture is no less than about 1:2, for example, no less than about 3:4, or no less than about 9:10, or no less than about 19:20. The mixture may comprise the silica-containing material(s) and the calcium-containing material(s) in appropriate amounts such that the ratio of calcium (Ca) atoms to silicon (Si) atoms in the mixture is no more than about 2:1, for example, no more than about 4:3, or no more than about 9:10, or no more than about 20:19. The mixture may comprise the silica-containing material(s) and the calcium-containing material(s) in appropriate amounts such that the ratio of calcium (Ca) atoms to silicon (Si) atoms in the mixture is from about 1:2 to about 2:1, for example, from about 3:4 to about 4:3, or from about 9:10 to about 10:9, or from about 19:20 to about 20:19. For example, the mixture may comprise the silica-containing material(s) and the calcium-containing material(s) in appropriate amounts such that the ratio of calcium (Ca) atoms to silicon (Si) atoms in the mixture is about 1:1. It will be understood that the relative amounts of the silica-containing material(s) and the calcium-containing material(s) in the mixture needed to achieve a given ratio of calcium (Ca) atoms to silicon (Si) atoms will depend on the composition of the particular silica-containing material(s) and calcium-containing material(s) used. The ratio of calcium (Ca) atoms to silicon (Si) atoms can be determined from the quantities of the calcium-containing material(s) and the silica-containing material(s) added to the mixture and the composition of the calcium-containing material(s) and the silica-containing material(s). The compositions of the calcium-containing material(s) and the silica-containing material(s) can be determined using X-ray based methods, for example, Energy Dispersive X-Ray Fluorescence (EDXRF) (for example using the Xepos instrument available from SPECTRO A. I. GmbH).

The mixture may comprise the silica-containing material(s) and the calcium-containing material(s) in appropriate amounts such that the weight ratio of the CaO equivalent of the calcium content (as determined by EDXRF) to the SiOz equivalent of the silicon content (as also determined by EDXRF) is no less than about 1:2, for example, no less than about 3:4, or no less than about 4:5, or no less than about 17:20, or no less than about 9:10, or no less than about 19:20. The mixture may comprise the silica-containing material(s) and the calcium-containing material(s) in appropriate amounts such that the weight ratio of the CaO equivalent of the calcium content (as determined by EDXRF) to the SiO₂ equivalent of the silicon content (as also determined by EDXRF) is no more than about 2:1, for example, no more than about 4:3, or no more than about 5:4, or no more than about 20:17, or no more than about 9:10, or no more than about 20:19, or no more than about 19:20, or no more than about 9:10, or no more than about 17:20. The mixture may comprise the silica-containing material(s) and the calcium-containing material(s) in appropriate amounts such that the weight ratio of the CaO equivalent of the calcium content (as determined by EDXRF) to the SiOz equivalent of the silicon content (as also determined by EDXRF) is from about 1:2 to about 2:1, for example, from about 3:4 to about 4:3, or from about 9:10 to about 10:9, or from about 19:20 to about 20:19, or from about 1:2 to about 4:3, or from about 1:2 to about 10:9, or from about 1:2 to about 20:19, or from about 1:2 to about 19:20, or from about 1:2 to about 9:10, or from about 1:2 to about 17:20, or from about 3:4 to about 19:20, or from about 3:4 to about 9:10, or from about 3:4 to about 17:20, or from about 4:5 to about 19:20, or from about 4:5 to about 9:10, or from about 4:5 to about 17:20, or from about 17:20 to about 9:10, or from about 17:20 to about 19:20. It will be understood that the relative amounts of the silica-containing material(s) and the calcium-containing material(s) in the mixture needed to achieve a given weight ratio of the CaO equivalent of the calcium content (as determined by EDXRF) to the SiO₂ equivalent of the silicon content (as also determined by EDXRF) will depend on the composition of the particular silica-containing material(s) and calcium-containing material(s) used.

The mixture may comprise the silica-containing material(s) and the calcium-containing material(s) in appropriate amounts such that the weight ratio of the CaO equivalent of the calcium content (as determined by EDXRF) to the SiO₂ equivalent of the silicon content (as also determined by EDXRF) is no less than about 0.50, for example, no less than about 0.60, or no less than about 0.70, or no less than about 0.80, or no less than about 0.85, or no less than about 0.90, or no less than about 0.95. The mixture may comprise the silica-containing material(s) and the calcium-containing material(s) in appropriate amounts such that the weight ratio of the CaO equivalent of the calcium content (as determined by EDXRF) to the SiO₂ equivalent of the silicon content (as also determined by EDXRF) is no more than about 1.50, for example, no more than about 1.40, or no more than about 1.30, or no more than about 1.25, or no more than about 1.20, or no more than about 1.15, or no more than about 1.10, or no more than about 1.05, or no more than about 1.00, or no more than about 0.95. The mixture may comprise the silica-containing material(s) and the calcium-containing material(s) in appropriate amounts such that the weight ratio of the CaO equivalent of the calcium content (as determined by EDXRF) to the SiO₂ equivalent of the silicon content (as also determined by EDXRF) is from about 0.50 to about 1.50, for example, from about 0.60 to about 1.40, or from about 0.70 to about 1.30, or from about 0.80 to about 1.20, or from about 0.90 to about 1.10, or from about 0.95 to about 1.05, or from about 0.80 to about 1.00, or from about 0.80 to about 0.95, or from about 0.85 to about 1.00, or from about 0.85 to about 0.95.

In addition to the silica-containing material(s) and the calcium-containing material(s), the mixture may contain one or more other materials (e.g., one or more materials which do not contain silica or calcium in significant amounts, e.g., one or more materials which are substantially silica- and/or calcium-free) such as magnesia (i.e., MgO) and/or soda ash (i.e., Na₂CO₃).

The mixture may have a d₈₀, by laser, no less than about 10 µm, for example, no less than about 20 µm, or no less than about 25 µm, or no less than about 30 µm, or no less than about 33 µm, or no less than about 35 µm, or no less than about 40 µm, or no less than about 50 µm, or no less than about 100 µm, or no less than about 200 µm. The mixture may have a d₈₀, by laser, no greater than about 400 µm, for example, no greater than about 300 µm, or no greater than about 200 µm, or no greater than about 150 µm, or no greater than about 100 µm, or no greater than about 75 µm, or no greater than about 50 µm, or no greater than about 45 µm, or no greater than about 40 µm, or no greater than about 37 µm, or no greater than about 35 µm. The mixture may have a d₈₀, by laser, from about 10 µm to about 400 µm, for example, from about 10 µm to about 300 µm, or from about 10 µm to about 200 µm, or from about 10 µm to about 100 µm, or from about 50 µm to about 400 µm, or from about 50 µm to about 300 µm, or from about 50 µm to about 200 µm, or from about 50 µm to about 100 µm, or from about 100 µm to about 400 µm, or from about 100 µm to about 300 µm to about 100 µm to about 200 µm, or from about 200 µm to about 400 µm, or from about 200 µm to about 300 µm, or from about 20 µm to about 50 µm, for example, from about 25 µm to about 45 µm, or from about 30 µm to about 40 µm, or from about 33 µm to about 37 µm, for example, about 35 µm.

### Method

The method may comprise mixing the silica-containing material(s) and the calcium-containing material(s) together.

The method may comprise mixing the silica-containing material(s) and the calcium-containing material(s) together with the one or more other materials (e.g., one or more materials which do not contain silica or calcium in significant amounts, e.g., one or more materials which are substantially silica- and/or calcium-free) such as magnesia (i.e., MgO) and/or soda ash (i.e., Na₂CO₃), if present in the mixture.

The method may comprise milling the silica-containing material(s) and the calcium-containing material(s) together.

The method may comprise milling the silica-containing material(s) and the calcium-containing material(s) together with the one or more other materials (e.g., one or more materials which do not contain silica or calcium in significant amounts, e.g., one or more materials which are substantially silica- and/or calcium-free) such as magnesia (i.e., MgO) and/or soda ash (i.e., Na₂CO₃), if present in the mixture.

The method may comprise milling the silica-containing material(s) and the calcium-containing material(s) together to achieve a target particle size, for example, a target d₈₀ (e.g., measured by laser).

The method may comprise milling the silica-containing material(s) and the calcium-containing material(s) together to achieve a d₈₀, by laser, no less than about 20 µm, for example, no less than about 25 µm, or no less than about 30 µm, or no less than about 33 µm, or no less than about 35 µm. The method may comprise milling the silica-containing material(s) and the calcium-containing material(s) together to achieve a d₈₀, by laser, no greater than about 50 µm, for example, no greater than about 45 µm, or no greater than about 40 µm, or no greater than about 37 µm, or no greater than about 35 µm. The method may comprise milling the silica-containing material(s) and the calcium-containing material(s) together to achieve a d₈₀, by laser, from about 20 µm to about 50 µm, for example, from about 25 µm to about 45 µm, or from about 30 µm to about 40 µm, or from about 33 µm to about 37 µm, for example, about 35 µm.

The method may comprise milling the silica-containing material(s) and the calcium-containing material(s) together in any suitable type of mill, such as a ball mill, a roller mill or a jet mill.

The method comprises heating the mixture at no less than about 1200°C to form the synthetic mineral product. The method may comprise heating the mixture at no less than about 1250°C, for example, at no less than about 1300°C, or at no less than about 1350°C, or at no less than about 1400°C, or at no less than about 1450°C, or at no less than about 1500°C, to form the synthetic mineral product. The method may comprise heating the mixture at no more than about 1550°C to form the synthetic mineral product. Beyond 1550°C, fusion of the synthetic mineral product may take place. The method may comprise heating the mixture at no more than about 1500°C, for example, at no more than about 1450°C, to form the synthetic mineral product. The method may comprise heating the mixture at from about 1200°C to about 1550°C, for example, at from about 1250°C to about 1550°C, or at from about 1300°C to about 1550°C, or at from about 1350°C to about 1550°C, or at from about 1400°C to about 1550°C, or at from about 1450°C to about 1550°C, or at from about 1500°C to about 1550°C, or at from about 1200°C to about 1500°C, or at from about 1250°C to about 1500°C, or at from about 1300°C to about 1500°C, or at from about 1350°C to about 1500°C, or at from about 1400°C to about 1500°C, or at from about 1450°C to about 1500°C, or at from about 1200°C to about 1450°C, or at from about 1250°C to about 1450°C, or at from about 1300°C to about 1450°C, or at from about 1350°C to about 1450°C, or at from about 1400°C to about 1450°C, for example, at about 1450°C, to form the synthetic mineral product.

The method may comprise heating the mixture in a kiln, for example, a rotary kiln. The temperature at which the mixture is heated may be the temperature as measured at the hot spot of the kiln.

The method may comprise milling the synthetic mineral product produced on heating the mixture. For example, the method may comprise milling the synthetic mineral product to achieve a target particle size, for example, a target d₉₅ (e.g., by laser).

The method may comprise milling the synthetic mineral product to achieve a d₉₅, by laser, no greater than about 25 µm, for example, no greater than about 15 µm, or no greater than about 14 µm, or no greater than about 13 µm, or no greater than about 12 µm, or no greater than about 11 µm, or no greater than about 10 µm, or no greater than about 9 µm, or no greater than about 8 µm. The method may comprise milling the synthetic mineral product to achieve a d₉₅, by laser, no less than about 5 µm, for example, no less than about 6 µm, or no less than about 7 µm, or no less than about 8 µm, or no less than about 9 µm, or no less than about 10 µm. The method may comprise milling the synthetic mineral product to achieve a d₉₅, by laser, from about 5 µm to about 15 µm, for example, from about 6 µm to about 15 µm, or from about 7 µm to about 15 µm, or from about 8 µm to about 15 µm, or from about 9 µm to about 15 µm, or from about 10 µm to about 15 µm, or from about 5 µm to about 14 µm, or from about 6 µm to about 14 µm, or from about 7 µm to about 14 µm, or from about 8 µm to about 14 µm, or from about 9 µm to about 14 µm, or from about 10 µm to about 14 µm, or from about 5 µm to about 13 µm, or from about 6 µm to about 13 µm, or from about 7 µm to about 13 µm, or from about 8 µm to about 13 µm, or from about 9 µm to about 13 µm, or from about 10 µm to about 13 µm, or from about 5 µm to about 12 µm, or from about 6 µm to about 12 µm, or from about 7 µm to about 12 µm, or from about 8 µm to about 12 µm, or from about 9 µm to about 12 µm, or from about 10 µm to about 12 µm, or from about 5 µm to about 11 µm, or from about 6 µm to about 11 µm, or from about 7 µm to about 11 µm, or from about 8 µm to about 11 µm, or from about 9 µm to about 11 µm, or from about 10 µm to about 11 µm, or from about 5 µm to about 10 µm, or from about 6 µm to about 10 µm, or from about 7 µm to about 10 µm, or from about 8 µm to about 10 µm, or from about 9 µm to about 10 µm, or from about 5 µm to about 9 µm, or from about 6 µm to about 9 µm, or from about 7 µm to about 9 µm, or from about 8 µm to about 9 µm, or from about 5 µm to about 8 µm, or from about 6 µm to about 8 µm, or from about 7 µm to about 8 µm. The method may comprise milling the synthetic mineral product to achieve a d₉₅, by laser, from about 15 µm to about 75 µm, for example, from about 25 µm to about 75 µm, or from about 50 µm to about 75 µm, or from about 15 µm to about 25 µm, or from about 15 µm to about 50 µm, or from about 25 µm to about 50 µm. The method may comprise milling the synthetic mineral product to achieve a d₉₅, by laser, from about 5 µm to about 75 µm.

The method may comprise milling the synthetic mineral product in any suitable type of mill, such as a ball mill, a roller mill or a jet mill. Lower particle sizes may require use of a jet mill. For example, it may be possible to achieve values of d₉₅, by laser, below about 75 µm by milling in a ball mill, but use of a jet mill may be necessary to achieve values of d₉₅, by laser, below about 15 µm.

### Synthetic mineral product

The synthetic mineral product may comprise (e.g., consist of, or consist essentially of) calcium silicate (i.e., CaSiO₃).

The elemental composition of the synthetic mineral product may be determined using X-ray based methods, for example, Energy Dispersive X-Ray Fluorescence (EDXRF) as set out in the Examples (for example using the Bruker S4 Pioneer X-ray spectrometer available from Bruker Corporation, USA). The elemental composition of the synthetic mineral product determined using EDXRF may be expressed in terms of the oxide equivalents of the elements present, as is standard in the field.

Expressed in terms of the oxide equivalents of the elements present, the synthetic mineral product may comprise no less than about 35 wt. %, for example, no less than about 40 wt. %, or no less than about 45 wt. %, or no less than about 46 wt. %, or no less than about 47 wt. %, or no less than about 48 wt. %, or no less than about 49 wt. %, SiOz. Expressed in terms of the oxide equivalents of the elements present, the synthetic mineral product may comprise no more than about 65 wt. %, for example, no more than about 60 wt. %, or no more than about 55 wt. %, or no more than about 54 wt. %, or no more than about 53 wt. %, or no more than about 52 wt. %, or no more than about 51 wt. %, SiOz. Expressed in terms of the oxide equivalents of the elements present, the synthetic mineral product may comprise from about 35 wt. % to about 65 wt. %, for example, from about 40 wt. % to about 60 wt. %, or from about 45 wt. % to about 55 wt. %, or from about 48 wt. % to about 53 wt. %, or from about 49 wt. % to about 51 wt. %, for example, about 50 wt. %, SiOz.

Expressed in terms of the oxide equivalents of the elements present, the synthetic mineral product may comprise no less than about 35 wt. %, for example, no less than about 40 wt. %, or no less than about 41 wt. %, or no less than about 42 wt. %, or no less than about 43 wt. %, or no less than about 44 wt. %, or no less than about 45 wt. %, or no less than about 46 wt. %, CaO. Expressed in terms of the oxide equivalents of the elements present, the synthetic mineral product may comprise no more than about 65 wt. %, for example, no more than about 60 wt. %, or no more than about 55 wt. %, or no more than about 54 wt. %, or no more than about 53 wt. %, or no more than about 52 wt. %, or no more than about 51 wt. %, or no more than about 50 wt. %, or no more than about 49 wt. %, or no more than about 48 wt. %, CaO. Expressed in terms of the oxide equivalents of the elements present, the synthetic mineral product may comprise from about 35 wt. % to about 65 wt. %, for example, from about 40 wt. % to about 60 wt. %, or from about 44 wt. % to about 55 wt. %, or from about 44 wt. % to about 50 wt. %, or from about 45 wt. % to about 55 wt. %, or from about 45 wt. % to about 50 wt. %, or from about 46 wt. % to about 48 wt. %, for example, about 47 wt. %, CaO.

Expressed in terms of the oxide equivalents of the elements present, the synthetic mineral product may comprise no more than about 5 wt. %, for example, no more than about 3 wt. %, or no more than about 2 wt. %, or no more than about 1.5 wt. %, or no more than about 1.0 wt. %, or no more than about 0.5 wt. %, Al₂O₃.

Expressed in terms of the oxide equivalents of the elements present, the synthetic mineral product may comprise no more than about 2 wt. %, for example, no more than about 1 wt. %, or no more than about 0.5 wt. %, or no more than about 0.1 wt. %, or no more than about 0.05 wt. %, K₂O.

Expressed in terms of the oxide equivalents of the elements present, the synthetic mineral product may comprise no more than about 2 wt. %, for example, no more than about 1 wt. %, or no more than about 0.5 wt. %, or no more than about 0.4 wt. %, or no more than about 0.25 wt. %, Fe₂O₃.

Expressed in terms of the oxide equivalents of the elements present, the synthetic mineral product may comprise no more than about 2 wt. %, for example, no more than about 1 wt. %, or no more than about 0.5 wt. %, or no more than about 0.2 wt. %, or no more than about 0.1 wt. %, or no more than about 0.05 wt. %, TiOz.

Expressed in terms of the oxide equivalents of the elements present, the synthetic mineral product may comprise no more than about 5 wt. %, for example, no more than about 3 wt. %, or no more than about 2 wt. %, or no more than about 1 wt. %, MgO.

Expressed in terms of the oxide equivalents of the elements present, the synthetic mineral product may comprise no more than about 2 wt. %, for example, no more than about 1 wt. %, or no more than about 0.5 wt. %, or no more than about 0.1 wt. %, or no more than about 0.05 wt. % Na₂O.

Expressed in terms of the oxide equivalents of the elements present, the synthetic mineral product may comprise no more than about 2 wt. %, for example, no more than about 1 wt. %, or no more than about 0.5 wt. %, or no more than about 0.1 wt. %, or no more than about 0.01 wt. %, P₂O₅.

Expressed in terms of the oxide equivalents of the elements present, the synthetic mineral product may comprise: from about 35 wt. % to about 65 wt. %, for example, from about 40 wt. % to about 60 wt. %, or from about 45 wt. % to about 55 wt. %, or from about 49 wt. % to about 51 wt. %, for example, about 50 wt. %, SiO₂; from about 35 wt. % to about 65 wt. %, for example, from about 40 wt. % to about 60 wt. %, or from about 45 wt. % to about 55 wt. %, or from about 45 wt. % to about 50 wt. %, or from about 46 wt. % to about 48 wt. %, for example, about 47 wt. %, CaO; no more than about 5 wt. %, for example, no more than about 3 wt. %, or no more than about 2 wt. %, or no more than about 1.5 wt. %, Al₂O₃; no more than about 2 wt. %, for example, no more than about 1 wt. %, or no more than about 0.5 wt. %, or no more than about 0.1 wt. %, K₂O; no more than about 2 wt. %, for example, no more than about 1 wt. %, or no more than about 0.5 wt. %, or no more than about 0.25 wt. %, Fe₂O₃; no more than about 2 wt. %, for example, no more than about 1 wt. %, or no more than about 0.5 wt. %, or no more than about 0.1 wt. %, or no more than about 0.05 wt. %, TiO₂; no more than about 5 wt. %, for example, no more than about 3 wt. %, or no more than about 2 wt. %, or no more than about 1 wt. %, MgO; no more than about 2 wt. %, for example, no more than about 1 wt. %, or no more than about 0.5 wt. %, or no more than about 0.1 wt. %, or no more than about 0.05 wt. % Na₂O; and no more than about 2 wt. %, for example, no more than about 1 wt. %, or no more than about 0.5 wt. %, or no more than about 0.1 wt. %, or no more than about 0.01 wt. %, P₂O₅.

Expressed in terms of the oxide equivalents of the elements present, the synthetic mineral product may comprise: from about 49 wt. % to about 51 wt. %, for example, about 50 wt. %, SiOz; from about 46 wt. % to about 48 wt. %, for example, about 47 wt. %, CaO; no more than about 1.5 wt. %, Al₂O₃; no more than about 0.1 wt. %, K₂O; no more than about 0.25 wt. %, Fe₂O₃; no more than about 0.05 wt. %, TiO₂; no more than about 1 wt. %, MgO; no more than about 0.05 wt. % Na₂O; and no more than about 0.01 wt. %, P₂O₅.

Expressed in terms of the oxide equivalents of the elements present, the synthetic mineral product may comprise no more than about 5 wt. %, for example, no more than about 4 wt. %, or no more than about 3 wt. %, of constituents other than SiOz and CaO.

The synthetic mineral product may have a loss on ignition of no greater than about 2 wt. %, for example, no greater than about 1 wt. %, or no greater than about 0.5 wt. %. The loss on ignition may be determined by thermogravimetric analysis or differential scanning calorimetry carried out before and after heat treatment at 950°C.

The synthetic mineral product may have an (i.e., powder) X-ray diffraction pattern substantially as shown in the Table below:

| 2-Theta | d-spacing (nm) | Relative Intensity^{(a)} |
|---|---|---|
| 26 ± 0.10 | 3.42 | M |
| 27.56 ± 0.10 | 3.23 | VS |
| 31.84 ± 0.10 | 2.8 | VS |
| 45.46 ± 0.10 | 1.99 | M |
| 45.86 ± 0.10 | 1.98 | VS |

| | | |
|---|---|---|
| ^{(a)} W = weak (> 0 to ≤ 20); M = medium (> 20 to ≤ 40); S = strong (> 40 to ≤ 60); VS = very strong (> 60 to ≤ 100). | | |

For example, the synthetic mineral product may have an (i.e., powder) X-ray diffraction pattern substantially as shown in the Table below:

| 2-Theta | d-spacing (nm) | Relative Intensity^{(a)} |
|---|---|---|
| 14.92 ± 0.10 | 5.93 | W |
| 15.57 ± 0.10 | 5.69 | W |
| 17.4 ± 0.10 | 5.09 | W |
| 20.27 ± 0.10 | 4.38 | W |
| 23.48 ± 0.10 | 3.79 | W |
| 26 ± 0.10 | 3.42 | M |
| 27.56 ± 0.10 | 3.23 | VS |
| 31.84 ± 0.10 | 2.8 | VS |
| 33.07 ± 0.10 | 2.7 | W |
| 36.58 ± 0.10 | 2.45 | M |
| 38.06 ± 0.10 | 2.36 | W |
| 40.48 ± 0.10 | 2.22 | W |
| 41.23 ± 0.10 | 2.18 | W |
| 42.57 ± 0.10 | 2.12 | W |
| 44.21 ± 0.10 | 2.05 | W |
| 45.46 ± 0.10 | 1.99 | M |
| 45.86 ± 0.10 | 1.98 | VS |
| 49.62 ± 0.10 | 1.84 | W |
| 52.01 ± 0.10 | 1.76 | W |
| 53.5 ± 0.10 | 1.71 | W |
| 54.36 ± 0.10 | 1.68 | W |
| 56.95 ± 0.10 | 1.62 | W |
| 60.02 ± 0.10 | 1.54 | W |
| 62.94 ± 0.10 | 1.48 | W |
| 64.52 ± 0.10 | 1.44 | W |
| 65.69 ± 0.10 | 1.42 | W |
| 66.33 ± 0.10 | 1.4 | W |
| 66.7 ± 0.10 | 1.4 | W |
| 66.9 ± 0.10 | 1.39 | W |
| 67.25 ± 0.10 | 1.39 | W |
| 67.43 ± 0.10 | 1.38 | W |
| 73.04 ± 0.10 | 1.29 | W |
| 75.91 ± 0.10 | 1.25 | W |
| 77.77 ± 0.10 | 1.22 | W |

| | | |
|---|---|---|
| ^{(a)} W = weak (> 0 to ≤ 20); M = medium (> 20 to ≤ 40); S = strong (> 40 to ≤ 60); VS = very strong (> 60 to ≤ 100). | | |

The powder X-ray diffraction patterns presented herein were obtained by the method set out in Examples using CuKα radiation. The peak heights and the positions, as a function of 2θ where θ is the Bragg angle, can be read from the relative intensities of the peaks (adjusting for background), and d, the interplanar spacing corresponding to the recorded lines, can be calculated.

The synthetic mineral product may comprise (i.e., synthetic) pseudowollastonite.

Pseudowollastonite is a form of CaSiOs crystallised in the monoclinic crystal system, prismatic class, with space group C2/c. Pseudowollastonite is a cyclosilicate mineral and is also known as wollastonite 7T, β-wollastonite or cyclowollastonite.

The synthetic mineral product may comprise no less than about 70 wt. %, for example, no less than about 75 wt. %, or no less than about 80 wt. %, or no less than about 85 wt. %, or no less than about 90 wt. %, or no less than about 95 wt. %, or no less than about 99 wt. %, or no less than about 99.9 wt. %, (i.e., synthetic) pseudowollastonite.

The synthetic mineral product may consist, or consist essentially, of (i.e., synthetic) pseudowollastonite. That is to say, the synthetic mineral product may be (i.e., synthetic) pseudowollastonite.

The synthetic mineral product (e.g., prior to grinding) may be a powder. The synthetic mineral product (e.g., prior to grinding) may have a d₈₀, by laser, no less than about 20 µm, for example, no less than about 30 µm, or no less than about 40 µm, or no less than about 50 µm, or no less than about 100 µm, or no less than about 250 µm, or no less than about 500 µm, or no less than about 750 µm, or no less than about 1000 µm. The synthetic mineral product (e.g., prior to grinding) may have a d₈₀, by laser, no greater than about 5000 µm, for example, no greater than about 2000 µm, or no greater than about 1000 µm, or no greater than about 750 µm, or no greater than about 500 µm, or no greater than about 250 µm, or no greater than about 100 µm, or no greater than about 50 µm. The synthetic mineral product (e.g., prior to grinding) may have a d₈₀, by laser, from about 20 µm to about 5000 µm, for example, from about 20 µm to about 100 µm, or from about 30 µm to about 50 µm, or from about 50 µm to about 250 µm, or from about 100 µm to about 500 µm, or from about 500 µm to about 1000 µm, or from about 1000 µm to about 5000 µm.

The synthetic mineral product (e.g., prior to grinding) may form macroscopic balls. The synthetic mineral product (e.g., prior to grinding) may form macroscopic balls having a mean diameter of no less than about 0.1 cm, for example, no less than about 0.5 cm, or no less than about 1.0 cm, or no less than about 1.5 cm. The synthetic mineral product (e.g., prior to grinding) may form macroscopic balls having a mean diameter of no greater than about 3.0 cm, for example, no greater than about 2.5 cm, or no greater than about 2.0 cm, or no greater than about 1.5 cm, or no greater than about 1.0 cm. The synthetic mineral product (e.g., prior to grinding) may form macroscopic balls having a mean diameter from about 0.1 cm, to about 3.0 cm, for example, from about 1.0 cm to about 3.0 cm, or from about 1.5 cm to about 2.5 cm.

The synthetic mineral product (e.g., following grinding) may have a d₉₅, by laser, less than about 75 µm, for example, less than about 50 µm, or less than about 25 µm, or less than about 15 µm, or less than about 10 µm. The synthetic mineral product (e.g., following grinding) may have a d₉₅, by laser, no less than about 5 µm, for example, no less than about 10 µm, or no less than about 15 µm, or no less than about 25 µm, or no less than about 50 µm. The synthetic mineral product (e.g., following grinding) may have a d₉₅, by laser, from about 5 µm to about 15 µm, for example, from about 10 µm to about 15 µm, or from about 5 µm to about 10 µm. The synthetic mineral product (e.g., following grinding) may have a d₉₅, by laser, from about 15 µm to about 75 µm, for example, from about 25 µm to about 75 µm, or from about 50 µm to about 75 µm, or from about 15 µm to about 25 µm, or from about 15 µm to about 50 µm, or from about 25 µm to about 50 µm. The synthetic mineral product (e.g., following grinding) may have a d₉₅, by laser, from about 5 µm to about 75 µm.

The synthetic mineral product (e.g., following grinding) may have a d₉₅, by laser, no less than about 5 µm, for example, no less than about 6 µm, or no less than about 7 µm, or no less than about 8 µm, or no less than about 9 µm. The synthetic mineral product (e.g., following grinding) may have a d₉₅, by laser, no greater than about 15 µm, for example, or no greater than about 14 µm, or no greater than about 13 µm, no greater than about 12 µm, or no greater than about 11 µm, or no greater than about 10 µm. The synthetic mineral product (e.g., following grinding) may have a d₉₅, by laser, from about 5 µm to about 15 µm, for example, from about 6 µm to about 13 µm, or from about 7 µm to about 11 µm, or from about 8 µm to about 10 µm.

The synthetic mineral product (e.g., following grinding) may have a d₇₅, by laser, no less than about 3 µm, for example, no less than about 4 µm, or no less than about 5 µm. The synthetic mineral product (e.g., following grinding) may have a d₇₅, by laser, no greater than about 10 µm, for example, no greater than about 9 µm, or no greater than about 8 µm, or no greater than about 7 µm, or no greater than about 6 µm. The synthetic mineral product (e.g., following grinding) may have a d₇₅, by laser, from about 3 µm to about 10 µm, for example, from about 4 µm to about 9 µm, or from about 4 µm to about 8 µm, or from about 4 µm to about 7 µm, or from about 5 µm to about 6 µm.

The synthetic mineral product (e.g., following grinding) may have a d₅₀, by laser, no less than about 1 µm, for example, no less than about 2 µm, or no less than about 3 µm. The synthetic mineral product (e.g., following grinding) may have a d₅₀, by laser, no greater than about 8 µm, for example, no greater than about 7 µm, or no greater than about 6 µm, or no greater than about 5 µm, or no greater than about 4 µm. The synthetic mineral product (e.g., following grinding) may have a d₅₀, by laser, from about 1 µm to about 8 µm, for example, from about 1 µm to about 7 µm, or from about 1 µm to about 6 µm, or from about 2 µm to about 5 µm, or from about 3 µm to about 5 µm, or from about 3 µm to about 4 µm.

The synthetic mineral product (e.g., following grinding) may have a d₂₅, by laser, no less than about 0.5 µm, for example, no less than about 1 µm (e.g., 1.0 µm), or no less than about 1.5 µm. The synthetic mineral product (e.g., following grinding) may have a d₂₅, by laser, no greater than about 5 µm, for example, no greater than about 4 µm, or no greater than about 3 µm, or no greater than about 2.5 µm. The synthetic mineral product (e.g., following grinding) may have a d₂₅, by laser, from about 0.5 µm to about 5 µm, for example, from about 1 µm to about 4 µm, or from about 1 µm to about 3 µm, or from about 1.5 µm to about 2.5 µm.

The synthetic mineral product may have (e.g., following grinding): a d₉₅, by laser, from about 5 µm to about 15 µm, for example, from about 8 µm to about 10 µm; a d₇₅, by laser, from about 3 µm to about 10 µm, for example, from about 4 µm to about 7 µm; a d₅₀, by laser, from about 1 µm to about 8 µm, for example, from about 2 µm to about 5 µm; and a d₂₅, by laser, from about 0.5 µm to about 5 µm, for example, from about 1 µm to about 3 µm.

The synthetic mineral product (e.g., following grinding) may have a d₉₅, by sedigraph, no less than about 5 µm, for example, no less than about 6 µm, or no less than about 7 µm, or no less than about 8 µm, or no less than about 9 µm. The synthetic mineral product (e.g., following grinding) may have a d₉₅, by sedigraph, no greater than about 20 µm, for example, or no greater than about 18 µm, or no greater than about 15 µm, or no greater than about 13 µm, no greater than about 12 µm, or no greater than about 11 µm, or no greater than about 10 µm. The synthetic mineral product (e.g., following grinding) may have a d₉₅, by sedigraph, from about 5 µm to about 20 µm, for example, from about 6 µm to about 18 µm, or from about 7 µm to about 15 µm, or from about 6 µm to about 13 µm, or from about 7 µm to about 11 µm, or from about 8 µm to about 10 µm.

The synthetic mineral product (e.g., following grinding) may have a d₇₅, by sedigraph, no less than about 3 µm, for example, no less than about 4 µm, or no less than about 5 µm. The synthetic mineral product (e.g., following grinding) may have a d₇₅, by sedigraph, no greater than about 10 µm, for example, no greater than about 9 µm, or no greater than about 8 µm, or no greater than about 7 µm, or no greater than about 6 µm. The synthetic mineral product (e.g., following grinding) may have a d₇₅, by sedigraph, from about 3 µm to about 10 µm, for example, from about 4 µm to about 9 µm, or from about 4 µm to about 8 µm, or from about 4 µm to about 7 µm, or from about 5 µm to about 6 µm, or from about 5 µm to about 6 µm.

The synthetic mineral product (e.g., following grinding) may have a d₅₀, by sedigraph, no less than about 1 µm, for example, no less than about 2 µm, or no less than about 3 µm, or no less than about 4 µm. The synthetic mineral product (e.g., following grinding) may have a d₅₀, by sedigraph, no greater than about 8 µm, for example, no greater than about 7 µm, or no greater than about 6 µm, or no greater than about 5 µm. The synthetic mineral product (e.g., following grinding) may have a d₅₀, by sedigraph, from about 1 µm to about 8 µm, for example, from about 1 µm to about 7 µm, or from about 1 µm to about 6 µm, or from about 2 µm to about 5 µm, or from about 2 µm to about 6 µm, or from about 3 µm to about 5 µm, or from about 3 µm to about 6 µm, or from about 4 µm to about 5 µm.

The synthetic mineral product (e.g., following grinding) may have a d₂₅, by sedigraph, no less than about 1 µm, for example, no less than about 2 µm, or no less than about 3 µm. The synthetic mineral product (e.g., following grinding) may have a d₂₅, by sedigraph, no greater than about 5 µm, for example, no greater than about 4 µm. The synthetic mineral product (e.g., following grinding) may have a d₂₅, by sedigraph, from about 1 µm to about 5 µm, for example, from about 1 µm to about 4 µm, or from about 2 µm to about 4 µm, or from about 3 µm to about 4 µm.

The synthetic mineral product (e.g., following grinding) may have: a d₉₅, by sedigraph, from about 5 µm to about 20 µm, for example, from about 7 µm to about 15 µm; a d₇₅, by sedigraph, from about 3 µm to about 10 µm, for example, from about 4 µm to about 7 µm; a d₅₀, by sedigraph, from about 1 µm to about 8 µm, for example, from about 3 µm to about 6 µm; and a d₂₅, by sedigraph, from about 1 µm to about 5 µm, for example, from about 2 µm to about 4 µm.

The synthetic mineral product may have a non-acicular particle shape. For example, the synthetic mineral product may have a blocky particle shape. For example, the particles of the synthetic mineral product may have a three-dimensional shape which is substantially parallelepipedal. The particles of the synthetic mineral product may have an aspect ratio (i.e., the ratio of the smallest diameter of the particle to the largest diameter of the particle orthogonal to said smallest diameter) no less than about 0.8, for example, no less than about 0.9, or no less than about 1.0, or no less than about 1.2, or no less than about 1.4, or no less than about 1.6, or no less than about 1.8, or no less than about 2.0. The particles of the synthetic mineral product may have an aspect ratio no greater than about 2.2, for example, no greater than about 2.1, or no greater than about 2.0, or no greater than about 1.8, or no greater than about 1.6, or no greater than about 1.4, or no greater than about 1.2, or no greater than about 1.0. The particles of the synthetic mineral product may have an aspect ratio from about 0.8 to about 2.2, for example, from about 1.0 to about 2.0, or from about 0.8 to about 1.2, or from about 1.8 to about 2.2. The particle shape of the synthetic mineral product may be observed by imaging in a scanning electron microscope (SEM). The aspect ratio of the synthetic mineral product may be measured using a morphogranulometer such as the Raman Morphologi G3-ID available from Malvern Panalytical, United Kingdom.

BET surface area of a particulate material refers to the area of the surface of the particles with respect to unit mass, determined according to the BET method by the quantity of nitrogen adsorbed on the surface of said particles so as to form a monomolecular layer completely covering said surface (measurement according to the BET method, AFNOR standard X11-621 and 622 or ISO 9277). Details of the BET specific surface area measurement method used in the preparation of the present application are set out in the Examples.

The synthetic mineral product (e.g., following grinding) may have a BET specific surface of no greater than about 10 m²/g, for example, no greater than about 5 m²/g, or no greater than about 3 m²/g (e.g., no greater than about 3.0 m²/g). The synthetic mineral product (e.g., following grinding) may have a BET specific surface no less than about 0.1 m²/g, for example, no less than about 1 m²/g (e.g., no less than about 1.0 m²/g), or no less than about 2 m²/g (e.g., no less than about 2.0 m²/g). The synthetic mineral product (e.g., following grinding) may have a BET specific surface from about 0.1 m²/g to about 10 m²/g, for example, from about 0.1 m²/g to about 5 m²/g, or from about 0.1 m²/g to about 3 m²/g, or from about 1 m²/g to about 3 m²/g, or from about 2 m²/g to about 3 m²/g, or from about 1.0 m²/g to about 3.0 m²/g, or from about 2.0 m²/g to about 3.0 m²/g.

Brightness values for a particulate material can be determined using a spectrophotometer fulfilling the requirements of ISO 7724, for example, a Konica Minolta CM-3700d spectrophotometer with D65 illuminant and color space CIE LAB (1976), with a standard 10° observer.

The synthetic mineral product may have a D65-10° brightness characterised by tristimulus values: X no less than about 80, for example, no less than about 85, or no less than about 87; Y no less than about 85, for example, no less than about 90, or no less than about 91; and Z no less than about 85, for example, no less than about 90, or no less than about 93.

The synthetic mineral product (e.g., following grinding) may have a loose density no less than about 0.4 g/cm³, for example, no less than about 0.5 g/cm³, or no less than about 0.6 g/cm³. The synthetic mineral product (e.g., following grinding) may have a loose density no greater than about 0.8 g/cm³, for example, no greater than about 0.7 g/cm³, or no greater than about 0.6 g/cm³. The synthetic mineral product (e.g., following grinding) may have a loose density from about 0.4 g/cm³ to about 0.8 g/cm³, for example, from about 0.5 g/cm³ to about 0.7 g/cm³. The loose density of the synthetic mineral product may be measured by filling a container of known mass and internal volume with the synthetic mineral product without tapping, and then measuring the mass of the filled container. The synthetic mineral product is poured into the container from a vibrating feed hopper, spreading the product throughout the container so as to avoid sample segregation. The flow of sample into the container is stopped when the powder overflows and the surface is levelled using a spatula, avoiding any settling on the surface. The loose density is calculated as the difference between the mass of the filled container and the mass of the unfilled container divided by the internal volume of the container.

The synthetic mineral product (e.g., following grinding) may have a tapped density no less than about 0.8 g/cm³, for example, no less than about 0.9 g/cm³, or no less than about 1.0 g/cm³. The synthetic mineral product (e.g., following grinding) may have a tapped density no greater than about 0.2 g/cm³, for example, no greater than about 1.1 g/cm³. The synthetic mineral product (e.g., following grinding) may have a tapped density from about 0.8 g/cm³ to about 1.2 g/cm³, for example, from about 0.9 g/cm³ to about 1.1 g/cm³. The tapped density of the synthetic mineral product may be measured by subjecting a known mass of the synthetic mineral product to defined settling conditions (tapping) and then measuring the volume of the tapped synthetic mineral product. The mass of the product may be measured by measuring the weight of a test tube to the nearest 0.01 g, then introducing 200 ml ± 10 ml of product into the test tube using a spatula (and avoiding any settling and air pockets) and weighing the test tube again to the nearest 0.01 g, the mass of the product being the difference between the two masses measured. The test tube is then placed in a STAMPFVOLUMETER STAV 2003 volume meter available from Engelsmann, Germany and sealed and the sample is subjected to a series of 1250 jolts. The volume occupied by the product powder is recorded after each series of 1250 jolts. When the difference between volumes measured after two successive series of jolts is less than 2 % of the largest measured volume, the series of jolts is stopped and the last measured volume is taken to be the volume of the tapped product. The tapped density is then calculated as the mass of the product divided by the volume of the tapped product.

The crystalline silica content of a particulate material may be determined using the XRD-SWeRF method as described in, for example, SWeRF - A Method for Estimating the Relevant Fine Particle Fraction in Bulk Materials for Classification and Labelling Purposes, Pensis et al., Annals of Occupational Hygiene, 2014 May, 58(4): 501-511, which is hereby incorporated by reference in its entirety.

The synthetic mineral product may contain less than about 1 wt. % (e.g., less than about 1.0 wt. %), or less than about 0.9 wt. %, crystalline silica. Occupational exposure to respirable crystalline silica is associated with the lung disease silicosis. Products containing relatively high contents of crystalline silica may therefore be classified as dangerous to human health in some jurisdictions. A product containing less than about 1 wt. % crystalline silica content may avoid such classification.

The synthetic mineral product may exhibit a contact angle at 0.1 seconds, when tested with a droplet of water during contact angle measurement, from about 100° to about 150°, for example, from about 100° to about 140°, or from about 110° to about 140°, or from about 110° to about 130°. The contact angle of the synthetic mineral product may be measured using a Dynamic Absorption Tester as described elsewhere in this application. The contact angle is measured at 0.1 seconds after applying the droplet of water to the surface of the synthetic mineral product.

It may be that the synthetic mineral product is not hydrophobic.

The synthetic mineral product may be surface modified. For example, the synthetic mineral product may be coated. The coating may comprise (e.g., consist (e.g., essentially) of) a silane or salt thereof, for example, an organic silane. Additionally or alternatively, the coating may comprise (e.g., consist (e.g., essentially) of) a fatty acid or salt thereof. The fatty acid or salt thereof may contain 8 to 24 carbon atoms. For example, the coating may comprise (e.g., consist (e.g., essentially) of) caprylic acid, pelargonic acid, capric acid, undecylic acid, lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid, or salts thereof, or any mixture thereof. For example, the coating may comprise (e.g., consist (e.g., essentially) of) stearic acid, palmitic acid, a stearate, a palmate, or any mixture thereof. The level of coating may be from about 1 wt. % to about 20 wt. %, based on the total weight of the coated synthetic mineral product, for example, from about 1 wt. % to about 15 wt. %, or from about 1 wt. % to about 10 wt. %, or from about 1 wt. % to about 5 wt. %, or from about 2 wt. % to about 20 wt. %, or from about 2 wt. % to about 15 wt. %, or from about 2 wt. % to about 10 wt. %, or from about 2 wt. % to about 5 wt. %, or from about 3 wt. % to about 20 wt. %, or from about 3 wt. % to about 15 wt. %, or from about 3 wt. % to about 10 wt. %, or from about 3 wt. % to about 5 wt. %, or from about 3.5 wt. % to about 20 wt. %, or from about 3.5 wt. % to about 15 wt. %, or from about 3.5 wt. % to about 10 wt. %, or from about 3.5 wt. % to about 5 wt. %, or from about 4 wt. % to about 20 wt. %, or from about 4 wt. % to about 15 wt. %, or from about 4 wt. % to about 10 wt. %, or from about 4 wt. % to about 5 wt. %, or from about 5 wt. % to about 20 wt. %, or from about 5 wt. % to about 15 wt. %, or from about 5 wt. % to about 10 wt. %.

Alternatively, the synthetic mineral product may not be surface modified. For example, the synthetic mineral product may not be coated.

The synthetic mineral product may be suitable for use as a wollastonite substitute. That is to say, the synthetic mineral product may be used to replace naturally occurring wollastonite in industrial applications, for example, as a filler in polymer compositions.

Wollastonite is an inosilicate mineral form of CaSiO₃. Wollastonite may also contain small amounts of iron, magnesium and/or manganese substituting for calcium. Wollastonite typically crystallises in the triclinic crystal system, pinacoidal crystal class, with space group P1. Wollastonite typically occurs naturally as bladed crystal masses. Single crystals of wollastonite tend to have an acicular particle shape.

Wollastonite finds industrial applications in ceramics, in paints, in plastics and in metallurgy. For example, wollastonite is added to ceramics to reduce shrinkage and gas evolution during firing and to increase both green and fired strength while maintaining brightness. Wollastonite is added to paints to increase durability and weather-resistance and to mattify paint films. Wollastonite is added to plastics to improve tensile and flexural strength and to increase stability at elevated temperatures. In metallurgy, wollastonite is a common mineral component of mould fluxes for casting metals such as steel. The synthetic mineral product may be used to replace wollastonite in one or more of these applications. For example, the synthetic mineral product may be incorporated into ceramics, paints, plastics (i.e., polymer compositions) or metallurgical processing products such as a mould flux. In particular, the synthetic mineral product may be incorporated into elastomeric polymer compositions such as fluoroelastomeric polymer compositions.

### Polymer composition

The synthetic mineral product described herein may be used as a filler in a polymer composition. The synthetic mineral product may be used as an extender filler or a functional filler. As used herein, the term "functional filler" is understood to mean an additive incorporated into a polymeric composition with a view to enhancing one or more of its physical (e.g., mechanical) properties. An "extender filler" typically modifies the properties of the polymer composition very little and essentially serves to reduce cost.

Thus, there is also provided herein a polymer composition comprising a synthetic mineral product as described herein.

In certain embodiments, the synthetic mineral product may be used as a functional filler in a polymer composition, for example, to modify or enhance one or more mechanical properties of the polymer composition.

In certain embodiments, the synthetic mineral product is used as an extender filler, for example, to supplement or supplant other filler materials, which may be more expensive or more difficult to incorporate into the polymer composition.

In certain embodiments, the synthetic mineral product functions as both an extender filler and as a functional filler.

The polymer composition may comprise no less than about 5 wt. %, for example, no less than about 10 wt. %, or no less than about 15 wt. %, or no less than about 20 wt. %, or no less than about 25 wt. %, or no less than about 30 wt. %, or no less than about 35 wt. %, of the synthetic mineral product, based on the total weight of the polymer composition. The polymer composition may comprise no more than about 60 wt. %, for example, no more than about 55 wt. %, or no more than about 50 wt. %, or no more than about 45 wt. %, or no more than about 40 wt. %, or no more than about 35 wt. %, or no more than about 30 wt. %, or no more than about 25 wt. %, or no more than about 20 wt. %, or no more than about 15 wt. %, or no more than about 10 wt. %, of the synthetic mineral product, based on the total weight of the polymer composition. The polymer composition may comprise from about 5 wt. % to about 60 wt. %, for example, from about 5 wt. % to about 55 wt. %, or from about 5 wt. % to about 50 wt. %, or from about 5 wt. % to about 45 wt. %, or from about 5 wt. % to about 40 wt. %, or from about 5 wt. % to about 35 wt. %, or from about 5 wt. %, to about 30 wt. %, or from about 5 wt. % to about 25 wt. %, or from about 5 wt. % to about 20 wt. %, or from about 5 wt. % to about 15 wt. %, or from about 5 wt. % to about 10 wt. %, or from about 10 wt. % to about 60 wt. %, or from about 10 wt. % to about 55 wt. %, or from about 10 wt. % to about 50 wt. %, or from about 10 wt. % to about 45 wt. %, or from about 10 wt. % to about 40 wt. %, or from about 10 wt. % to about 35 wt. %, or from about 10 wt. %, to about 30 wt. %, or from about 10 wt. % to about 25 wt. %, or from about 10 wt. % to about 20 wt. %, or from about 10 wt. % to about 15 wt. %, or from about 15 wt. % to about 60 wt. %, or from about 15 wt. % to about 55 wt. %, or from about 15 wt. % to about 50 wt. %, or from about 15 wt. % to about 45 wt. %, or from about 15 wt. % to about 40 wt. %, or from about 15 wt. % to about 35 wt. %, or from about 15 wt. %, to about 30 wt. %, or from about 15 wt. % to about 25 wt. %, or from about 15 wt. % to about 20 wt. %, or from about 20 wt. % to about 60 wt. %, or from about 20 wt. % to about 55 wt. %, or from about 20 wt. % to about 50 wt. %, or from about 20 wt. % to about 45 wt. %, or from about 20 wt. % to about 40 wt. %, or from about 20 wt. % to about 35 wt. %, or from about 20 wt. %, to about 30 wt. %, or from about 20 wt. % to about 25 wt. %, or from about 25 wt. % to about 60 wt. %, or from about 25 wt. % to about 55 wt. %, or from about 25 wt. % to about 50 wt. %, or from about 25 wt. % to about 45 wt. %, or from about 25 wt. % to about 40 wt. %, or from about 25 wt. % to about 35 wt. %, or from about 25 wt. %, to about 30 wt. %, or from about 30 wt. % to about 60 wt. %, or from about 30 wt. % to about 55 wt. %, or from about 30 wt. % to about 50 wt. %, or from about 30 wt. % to about 45 wt. %, or from about 30 wt. % to about 40 wt. %, or from about 30 wt. % to about 35 wt. %, or from about 35 wt. % to about 60 wt. %, or from about 35 wt. % to about 55 wt. %, or from about 35 wt. % to about 50 wt. %, or from about 35 wt. % to about 45 wt. %, or from about 35 wt. % to about 40 wt. %, of the synthetic mineral product, based on the total weight of the polymer composition.

The polymer composition may comprise no less than about 5 phr (i.e. parts per hundred rubber), for example, no less than about 10 phr, or no less than about 15 phr, or no less than about 20 phr, or no less than about 25 phr, or no less than about 30 phr, or no less than about 35 phr, or no less than about 40 phr, or no less than about 45 phr, or no less than about 50 phr, or no less than about 55 phr, or no less than about 60 phr, or no less than about 65 phr, or no less than about 70 phr, or no less than about 75 phr, or no less than about 80 phr, or no less than about 85 phr, or no less than about 90 phr, or no less than about 95 phr, or no less than about 100 phr, of the synthetic mineral product.

The polymer composition may comprise no more than about 150 phr, for example, no more than about 145 phr, or no more than about 140 phr, or no more than about 135 phr, or no more than about 130 phr, or no more than about 125 phr, or no more than about 120 phr, or no more than about 115 phr, or no more than about 110 phr, or no more than about 105 phr, or no more than about 100 phr, or no more than about 95 phr, or no more than about 90 phr, or no more than about 85 phr, or no more than about 80 phr, or no more than about 75 phr, or no more than about 70 phr, or no more than about 65 phr, or no more than about 60 phr, or no more than about 55 phr, or no more than about 50 phr, or no more than about 45 phr, or no more than about 40 phr, or no more than about 35 phr, or no more than about 30 phr, of the synthetic mineral product.

The polymer composition may comprise from about 5 phr to about 150 phr, for example, from about 5 phr to about 145 phr, or from about 5 phr to about 140 phr, or from about 5 phr to about 135 phr, or from about 5 phr to about 130 phr, or from about 5 phr to about 125 phr, or from about 5 phr to about 120 phr, or from about 5 phr to about 115 phr, or from about 5 phr to about 110 phr, or from about 5 phr to about 105 phr, or from about 5 phr to about 100 phr, or from about 5 phr to about 95 phr, or from about 5 phr to about 90 phr, from about 5 phr to about 85 phr, or from about 5 phr to about 80 phr, or from about 5 phr to about 75 phr, or from about 5 phr to about 70 phr, or from about 5 phr to about 65 phr, or from about 5 phr to about 60 phr, or from about 5 phr to about 55 phr, or from about 5 phr to about 50 phr, or from about 5 phr to about 45 phr, or from about 5 phr to about 40 phr, or from about 5 phr to about 35 phr, or from about 5 phr to about 30 phr, or from about 10 phr to about 150 phr, or from about 10 phr to about 145 phr, or from about 10 phr to about 140 phr, or from about 10 phr to about 135 phr, or from about 10 phr to about 130 phr, or from about 10 phr to about 125 phr, or from about 10 phr to about 120 phr, or from about 10 phr to about 115 phr, or from about 10 phr to about 110 phr, or from about 10 phr to about 105 phr, or from about 10 phr to about 100 phr, or from about 10 phr to about 95 phr, or from about 10 phr to about 90 phr, from about 10 phr to about 85 phr, or from about 10 phr to about 80 phr, or from about 10 phr to about 75 phr, or from about 10 phr to about 70 phr, or from about 10 phr to about 65 phr, or from about 10 phr to about 60 phr, or from about 10 phr to about 55 phr, or from about 10 phr to about 50 phr, or from about 10 phr to about 45 phr, or from about 10 phr to about 40 phr, or from about 10 phr to about 35 phr, or from about 10 phr to about 30 phr, or from about 15 phr to about 150 phr, or from about 15 phr to about 145 phr, or from about 15 phr to about 140 phr, or from about 15 phr to about 135 phr, or from about 15 phr to about 130 phr, or from about 15 phr to about 125 phr, or from about 15 phr to about 120 phr, or from about 15 phr to about 115 phr, or from about 15 phr to about 110 phr, or from about 15 phr to about 105 phr, or from about 15 phr to about 100 phr, or from about 15 phr to about 95 phr, or from about 15 phr to about 90 phr, from about 15 phr to about 85 phr, or from about 15 phr to about 80 phr, or from about 15 phr to about 75 phr, or from about 15 phr to about 70 phr, or from about 15 phr to about 65 phr, or from about 15 phr to about 60 phr, or from about 15 phr to about 55 phr, or from about 15 phr to about 50 phr, or from about 15 phr to about 45 phr, or from about 15 phr to about 40 phr, or from about 15 phr to about 35 phr, or from about 15 phr to about 30 phr, or from about 20 phr to about 150 phr, or from about 20 phr to about 145 phr, or from about 20 phr to about 140 phr, or from about 20 phr to about 135 phr, or from about 20 phr to about 130 phr, or from about 20 phr to about 125 phr, or from about 20 phr to about 120 phr, or from about 20 phr to about 115 phr, or from about 20 phr to about 110 phr, or from about 20 phr to about 105 phr, or from about 20 phr to about 100 phr, or from about 20 phr to about 95 phr, or from about 20 phr to about 90 phr, from about 20 phr to about 85 phr, or from about 20 phr to about 80 phr, or from about 20 phr to about 75 phr, or from about 20 phr to about 70 phr, or from about 20 phr to about 65 phr, or from about 20 phr to about 60 phr, or from about 20 phr to about 55 phr, or from about 20 phr to about 50 phr, or from about 20 phr to about 45 phr, or from about 20 phr to about 40 phr, or from about 20 phr to about 35 phr, or from about 20 phr to about 30 phr, or from about 25 phr to about 150 phr, or from about 25 phr to about 145 phr, or from about 25 phr to about 140 phr, or from about 25 phr to about 135 phr, or from about 25 phr to about 130 phr, or from about 25 phr to about 125 phr, or from about 25 phr to about 120 phr, or from about 25 phr to about 115 phr, or from about 25 phr to about 110 phr, or from about 25 phr to about 105 phr, or from about 25 phr to about 100 phr, or from about 25 phr to about 95 phr, or from about 25 phr to about 90 phr, from about 25 phr to about 85 phr, or from about 25 phr to about 80 phr, or from about 25 phr to about 75 phr, or from about 25 phr to about 70 phr, or from about 25 phr to about 65 phr, or from about 25 phr to about 60 phr, or from about 25 phr to about 55 phr, or from about 25 phr to about 50 phr, or from about 25 phr to about 45 phr, or from about 25 phr to about 40 phr, or from about 25 phr to about 35 phr, or from about 25 phr to about 30 phr, or from about 30 phr to about 150 phr, or from about 30 phr to about 145 phr, or from about 30 phr to about 140 phr, or from about 30 phr to about 135 phr, or from about 30 phr to about 130 phr, or from about 30 phr to about 125 phr, or from about 30 phr to about 120 phr, or from about 30 phr to about 115 phr, or from about 30 phr to about 110 phr, or from about 30 phr to about 105 phr, or from about 30 phr to about 100 phr, or from about 30 phr to about 95 phr, or from about 30 phr to about 90 phr, from about 30 phr to about 85 phr, or from about 30 phr to about 80 phr, or from about 30 phr to about 75 phr, or from about 30 phr to about 70 phr, or from about 30 phr to about 65 phr, or from about 30 phr to about 60 phr, or from about 30 phr to about 55 phr, or from about 30 phr to about 50 phr, or from about 30 phr to about 45 phr, or from about 30 phr to about 40 phr, or from about 30 phr to about 35 phr, or from about 35 phr to about 150 phr, or from about 35 phr to about 145 phr, or from about 35 phr to about 140 phr, or from about 35 phr to about 135 phr, or from about 35 phr to about 130 phr, or from about 35 phr to about 125 phr, or from about 35 phr to about 120 phr, or from about 35 phr to about 115 phr, or from about 35 phr to about 110 phr, or from about 35 phr to about 105 phr, or from about 35 phr to about 100 phr, or from about 35 phr to about 95 phr, or from about 35 phr to about 90 phr, from about 35 phr to about 85 phr, or from about 35 phr to about 80 phr, or from about 35 phr to about 75 phr, or from about 35 phr to about 70 phr, or from about 35 phr to about 65 phr, or from about 35 phr to about 60 phr, or from about 35 phr to about 55 phr, or from about 35 phr to about 50 phr, or from about 35 phr to about 45 phr, or from about 35 phr to about 40 phr, or from about 40 phr to about 150 phr, or from about 40 phr to about 145 phr, or from about 40 phr to about 140 phr, or from about 40 phr to about 135 phr, or from about 40 phr to about 130 phr, or from about 40 phr to about 125 phr, or from about 40 phr to about 120 phr, or from about 40 phr to about 115 phr, or from about 40 phr to about 110 phr, or from about 40 phr to about 105 phr, or from about 40 phr to about 100 phr, or from about 40 phr to about 95 phr, or from about 40 phr to about 90 phr, from about 40 phr to about 85 phr, or from about 40 phr to about 80 phr, or from about 40 phr to about 75 phr, or from about 40 phr to about 70 phr, or from about 40 phr to about 65 phr, or from about 40 phr to about 60 phr, or from about 40 phr to about 55 phr, or from about 40 phr to about 50 phr, or from about 40 phr to about 45 phr, or from about 45 phr to about 150 phr, or from about 45 phr to about 145 phr, or from about 45 phr to about 140 phr, or from about 45 phr to about 135 phr, or from about 45 phr to about 130 phr, or from about 45 phr to about 125 phr, or from about 45 phr to about 120 phr, or from about 45 phr to about 115 phr, or from about 45 phr to about 110 phr, or from about 45 phr to about 105 phr, or from about 45 phr to about 100 phr, or from about 45 phr to about 95 phr, or from about 45 phr to about 90 phr, from about 45 phr to about 85 phr, or from about 45 phr to about 80 phr, or from about 45 phr to about 75 phr, or from about 45 phr to about 70 phr, or from about 45 phr to about 65 phr, or from about 45 phr to about 60 phr, or from about 45 phr to about 55 phr, or from about 45 phr to about 50 phr, or from about 50 phr to about 150 phr, or from about 50 phr to about 145 phr, or from about 50 phr to about 140 phr, or from about 50 phr to about 135 phr, or from about 50 phr to about 130 phr, or from about 50 phr to about 125 phr, or from about 50 phr to about 120 phr, or from about 50 phr to about 115 phr, or from about 50 phr to about 110 phr, or from about 50 phr to about 105 phr, or from about 50 phr to about 100 phr, or from about 50 phr to about 95 phr, or from about 50 phr to about 90 phr, from about 50 phr to about 85 phr, or from about 50 phr to about 80 phr, or from about 50 phr to about 75 phr, or from about 50 phr to about 70 phr, or from about 50 phr to about 65 phr, or from about 50 phr to about 60 phr, or from about 50 phr to about 55 phr, or from about 55 phr to about 150 phr, or from about 55 phr to about 145 phr, or from about 55 phr to about 140 phr, or from about 55 phr to about 135 phr, or from about 55 phr to about 130 phr, or from about 55 phr to about 125 phr, or from about 55 phr to about 120 phr, or from about 55 phr to about 115 phr, or from about 55 phr to about 110 phr, or from about 55 phr to about 105 phr, or from about 55 phr to about 100 phr, or from about 55 phr to about 95 phr, or from about 55 phr to about 90 phr, from about 55 phr to about 85 phr, or from about 55 phr to about 80 phr, or from about 55 phr to about 75 phr, or from about 55 phr to about 70 phr, or from about 55 phr to about 65 phr, or from about 55 phr to about 60 phr, or from about 60 phr to about 150 phr, or from about 60 phr to about 145 phr, or from about 60 phr to about 140 phr, or from about 60 phr to about 135 phr, or from about 60 phr to about 130 phr, or from about 60 phr to about 125 phr, or from about 60 phr to about 120 phr, or from about 60 phr to about 115 phr, or from about 60 phr to about 110 phr, or from about 60 phr to about 105 phr, or from about 60 phr to about 100 phr, or from about 60 phr to about 95 phr, or from about 60 phr to about 90 phr, from about 60 phr to about 85 phr, or from about 60 phr to about 80 phr, or from about 60 phr to about 75 phr, or from about 60 phr to about 70 phr, or from about 60 phr to about 65 phr, or from about 65 phr to about 150 phr, or from about 65 phr to about 145 phr, or from about 65 phr to about 140 phr, or from about 65 phr to about 135 phr, or from about 65 phr to about 130 phr, or from about 65 phr to about 125 phr, or from about 65 phr to about 120 phr, or from about 65 phr to about 115 phr, or from about 65 phr to about 110 phr, or from about 65 phr to about 105 phr, or from about 65 phr to about 100 phr, or from about 65 phr to about 95 phr, or from about 65 phr to about 90 phr, from about 65 phr to about 85 phr, or from about 65 phr to about 80 phr, or from about 65 phr to about 75 phr, or from about 65 phr to about 70 phr, or from about 70 phr to about 150 phr, or from about 70 phr to about 145 phr, or from about 70 phr to about 140 phr, or from about 70 phr to about 135 phr, or from about 70 phr to about 130 phr, or from about 70 phr to about 125 phr, or from about 70 phr to about 120 phr, or from about 70 phr to about 115 phr, or from about 70 phr to about 110 phr, or from about 70 phr to about 105 phr, or from about 70 phr to about 100 phr, or from about 70 phr to about 95 phr, or from about 70 phr to about 90 phr, from about 70 phr to about 85 phr, or from about 70 phr to about 80 phr, or from about 70 phr to about 75 phr, or from about 75 phr to about 150 phr, or from about 75 phr to about 145 phr, or from about 75 phr to about 140 phr, or from about 75 phr to about 135 phr, or from about 75 phr to about 130 phr, or from about 75 phr to about 125 phr, or from about 75 phr to about 120 phr, or from about 75 phr to about 115 phr, or from about 75 phr to about 110 phr, or from about 75 phr to about 105 phr, or from about 75 phr to about 100 phr, or from about 75 phr to about 95 phr, or from about 75 phr to about 90 phr, from about 75 phr to about 85 phr, or from about 75 phr to about 80 phr, or from about 80 phr to about 150 phr, or from about 80 phr to about 145 phr, or from about 80 phr to about 140 phr, or from about 80 phr to about 135 phr, or from about 80 phr to about 130 phr, or from about 80 phr to about 125 phr, or from about 80 phr to about 120 phr, or from about 80 phr to about 115 phr, or from about 80 phr to about 110 phr, or from about 80 phr to about 105 phr, or from about 80 phr to about 100 phr, or from about 80 phr to about 95 phr, or from about 80 phr to about 90 phr, from about 80 phr to about 85 phr, or from about 85 phr to about 150 phr, or from about 85 phr to about 145 phr, or from about 85 phr to about 140 phr, or from about 85 phr to about 135 phr, or from about 85 phr to about 130 phr, or from about 85 phr to about 125 phr, or from about 85 phr to about 120 phr, or from about 85 phr to about 115 phr, or from about 85 phr to about 110 phr, or from about 85 phr to about 105 phr, or from about 85 phr to about 100 phr, or from about 85 phr to about 95 phr, or from about 85 phr to about 90 phr, or from about 90 phr to about 150 phr, or from about 90 phr to about 145 phr, or from about 90 phr to about 140 phr, or from about 90 phr to about 135 phr, or from about 90 phr to about 130 phr, or from about 90 phr to about 125 phr, or from about 90 phr to about 120 phr, or from about 90 phr to about 115 phr, or from about 90 phr to about 110 phr, or from about 90 phr to about 105 phr, or from about 90 phr to about 100 phr, or from about 90 phr to about 95 phr, or from about 95 phr to about 150 phr, or from about 95 phr to about 145 phr, or from about 95 phr to about 140 phr, or from about 95 phr to about 135 phr, or from about 95 phr to about 130 phr, or from about 95 phr to about 125 phr, or from about 95 phr to about 120 phr, or from about 95 phr to about 115 phr, or from about 95 phr to about 110 phr, or from about 95 phr to about 105 phr, or from about 95 phr to about 100 phr, or from about 100 phr to about 150 phr, or from about 100 phr to about 145 phr, or from about 100 phr to about 140 phr, or from about 100 phr to about 135 phr, or from about 100 phr to about 130 phr, or from about 100 phr to about 125 phr, or from about 100 phr to about 120 phr, or from about 100 phr to about 115 phr, or from about 100 phr to about 110 phr, or from about 100 phr to about 105 phr, of the synthetic mineral product.

The polymer composition may comprise filler other than the synthetic mineral product. For example, the polymer composition may comprise one or more minerals other than the synthetic mineral product. For example, the polymer composition may comprise natural wollastonite, synthetic wollastonite, natural pseudowollastonite, synthetic silica or silicates (e.g., precipitated silica or silicates), natural silica or silicates, a clay mineral (for example, a hydrous kandite clay such as kaolin, halloysite or ball clay), carbon black, a metal hydroxide such as aluminium trihydroxide or magnesium dihydroxide, an alkaline earth metal carbonate or sulphate, such as calcium carbonate (e.g., ground calcium carbonate or precipitated calcium carbonate), magnesium carbonate, dolomite, gypsum, an anhydrous (calcined) kandite clay such as metakaolin or fully calcined kaolin, mica, perlite, feldspars, nepheline syenite, diatomaceous earth, barite and/or glass, in addition to the synthetic mineral product.

The amount of other filler compound(s) present in the polymer composition may be less than about 20 wt. %, for example, less than about 10 wt. %, or less than about 5 wt. %, based on the total weight of the polymer composition.

The amount of other filler compound(s) present in the polymer composition may be less than about 100 phr, for example, less than about 50 phr, or less than about 25 phr.

In certain embodiments, the polymer composition does not comprise filler other than the synthetic mineral product of the present invention.

The polymer composition may comprise any natural or synthetic polymer or mixture thereof. The polymer may, for example, be thermoplastic or thermoset. The term "polymer" used herein includes homopolymers and/or copolymers, as well as crosslinked and/or entangled polymers.

The term "precursor" as may be applied to the polymer component will be readily understood by one of ordinary skill in the art. For example, suitable precursors may include one or more of: monomers, cross-linking agents, curing systems comprising cross-linking agents and promoters, or any combination thereof. Where the synthetic mineral product is mixed with precursors of the polymer, the polymer composition will subsequently be formed by curing and/or polymerising the precursor components to form the desired polymer (e.g., vulcanizing a rubber).

Polymers, including homopolymers and/or copolymers, comprised in the polymer composition of the present invention may be prepared from one or more of the following monomers: acrylic acid, methacrylic acid, methyl methacrylate, and alkyl acrylates having 1-18 carbon atoms in the alkyl group, styrene, substituted styrenes, divinyl benzene, diallyl phthalate, butadiene, vinyl acetate, acrylonitrile, methacrylonitrile, maleic anhydride, esters of maleic acid or fumaric acid, tetrahydrophthalic acid or anhydride, itaconic acid or anhydride, and esters of itaconic acid, with or without a cross-linking dimer, trimer, or tetramer, crotonic acid, neopentyl glycol, propylene glycol, butanediols, ethylene glycol, diethylene glycol, dipropylene glycol, glycerol, cyclohexanedimethanol, 1,6 hexanediol, trimethyolpropane, pentaerythritol, phthalic anhydride, isophthalic acid, terephthalic acid, hexahydrophthalic anyhydride, adipic acid or succinic acids, azelaic acid and dimer fatty acids, toluene diisocyanate and diphenyl methane diisocyanate.

The polymer may be selected from one or more of polymethylmethacrylate (PMMA), polyacetal, polycarbonate, polyvinyls, polyacrylonitrile, polybutadiene, polystyrene, polyacrylate, polyethylene, polypropylene, epoxy polymers, unsaturated polyesters, polyurethanes, polycyclopentadienes, ethylene vinyl acetate, butyl rubber, hydrogenated nitrile butadiene rubber (NBR), natural rubber, polychloroprene, a fluoroelastomer, poly vinyl acetate, ethylene-propylene-diene-methylene (EPDM), and copolymers thereof. Suitable polymers also include liquid rubbers, such as silicones.

In certain embodiments, the polymer composition comprises (e.g., the polymer content of the polymer composition is) an elastomer such as a synthetic rubber or a natural rubber, for example, a styrene-butadiene rubber.

In certain preferred embodiments, the polymer composition comprises (e.g., the polymer content of the polymer composition is) a fluoropolymer such as a fluoroelastomer. The fluoroelastomer may be a homopolymer. The fluoroelastomer may be a copolymer. For example, the fluoroelastomer may by a dipolymer or a terpolymer. For example, the fluoroelastomer may be a copolymer of hexafluoropropylene and vinylidene fluoride such as a fluoroelastomer from the Dyneon^{™} Fluorel^{™} range available from 3M (e.g., Dyneon^{™} Fluorel^{™} FC 2174 and/or Dyneon^{™} Fluorel^{™} FC 2181) or a fluoroelastomer from the Tecnoflon^{™} range available from Solvay (e.g., Tecnoflon^{™} P757). The fluoropolymer may have a fluorine content no less than about 50 %, for example, no less than about 60 %, or no less than about 65 %, or no less than about 66 %, or no less than about 68 % or no less than about 70 %.

The fluoropolymer may be an FKM fluorocarbon-based fluoroelastomer as defined by ASTM standard D1418 or an FPM FKM fluorocarbon-based fluoroelastomer as defined by ISO standard 1629. The fluoropolymer may be a type-1 FKM made from vinylidene fluoride and hexafluoropropylene monomers. The fluoropolymer may be a type-2 FKM made from vinylidene fluoride, hexafluoropropylene and tetrafluoroethylene monomers. The fluoropolymer may be a type-3 FKM made from vinylidene fluoride, tetrafluoroethylene and perfluoromethylvinylether monomers. The fluoropolymer may be a type-4 FKM made from propylene, tetrafluoroethylene and vinylidene monomers. The fluoropolymer may be a type-5 FKM made from vinylidene, hexafluoropropylene, tetrafluoroethylene, perfluoromethylvinylether and ethylene monomers.

The fluoropolymer may be a diamine cross-linked, ionic cross-linked or peroxide cross-linked fluoropolymer.

The fluoropolymer may be a bisphenol-cured fluoropolymer or a peroxide-cured fluoropolymer.

The polymer composition may comprise no less than about 40 wt. %, for example, no less than about 50 wt. %, or no less than about 60 wt. %, or no less than about 70 wt. %, or no less than about 80 wt. %, or no less than about 90 wt. %, polymer, based on the total weight of the polymer composition. The polymer composition may comprise no more than about 95 wt. %, for example, no more than about 90 wt. %, or no more than about 80 wt. %, or no more than about 70 wt. %, or no more than about 60 wt. %, or no more than about 50 wt. %, polymer, based on the total weight of the polymer composition. The polymer composition may comprise from about 40 wt. % to about 95 wt. %, for example, from about 40 wt. % to about 90 wt. %, or from about 40 wt. % to about 80 wt. %, or from about 40 wt. % to about 70 wt. %, or from about 40 wt. % to about 60 wt. %, or from about 40 wt. % to about 50 wt. %, or from about 50 wt. % to about 95 wt. %, or from about 50 wt. % to about 90 wt. %, or from about 50 wt. % to about 80 wt. %, or from about 50 wt. % to about 70 wt. %, or from about 50 wt. % to about 60 wt. %, or from about 60 wt. % to about 95 wt. %, or from about 60 wt. % to about 90 wt. %, or from about 60 wt. % to about 80 wt. %, or from about 60 wt. % to about 70 wt. %, or from about 70 wt. % to about 95 wt. %, or from about 70 wt. % to about 90 wt. %, or from about 70 wt. % to about 80 wt. %, or from about 80 wt. % to about 95 wt. %, or from about 80 wt. % to about 90 wt. %, or from about 90 wt. % to about 95 wt. %, polymer, based on the total weight of the polymer composition.

The polymer composition may comprise no less than about 40 wt. %, for example, no less than about 50 wt. %, or no less than about 60 wt. %, or no less than about 70 wt. %, or no less than about 80 wt. %, or no less than about 90 wt. %, fluoropolymer, based on the total weight of the polymer composition. The polymer composition may comprise no more than about 95 wt. %, for example, no more than about 90 wt. %, or no more than about 80 wt. %, or no more than about 70 wt. %, or no more than about 60 wt. %, or no more than about 50 wt. %, fluoropolymer, based on the total weight of the polymer composition. The polymer composition may comprise from about 40 wt. % to about 95 wt. %, for example, from about 40 wt. % to about 90 wt. %, or from about 40 wt. % to about 80 wt. %, or from about 40 wt. % to about 70 wt. %, or from about 40 wt. % to about 60 wt. %, or from about 40 wt. % to about 50 wt. %, or from about 50 wt. % to about 95 wt. %, or from about 50 wt. % to about 90 wt. %, or from about 50 wt. % to about 80 wt. %, or from about 50 wt. % to about 70 wt. %, or from about 50 wt. % to about 60 wt. %, or from about 60 wt. % to about 95 wt. %, or from about 60 wt. % to about 90 wt. %, or from about 60 wt. % to about 80 wt. %, or from about 60 wt. % to about 70 wt. %, or from about 70 wt. % to about 95 wt. %, or from about 70 wt. % to about 90 wt. %, or from about 70 wt. % to about 80 wt. %, or from about 80 wt. % to about 95 wt. %, or from about 80 wt. % to about 90 wt. %, or from about 90 wt. % to about 95 wt. %, fluoropolymer, based on the total weight of the polymer composition.

The polymer composition may comprise no less than about 40 wt. %, for example, no less than about 50 wt. %, or no less than about 60 wt. %, or no less than about 70 wt. %, or no less than about 80 wt. %, or no less than about 90 wt. %, fluoroelastomer, based on the total weight of the polymer composition. The polymer composition may comprise no more than about 95 wt. %, for example, no more than about 90 wt. %, or no more than about 80 wt. %, or no more than about 70 wt. %, or no more than about 60 wt. %, or no more than about 50 wt. %, fluoroelastomer, based on the total weight of the polymer composition. The polymer composition may comprise from about 40 wt. % to about 95 wt. %, for example, from about 40 wt. % to about 90 wt. %, or from about 40 wt. % to about 80 wt. %, or from about 40 wt. % to about 70 wt. %, or from about 40 wt. % to about 60 wt. %, or from about 40 wt. % to about 50 wt. %, or from about 50 wt. % to about 95 wt. %, or from about 50 wt. % to about 90 wt. %, or from about 50 wt. % to about 80 wt. %, or from about 50 wt. % to about 70 wt. %, or from about 50 wt. % to about 60 wt. %, or from about 60 wt. % to about 95 wt. %, or from about 60 wt. % to about 90 wt. %, or from about 60 wt. % to about 80 wt. %, or from about 60 wt. % to about 70 wt. %, or from about 70 wt. % to about 95 wt. %, or from about 70 wt. % to about 90 wt. %, or from about 70 wt. % to about 80 wt. %, or from about 80 wt. % to about 95 wt. %, or from about 80 wt. % to about 90 wt. %, or from about 90 wt. % to about 95 wt. %, fluoroelastomer, based on the total weight of the polymer composition.

The polymer composition may further comprise one or more additives. The one or more additives may be selected from: thickeners, emulsifiers, viscosity modifiers, softeners, plasticizers (such as polyethylene glycol), vulcanizers (such as sulphur, peroxide, metal oxides, acetoxysilane or urethane crosslinkers such as isocyanurate on calcium silicate), activators (such as zinc oxide or magnesium oxide), accelerators (such as 2-mercaptobenzothiazole (MBT), mercaptobenzothiazole disulfide (MBTS) or tetramethylthiuram disulfide (DTMT)), rubber process oils (such as naphthenic oil) or other process aids (such as polyethylene wax), fire retardants (such as aluminium hydroxide), antibacterial agents, anti-mould agents (such as propionic acid), hydrophobic agents (such as silicone oil), stearic acid, sulfur, and/or thermal conductivity regulating agents (such as graphite), mould release agents (e.g., carnauba wax), acid scavengers (such as calcium hydroxide) or any combination thereof.

The polymer composition may comprise no more than about 50 phr, for example, no more than about 40 phr, or no more than about 30 phr, or no more than about 20 phr, or no more than about 10 phr of such additives in total. The polymer composition may comprise no less than about 1 phr, for example, no less than about 10 phr, of such additives in total. The polymer composition may comprise from about 1 phr to about 50 phr, for example, from about 1 phr to about 40 phr, or from about 1 phr to about 30 phr, or from about 1 phr to about 20 phr, or from about 1 phr to about 10 phr, or from about 10 phr to about 50 phr, or from about 10 phr to about 40 phr, or from about 10 phr to about 30 phr, of such additives in total.

The polymer composition may comprise: about 100 phr fluoroelastomer; and from about 30 phr to about 50 phr, for example, from about 35 phr to about 40 phr, of the synthetic mineral product. The polymer composition may further from about 5 phr to about 15 phr, for example, of additives (for example, including carnauba wax, magnesium oxide, polyethylene wax and/or calcium hydroxide).

The polymer composition may comprise: about 100 phr fluoroelastomer; and from about 20 phr to about 40 phr, for example, from about 25 phr to about 35 phr, of the synthetic mineral product. The polymer composition may further from about 8 phr to about 16 phr of additives (for example, including peroxide, isocyanurate on calcium silicate and/or zinc oxide).

The polymer composition may have a minimum torque measure, by moving die rheometry according to ISO - 6502, no less than about 1.8 dNm, for example, no less than about 1.9 dNm, or no less than about 2.0 dNm, or no less than about 2.1 dNm, or no less than about 2.2 dNm, or no less than about 2.3 dNm, or no less than about 2.4 dNm. The polymer composition may have a minimum torque measure, by moving die rheometry according to ISO - 6502, no greater than about 3 dNm, for example, no greater than about 2.9 dNm, or no greater than about 2.8 dNm, or no greater than about 2.7 dNm, or no greater than about 2.6 dNm, or no greater than about 2.5 dNm, or no greater than about 2.4 dNm, or no greater than about 2.3 dNm, or no greater than about 2.2 dNm. The polymer composition may have a minimum torque measure, by moving die rheometry according to ISO - 6502, from about 1.8 dNm to about 3 dNm, for example, from about 2.0 dNm to about 2.6 dNm, or from about 1.8 dNm to about 2.2 dNm, or from about 2.0 dNm to about 2.5 dNm.

The polymer composition may have a maximum torque measure, by moving die rheometry according to ISO - 6502, no less than about 25 dNm, for example, no less than about 26 dNm, or no less than about 27 dNm, or no less than about 28 dNm, or no less than about 29 dNm, or no less than about 30 dNm, or no less than about 31 dNm, or no less than about 32 dNm. The polymer composition may have a maximum torque measure, by moving die rheometry according to ISO - 6502, no greater than about 35 dNm, for example, no greater than about 34 dNm, or no greater than about 33 dNm, or no greater than about 32 dNm, or no greater than about 31 dNm, or no greater than about 30 dNm, or no greater than about 29 dNm, or no greater than about 28 dNm. The polymer composition may have a maximum torque measure, by moving die rheometry according to ISO - 6502, from about 25 dNm to about 35 dNm, for example, from about 28 dNm to about 32 dNm, or from about 30 dNm to about 35 dNm.

The polymer composition may have a crosslink density, by moving die rheometry according to ISO - 6502, no less than about 20 dNm, for example, no less than about 21 dNm, or no less than about 22 dNm, or no less than about 23 dNm, or no less than about 24 dNm, or no less than about 25 dNm, or no less than about 26 dNm, or no less than about 27 dNm, or no less than about 28 dNm, or no less than about 29 dNm, or no less than about 30 dNm. The polymer composition may have a crosslink density, by moving die rheometry according to ISO - 6502, no greater than about 35 dNm, for example, no greater than about 34 dNm, or no greater than about 33 dNm, or no greater than about 32 dNm, or no greater than about 31 dNm, or no greater than about 30 dNm, or no greater than about 29 dNm, or no greater than about 28 dNm, or no greater than about 26 dNm, or no greater than about 25 dNm. The polymer composition may have a crosslink density, by moving die rheometry according to ISO - 6502, from about 20 dNm to about 35 dNm, for example, from about 25 dNm to about 30 dNm, or from about 28 dNm to about 32 dNm.

The polymer composition may have a ts2 scorch time, by moving die rheometry according to ISO - 6502, no less than about 0.3 minutes, for example, no less than about 0.4 minutes, or no less than about 0.5 minutes, or no less than about 0.6 minutes, or no less than about 0.7 minutes, or no less than about 0.8 minutes, or no less than about 0.9 minutes, or no less than about 1.0 minutes, or no less than about 1.1 minutes, or no less than about 1.2 minutes, or no less than about 1.3 minutes, or no less than about 1.4 minutes, or no less than about 1.5 minutes, or no less than about 1.6 minutes, or no less than about 1.7 minutes, or no less than about 1.8 minutes, or no less than about 1.9 minutes, or no less than about 2.0 minutes. The polymer composition may have a ts2 scorch time, by moving die rheometry according to ISO - 6502, no greater than about 2.3 minutes, for example, no greater than about 2.2 minutes, or no greater than about 2.1 minutes, or no greater than about 2.0 minutes, or no greater than about 1.9 minutes, or no greater than about 1.8 minutes, or no greater than about 1.7 minutes, or no greater than about 1.6 minutes, or no greater than about 1.5 minutes, or no greater than about 1.4 minutes, or no greater than about 1.3 minutes. The polymer composition may have a ts2 scorch time, by moving die rheometry according to ISO - 6502, from about 0.3 minutes to about 2.3 minutes, for example, from about 0.3 minutes to about 1.0 minutes, or from about 0.4 minutes to about 0.7 minutes, or from about 1.5 minutes to about 2.0 minutes, or from about 1.8 minutes to about 2.3 minutes, or from about 1.9 minutes to about 2.1 minutes.

The polymer composition may have a t90 vulcanization time to 90 % cure, by moving die rheometry according to ISO - 6502, no less than about 1.0 minutes, for example, no less than about 1.2 minutes, or no less than about 1.4 minutes, or no less than about 1.6 minutes, or no less than about 1.8 minutes, or no less than about 1.9 minutes, or no less than about 2.0 minutes, or no less than about 2.2 minutes, or no less than about 2.4 minutes, or no less than about 2.6 minutes, or no less than about 2.8 minutes, or no less than about 3.0 minutes, or no less than about 3.2 minutes, or no less than about 3.4 minutes, or no less than about 3.6 minutes, or no less than about 3.8 minutes, or no less than about 4.0 minutes, or no less than about 4.2 minutes, or no less than about 4.4 minutes, or no less than about 4.5 minutes, or no less than about 4.6 minutes, or no less than about 4.8 minutes, or no less than about 4.9 minutes, or no less than about 5.0 minutes. The polymer composition may have a t90 vulcanization time to 90 % cure, by moving die rheometry according to ISO - 6502, no greater than about 6.0 minutes, for example, no greater than about 5.8 minutes, or no greater than about 5.6 minutes, or no greater than about 5.4 minutes, or no greater than about 5.2 minutes, or no greater than about 5.0 minutes, or no greater than about 4.8 minutes, or no greater than about 4.6 minutes, or no greater than about 4.4 minutes, or no greater than about 4.2 minutes, or no greater than about 4.0 minutes, or no greater than about 3.8 minutes, or no greater than about 3.6 minutes, or no greater than about 3.4 minutes, or no greater than about 3.2 minutes, or no greater than about 3.0 minutes, or no greater than about 2.8 minutes, or no greater than about 2.6 minutes, or no greater than about 2.4 minutes, or no greater than about 2.2 minutes, or no greater than about 2.0 minutes, or no greater than about 1.9 minutes. The polymer composition may have a t90 vulcanization time to 90 % cure, by moving die rheometry according to ISO - 6502, from about 1.0 minutes to about 6.0 minutes, for example, from about 1.0 minutes to about 2.0 minutes, or from about 1.4 minutes to about 1.9 minutes, or from about 4.5 minutes to about 6.0 minutes, or from about 4.8 minutes to about 5.2 minutes.

It may be the polymer composition has: a minimum torque measure, by moving die rheometry according to ISO - 6502, from about 1.8 dNm to about 3 dNm, for example, from about 2.0 dNm to about 2.6 dNm, or from about 1.8 dNm to about 2.2 dNm, or from about 2.0 dNm to about 2.5 dNm; a maximum torque measure, by moving die rheometry according to ISO - 6502, from about 25 dNm to about 35 dNm, for example, from about 28 dNm to about 32 dNm, or from about 30 dNm to about 35 dNm; a crosslink density, by moving die rheometry according to ISO - 6502, from about 20 dNm to about 35 dNm, for example, from about 25 dNm to about 30 dNm, or from about 28 dNm to about 32 dNm; a ts2 scorch time, by moving die rheometry according to ISO - 6502, from about 0.3 minutes to about 2.3 minutes, for example, from about 0.3 minutes to about 1.0 minutes, or from about 0.4 minutes to about 0.7 minutes, or from about 1.5 minutes to about 2.0 minutes, or from about 1.8 minutes to about 2.3 minutes, or from about 1.9 minutes to about 2.1 minutes; and a t90 vulcanization time to 90 % cure, by moving die rheometry according to ISO - 6502, from about 1.0 minutes to about 6.0 minutes, for example, from about 1.0 minutes to about 2.0 minutes, or from about 1.4 minutes to about 1.9 minutes, or from about 4.5 minutes to about 6.0 minutes, or from about 4.8 minutes to about 5.2 minutes.

The polymer composition may have a tensile strength, measured according to ISO 37, no less than about 6 MPa, for example, no less than about 8 MPa, or no less than about 10 MPa, or no less than about 12 MPa, or no less than about 14 MPa, or no less than about 16 MPa, or no less than about 18 MPa, or no less than about 20 MPa, or no less than about 22 MPa. The polymer composition may have a tensile strength, measured according to ISO 37, no greater than about 25 MPa, for example, no greater than about 24 MPa, or no greater than about 22 MPa, or no greater than about 20 MPa, or no greater than about 18 MPa, or no greater than about 16 MPa, or no greater than about 14 MPa, or no greater than about 12 MPa. The polymer composition may have a tensile strength, measured according to ISO 37, from about 6 MPa to about 25 MPa, for example, from about 8 MPa to about 25 MPa, or from about 10 MPa to about 25 MPa, or from about 12 MPa to about 25 MPa, or from about 8 MPa to about 24 MPa, or from about 10 MPa to about 24 MPa, or from about 12 MPa to about 24 MPa, or from about 8 MPa to about 22 MPa, or from about 10 MPa to about 22 MPa, or from about 12 MPa to about 22 MPa, or from about 8 MPa to about 20 MPa, or from about 10 MPa to about 20 MPa, or from about 12 MPa to about 20 MPa, or from about 8 M Pa to about 18 MPa, or from about 10 MPa to about 18 MPa, or from about 12 MPa to about 18 MPa.

The polymer composition may have an elongation at break, measured according to ISO 37, no less than about 140 %, for example, no less than about 160 %, or no less than about 180 %, or no less than about 200 %, or no less than about 220 %, or no less than about 240 %, or no less than about 260 %, or no less than about 280 %, or no less than about 300 %, or no less than about 320 %, or no less than about 340 %, or no less than about 360 %, or no less than about 380 %, or no less than about 400 %, or no less than about 420 %, or no less than about 440 %, or no less than about 460 %, or no less than about 480 %, or no less than about 500 %. The polymer composition may have an elongation at break, measured according to ISO 37, no greater than about 600 %, for example, no greater than about 580 %, or no greater than about 560%, or no greater than about 540 %, or no greater than about 520 %, or no greater than about 500 %, or no greater than about 480 %, or no greater than about 460 %, or no greater than about 440 %, or no greater than about 420 %, or no greater than about 400 %, or no greater than about 380 %, or no greater than about 360 %, or no greater than about 340 %, or no greater than about 320 %, or no greater than about 300 %, or no greater than about 280 %, or no greater than about 260 %, or no greater than about 240 %, or no greater than about 220 %, or no greater than about 200 %. The polymer composition may have an elongation at break, measured according to ISO 37, from about 140 % to about 600 %, for example, from about 160 % to about 600 %, or from about 180 % to about 600 %, or from about 200 % to about 600 %, or from about 300 % to about 600 %, or from about 400 % to about 600 %, or from about 500 % to about 600 %, or from about 160 % to about 500 %, or from about 180 % to about 500 %, or from about 200 % to about 500 %, or from about 300 % to about 500 %, or from about 400 % to about 500 %, or from about 160 % to about 400 %, or from about 180 % to about 400 %, or from about 200 % to about 400 %, or from about 300 % to about 400 %, or from about 160 % to about 300 %, or from about 180 % to about 300 %, or from about 200 % to about 300 %, or from about 160 % to about 280 %, or from about 160 % to about 260 %, or from about 160 % to about 240 %, or from about 160 % to about 220 %, or from about 160 % to about 200 %.

The polymer composition may have a compression set, measured according to ISO 815, no less than about 6 %, for example, no less than about 8 %, or no less than about 10 %, or no less than about 12 %, or no less than about 14 %, or no less than about 16 %, or no less than about 18 %. The polymer composition may have a compression set, measured according to ISO 815, no more than about 20 %, for example, no more than about 18 %, or no more than about 16 %, or no more than about 14 %, or no more than about 12 %. The polymer composition may have a compression set, measured according to ISO 815, from about 6 % to about 20 %, for example, from about 8 % to about 20 %, or from about 10 % to about 20 %, or from about 12 % to about 20 %, or from about 14 % to about 20 %, or from about 16 % to about 20 %, or from 8 % to about 18 %, or from about 10 % to about 18 %, or from about 12 % to about 18 %, or from about 8 % to about 16 %, or from about 10 % to about 16 %, or from about 12 % to about 16 %, or from about 8 % to about 14 %, or from about 8 % to about 12 %.

It may be that the polymer composition has: a tensile strength, measured according to ISO 37, no less than about 6 MPa and no greater than about 25 MPa; an elongation at break, measured according to ISO 37, no less than about 140 % and no greater than about 600 %; and a compression set, measured according to ISO 815, no less than about 6 % and no greater than about 20 %.

### Method of making the polymer composition

The polymer composition may be prepared by combining a polymer or polymer precursors with the synthetic mineral product of the present invention and any other optional components. Where the synthetic mineral product (and any other optional components) is combined with polymer precursors, the resulting combination of the polymer precursors, synthetic mineral product (and other optional components) may be cured.

The polymer composition can be prepared by mixing of the components thereof (except the synthetic mineral product) intimately together. The synthetic mineral product may then be suitably blended, e.g., dry blended, with the mixture of components and any desired additional components, before processing to form a final polymer composite or article.

The polymer composition may, for example, be in accordance with any embodiment disclosed herein.

Preparation of the polymer compositions of the present invention can be accomplished by any suitable mixing method known in the art, as will be readily apparent to one of ordinary skill in the art. Such methods include, for example, dry blending of the individual components or precursors thereof and subsequent processing in a conventional manner. Certain of the ingredients can, if desired, be pre-mixed before addition to the compounding mixture.

In the case of thermoplastic polymer compositions, such processing may comprise melt mixing, either directly in an extruder for making an article from the composition, or premixing in a separate mixing apparatus. Dry blends of the individual components can alternatively be directly injection moulded without pre-melt mixing.

The polymer composition can be prepared by mixing of the components thereof intimately together. The synthetic mineral product may then be suitably dry blended with the polymer, and any desired additional components, before processing as described above.

Other filler compounds may be added and blended in at the mixing stage.

For the preparation of cross-linked or cured polymer compositions, the blend of uncured components or their precursors, and, if desired, the synthetic mineral product and any desired non-talc component(s), will be contacted under suitable conditions of heat, pressure and/or light with an effective amount of any suitable cross-linking agent or curing system, according to the nature and amount of the polymer used, in order to cross-link and/or cure the polymer.

For the preparation of polymer compositions where the synthetic mineral product and any desired other component(s) are present in situ at the time of polymerisation, the blend of monomer(s) and any desired other polymer precursors, synthetic mineral product and any other component(s) will be contacted under suitable conditions of heat, pressure and/or light, according to the nature and amount of the monomer(s) used, in order to polymerise the monomer(s) with the synthetic mineral product and any other component(s) in situ.

In certain embodiments, the synthetic mineral product is dispersed with agitation into a mixture comprising polymer and optionally a curing agent. The mixture may further comprise a mould release agent. The resulting dispersion can be degassed to remove entrained air. The resulting dispersion can then be poured into a suitable mould (if liquid), placed in a mould for compression moulding (if solid) or injected into a mould (if solid), and cured. Suitable curing temperatures range from 20-200°C, for example, 20-120°C, or 60-90°C, or 150-200 °C, dependent on the polymer and curing agent.

The starting polymer mixture can further comprise a pre-polymer. The pre-polymer may or may not correspond to the starting polymer.

The viscosity of the starting polymer or polymer/monomer solution, amount of curing agent, release agent and synthetic mineral product can be varied according to the requirements of the final cured product. Generally, the greater the amount of synthetic mineral product added, the higher the viscosity of the dispersion. Dispersant agents can be added to reduce the viscosity of the dispersion. Alternatively, the amount of polymer in the starting solution can be reduced.

Suitable curing agents will be readily apparent to one of ordinary skill in the art, and include organic peroxides, hydroperoxides, bisphenols and azo compounds. Examples of peroxide and hydroperoxide curing agents include dimethyl dibutylperoxyhexane, benzyl peroxide, dicumyl peroxide, methyl ethyl ketone peroxide, lauryl peroxide, cyclohexanone peroxide, t-butyl perbenzoate, t-butyl hydroperoxide, t-butyl benzene hydroperoxide, cumene hydroperoxide and t-butyl peroctoate. An example bisphenol curing agent is bisphenol AF (BpAF) which may be combined with benzyl triphenyl phosphonium chloride.

The compounded compositions may further comprise additional components, such as slip aids (for example Erucamide), process aids (for example Polybatch^{®} AMF-705), mould release agents and antioxidants.

Suitable mould release agents will be readily apparent to one of ordinary skill in the art, and include fatty acids, and zinc, calcium, magnesium and lithium salts of fatty acids and organic phosphate esters. Specific examples are stearic acid, zinc stearate, calcium stearate, magnesium stearate, lithium stearate calcium oleate, zinc palmitate. Typically, slip and process aids, and mould release agents are added in an amount less than about 5 wt. % based on the weight of the masterbatch. Polymer articles may then be extruded, compression moulded or injected moulded using conventional techniques known in the art, as will be readily apparent to one of ordinary skill in the art. Thus, as described below, the present invention is also directed to articles formed from the polymer compositions of the present invention.

In embodiments in which the polymer composition comprises an elastomer (e.g., a rubber), the curing (e.g., vulcanization) of the elastomer (e.g., rubber) may require the presence of sulphur. The curing (e.g., vulcanization) may also be accelerated using an accelerator. Suitable accelerators include guanidine, dithiocarbamate, thirum, 2-mercaptobenzothiazole, zinc-2-mercaptobenzothiazole, mercaptobenzothiazole disulfide, tetramethylthiuram disulfide, thiourea, benzothiazole sulfenamide and isopropylxanthate.

In certain embodiments, the polymer composition comprises a colorant which, if present, will be added during compound of the polymer composition. The colorant may be added in the form of a masterbatch. Suitable colours are many and various.

In certain embodiments, the synthetic mineral product is added to a twin-screw extruder to which unfilled polymer is being fed and made molten. The synthetic mineral product is fed into the extruder through a hopper, for example, via gravimetric feeding, and uniformly blends with the polymer. The mixture emerges from the extruder and may be cooled. Then, for example, the mixture can be further compression moulded or injection moulded into useful shapes.

The methods described above may include compounding and extrusion. Compounding may be carried out using a twin screw compounder, for example, a Clextral BC 21 double screw extruder or a Leistritz ZSE 18 double screw extruder or Baker Perkins 25 mm twin screw compounder. The polymer, synthetic mineral product and optional additional components may be premixed and fed from a single hopper. The resulting melt may be cooled, for example, in a water bath, and then pelletized. Test pieces, e.g., Charpy bars or tensile dumbbells, may be injection moulded or compression moulded or cast or blown into film. The screw temperature may be between about 100 °C and about 300 °C, for example, between about 150 °C and about 280 °C, for example, between about 180 °C and about 250 °C, or between about 200 and 230 °C. Screw speed may be between about 100 and 1200 rpm, for example, between about 100 and 1000 rpm, for example, between about 200 and 800 rpm, for example, between about 250 and 650 rpm, for example, between about 200 and 400 rpm, or between about 500 and 700 rpm. In certain embodiments, screw speed is about 300 rpm. In other embodiments, screw speed is about 600 rpm. Suitable injection moulding apparatus includes, for example, a Billion 50T Proxima press. The polymer composition may be dried prior to moulding. Drying may be carried out at any suitable temperature, for example, about 60°C, for a suitable period of time, for example, between about 1 hours and 20 hours, for example, between about 2 and 18 hours, or between about 1 and 3 hours, or between about 4 and 8 hours, or between about 12 and 18 hours. The temperature during drying may be kept constant or varied. In certain embodiments, the temperature during drying is between about 70 and 120 °C, for example, between about 80 and 100 °C, for example, about 90°C. Moulding is generally conducted at a temperature at which the polymer composition is flowable. For example, the moulding temperature may be between about 100 and 300 °C, for example, between about 200 and 300 °C, or between about 240 and about 280°C. Following moulding the moulded piece will be allowed to cool and set.

The polymer composition may be prepared using a two-roll mill as is commonly used for processing elastomeric polymeric compositions such as rubber. A two-roll mill comprises two horizontally opposed cylinders or rolls which rotate in opposing directions and at variable speeds. The distance between the rolls and the speed of rotation is adjustable to vary the shear and compressive forces applied to polymer and other components introduced between the rolls. One or more of the rolls may be hollow and/or cooled. The polymer composition may be prepared by compounding polymer with synthetic mineral product and any other components within the two-roll mill. The preparation process may be carried out in two or more stages. In a first mastication stage, raw polymer (e.g., rubber) may be passed through the two-roll mill to plasticise the polymer. In one or more second compounding stages, filler and/or additives may be mixed into the polymer using the two-roll mill. In one example, the preparation process involves: passing the polymer (e.g. rubber) through the two roll mill to plasticise the polymer (e.g. rubber); mixing the polymer with additives (e.g. stearic acid, zinc oxide, PEG, etc.) within the two roll mill; compounding the polymer with the synthetic mineral product within the two roll mill, the synthetic mineral product and oil being added to the polymer in an alternating fashion; and mixing accelerator and/or sulphur into the polymer within the two roll mill.

Alternatively, the polymer composition may be prepared using an internal mixer, such as a Banbury internal mixer, as is commonly used for processing elastomeric polymeric compositions such as rubber. An internal mixer comprises two or more rotors, enclosed in a mixing chamber, which rotate towards one another at different speeds. The rotors may be provided with spiral blades. One or more of the rotors may be heated or cooled. Materials to be mixed may be fed into the mixing chamber through a hopper and a floating weight may rest on top of the feed, confining the material within the mixing chamber. The polymer composition may be prepared by compounding polymer with the synthetic mineral product and any other components within the internal mixer.

Other suitable processing techniques include gas-assisted injection moulding, calendaring, vacuum forming, thermoforming, blow-moulding, drawing, spinning, film forming, laminating or any combination thereof. Any suitable apparatus may be used, as will be apparent to one of ordinary skill in the art.

The polymer composition can be processed to form, or to be incorporated in, articles of commerce in any suitable way, as described herein. The articles which may be formed from the polymer composition are many and various. Examples include hoses (e.g., fuel hoses) and gaskets (e.g., gaskets which may come into contact with fuel), for example, for use in automotive or aerospace applications.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

For the avoidance of doubt, the present application is directed to the subject-matter described in the following numbered paragraphs:
1. A method of making a synthetic mineral product (e.g., for use as a wollastonite substitute), the method comprising: providing a mixture comprising a silica-containing material and a calcium-containing material; and heating the mixture at no less than about 1200°C to form the synthetic mineral product.
2. The method according to paragraph 1, wherein providing the mixture comprises mixing the silica-containing material and the calcium-containing material together.
3. The method according to paragraph 2, wherein mixing the silica-containing material and the calcium-containing material together comprises milling the silica-containing material and the calcium-containing material together, for example, to achieve a d₈₀, by laser, from about 10 µm to about 400 µm, for example, from about 20 µm to 50 µm.
4. The method according to any preceding paragraph, wherein the silica-containing material is selected from silica sand, quartz, fused quartz, tridymite, cristobalite, keatite, moganite, coesite, stishovite, seifertite, melanophlogite, fumed silica, silica fume, silica gel, silica aerogel, and/or any combination thereof.
5. The method according to any preceding paragraph, wherein the calcium-containing material comprises calcium oxide, calcium carbonate and/or calcium silicate, for example, wherein the calcium-containing material is selected from lime, quick lime, calcite, aragonite, vaterite, limestone, chalk, marble, travertine, ground calcium carbonate, precipitated calcium carbonate, calcium silicate, dolomite, and/or any combination thereof.
6. The method according to any preceding paragraph, wherein the method comprises heating the mixture at no less than about 1450°C.
7. The method according to any preceding paragraph, wherein the method comprises heating the mixture at no greater than about 1550°C.
8. The method according to any preceding paragraph, wherein the method comprises milling the synthetic mineral product formed on heating the mixture.
9. The method according to paragraph 8, wherein the method comprises milling the synthetic mineral product to achieve a d₉₅, by laser, less than about 75 µm, for example, less than about 50 µm, or less than about 25 µm, or less than about 15 µm, or less than about 10 µm.
10. A synthetic mineral product (e.g., for use as a wollastonite substitute), the synthetic mineral product obtained or obtainable by the method according to any preceding paragraph.
11. A synthetic mineral product (e.g., for use as a wollastonite substitute), the synthetic mineral product having an X-ray diffraction pattern substantially as shown in the following Table:

| 2-Theta | d-spacing (nm) | Relative Intensity^{(a)} |
|---|---|---|
| 26 ± 0.10 | 3.42 | M |
| 27.56 ± 0.10 | 3.23 | VS |
| 31.84 ± 0.10 | 2.8 | VS |
| 45.46 ± 0.10 | 1.99 | M |
| 45.86 ± 0.10 | 1.98 | VS |

| | | |
|---|---|---|
| ^{(a)} W = weak (> 0 to ≤ 20); M = medium (> 20 to ≤ 40); S = strong (> 40 to ≤ 60); VS = very strong (> 60 to ≤ 100). | | |

12. The synthetic mineral product according to paragraph 10 or paragraph 11, wherein the synthetic mineral product comprises, as determined by X-ray fluorescence spectroscopy: from about 40 wt. % to about 60 wt. %, for example, from about 45 wt. % to about 55 wt. %, or from about 48 wt. % to about 52 wt. %, SiOz; and from about 40 wt. % to about 60 wt. %, for example, from about 42 wt. % to about 52 wt. %, or from about 45 wt. % about 50 wt. %, CaO.
13. The synthetic mineral product according to paragraph 12, wherein the synthetic mineral product comprises, as determined by X-ray fluorescence spectroscopy: no more than about 2 wt. %, for example, no more than about 1.5 wt. %, Al₂O₃; no more than about 1 wt. %, for example, no more than about 0.1 wt. %, K₂O; no more than about 1 wt. %, for example, no more than about 0.5 wt. %, Fe₂Oa; no more than about 1 wt. %, for example, no more than about 0.1 wt. %, TiO₂; no more than about 2 wt. %, for example, no more than about 1.5 wt. %, MgO; no more than about 1 wt. %, for example, no more than about 0.1 wt. %, Na₂O; and/or no more than about 1 wt. %, for example, no more than about 0.1 wt. %, P₂O₅.
14. The synthetic mineral product according to paragraph 12 or paragraph 13, wherein the synthetic mineral product comprises, as determined by X-ray fluorescence spectroscopy, no more than about 5 wt. %, for example, no more than about 4 wt. %, or no more than about 3 wt. %, constituents other than SiOz and CaO.
15. The synthetic mineral product according to any of paragraphs 10 to 14, wherein the synthetic mineral product has a loss on ignition of no greater than about 2 wt. %, for example, no greater than about 1 wt. %.
16. The synthetic mineral product according to any of paragraphs 10 to 15, wherein the synthetic mineral product has a d₉₅, by laser, less than about 75 µm, for example, less than about 50 µm, or less than about 25 µm, or less than about 15 µm, or less than about 10 µm.
17. The synthetic mineral product according to any of paragraphs 10 to 16, wherein the synthetic mineral product has: a d₉₅, by laser, from about 5 µm to about 15 µm, for example, from about 8 µm to about 10 µm; a d₇₅, by laser, from about 3 µm to about 10 µm, for example, from about 4 µm to about 7 µm; a d₅₀, by laser, from about 1 µm to about 8 µm, for example, from about 2 µm to about 5 µm; a d₂₅, by laser, from about 0.5 µm to about 5 µm, for example, from about 1 µm to about 3 µm; a d₉₅, by sedigraph, from about 5 µm to about 20 µm, for example, from about 7 µm to about 15 µm; a d₇₅, by sedigraph, from about 3 µm to about 10 µm, for example, from about 4 µm to about 7 µm; a d₅₀, by sedigraph, from about 1 µm to about 8 µm, for example, from about 3 µm to about 6 µm; and/or a d₂₅, by sedigraph, from about 1 µm to about 5 µm, for example, from about 2 µm to about 4 µm.
18. The synthetic mineral product according to any of paragraphs 10 to 17, wherein the synthetic mineral product has a BET surface area no greater than about 10 m²/g, for example, no greater than about 5 m²/g, or no greater than about 3 m²/g, or from about 0.1 m²/g to about 10 m²/g, or from about 0.1 m²/g to about 5 m²/g, or from about 0.1 m²/g to about 3 m²/g.
19. The synthetic mineral product according to any of paragraphs 10 to 18, wherein the synthetic mineral product has D65-10° brightness characterised by tristimulus values: X no less than about 80, for example, no less than about 85; Y no less than about 85, for example, no less than about 90; and Z no less than about 85, for example, no less than about 90.
20. The synthetic mineral product according to any of paragraphs 10 to 19, wherein the synthetic mineral product has a loose density from about 0.4 g/cm³ to about 0.8 g/cm³ and/or a tapped density from about 0.8 g/cm³ to about 1.2 g/cm³.
21. The synthetic mineral product according to any of paragraphs 10 to 20, wherein the synthetic mineral product has a non-acicular particle shape, for example, wherein the synthetic mineral product has a blocky particle shape.
22. The synthetic mineral product according to any of paragraphs 10 to 21, wherein the synthetic mineral product contains less than about 1 wt. % crystalline silica.
23. The synthetic mineral product according to any of paragraphs 10 to 22, wherein the synthetic mineral product has a contact angle at 0.1 seconds from about 100° to about 150°.
24. A synthetic mineral product (e.g., for use as a wollastonite substitute), the synthetic mineral product comprising, as determined by X-ray fluorescence spectroscopy: from about 40 wt. % to about 60 wt. %, for example, from about 45 wt. % to about 55 wt. %, or from about 48 wt. % to about 52 wt. %, SiOz; and from about 40 wt. % to about 60 wt. %, for example, from about 42 wt. % to about 52 wt. %, or from about 45 wt. % about 50 wt. %, CaO; wherein the synthetic mineral product has a non-acicular particle shape, for example, wherein the synthetic mineral product has a blocky particle shape.
25. The synthetic mineral product according to paragraph 23, wherein the synthetic mineral product has an X-ray diffraction pattern substantially as shown in the following Table:

| 2-Theta | d-spacing (nm) | Relative Intensity^{(a)} |
|---|---|---|
| 26 ± 0.10 | 3.42 | M |
| 27.56 ± 0.10 | 3.23 | VS |
| 31.84 ± 0.10 | 2.8 | VS |
| 45.46 ± 0.10 | 1.99 | M |
| 45.86 ± 0.10 | 1.98 | VS |

| | | |
|---|---|---|
| ^{(a)} W = weak (> 0 to ≤ 20); M = medium (> 20 to ≤ 40); S = strong (> 40 to ≤ 60); VS = very strong (> 60 to ≤ 100). | | |

26. The synthetic mineral product according to paragraph 23 or paragraph 24, wherein the synthetic mineral product has: a d₉₅, by laser, from about 5 µm to about 15 µm, for example, from about 8 µm to about 10 µm; a d₇₅, by laser, from about 3 µm to about 10 µm, for example, from about 4 µm to about 7 µm; a d₅₀, by laser, from about 1 µm to about 8 µm, for example, from about 2 µm to about 5 µm; a d₂₅, by laser, from about 0.5 µm to about 5 µm, for example, from about 1 µm to about 3 µm; a d₉₅, by sedigraph, from about 5 µm to about 20 µm, for example, from about 7 µm to about 15 µm; a d₇₅, by sedigraph, from about 3 µm to about 10 µm, for example, from about 4 µm to about 7 µm; a d₅₀, by sedigraph, from about 1 µm to about 8 µm, for example, from about 3 µm to about 6 µm; and/or a d₂₅, by sedigraph, from about 1 µm to about 5 µm, for example, from about 2 µm to about 4 µm.
27. The synthetic mineral product according to any of paragraphs 23 to 25, wherein the synthetic mineral product has a BET surface area no greater than about 10 m²/g, for example, no greater than about 5 m²/g, or no greater than about 3 m²/g, or from about 0.1 m²/g to about 10 m²/g, or from about 0.1 m²/g to about 5 m²/g, or from about 0.1 m²/g to about 3 m²/g.
28. The synthetic mineral product according to any of paragraphs 23 to 27, wherein the synthetic mineral product contains less than about 1 wt. % crystalline silica.
29. The synthetic mineral product according to any of paragraphs 23 to 28, wherein the synthetic mineral product has a contact angle at 0.1 seconds from about 100° to about 150°.
30. A polymer composition comprising a polymer and the synthetic mineral product according to any of paragraphs 10 to 29.
31. The polymer composition according to paragraph 30, wherein the polymer composition comprises no less than about 5 wt. %, for example, no less than about 10 wt. %, or no less than about 15 wt. %, or no less than about 20 wt. %, of the synthetic mineral product.
32. The polymer composition according to paragraph 30 or paragraph 31, wherein the polymer is an elastomer.
33. The polymer composition according to any of paragraphs 30 to 31, wherein the polymer is a fluoropolymer, for example, a fluoroelastomer.
34. The polymer composition according to paragraph 33, wherein the fluoropolymer is a bisphenol-cured fluoropolymer or a peroxide-cured fluoropolymer.
35. The polymer composition according to any of paragraphs 30 to 34, wherein the polymer composition has: a minimum torque measure, by moving die rheometry according to ISO - 6502, from about 1.8 dNm to about 3 dNm, for example, from about 2.0 dNm to about 2.6 dNm, or from about 1.8 dNm to about 2.2 dNm, or from about 2.0 dNm to about 2.5 dNm; a maximum torque measure, by moving die rheometry according to ISO - 6502, from about 25 dNm to about 35 dNm, for example, from about 28 dNm to about 32 dNm, or from about 30 dNm to about 35 dNm; a crosslink density, by moving die rheometry according to ISO - 6502, from about 20 dNm to about 35 dNm, for example, from about 25 dNm to about 30 dNm, or from about 28 dNm to about 32 dNm; a ts2 scorch time, by moving die rheometry according to ISO - 6502, from about 0.3 minutes to about 2.3 minutes, for example, from about 0.3 minutes to about 1.0 minutes, or from about 0.4 minutes to about 0.7 minutes, or from about 1.5 minutes to about 2.0 minutes, or from about 1.8 minutes to about 2.3 minutes, or from about 1.9 minutes to about 2.1 minutes; and/or a t90 vulcanization time to 90 % cure, by moving die rheometry according to ISO - 6502, from about 1.0 minutes to about 6.0 minutes, for example, from about 1.0 minutes to about 2.0 minutes, or from about 1.4 minutes to about 1.9 minutes, or from about 4.5 minutes to about 6.0 minutes, or from about 4.8 minutes to about 5.2 minutes.
36. The polymer composition according to any of paragraphs 30 to 35, wherein the polymer composition has: a tensile strength, measured according o ISO 37, no less than about 6 MPa and no greater than about 25 MPa; an elongation at break, measured according to ISO 37, no less than about 140 % and no greater than about 600 %; and/or a compression set, measured according to ISO 815, no less than about 6 % and no greater than about 20 %.
37. A method of making the polymer composition according to any of paragraphs 30 to 36, the method comprising combining a polymer or polymer precursors with the synthetic mineral product according to any of paragraphs 10 to 29.
38. An article of manufacture formed from the polymer composition according to any of paragraphs 30 to 36.
39. Use of the synthetic mineral product according to any of paragraphs 10 to 29 in a polymer composition to: (a) increase the crosslink density of the polymer composition; (b) reduce the t90 vulcanization time to 90 % cure of the polymer composition; (c) increase the elongation at break of the polymer composition; and/or (d) reduce the compression set of the polymer composition; as compared to a reference polymer composition comprising the same amount of natural wollastonite or a wollastonite substitute not according to paragraphs 10 to 29.
40. A method of: (a) increasing the crosslink density of a polymer composition; (b) reducing the t90 vulcanization time to 90 % cure of the polymer composition; (c) increasing the elongation at break of the polymer composition; and/or (d) reducing the compression set of the polymer composition; as compared to a reference polymer composition comprising a reference amount of natural wollastonite or a wollastonite substitute not according to paragraphs 10 to 29, wherein the method comprises adding the synthetic mineral product according to any of paragraphs 10 to 29 to the polymer composition in the reference amount.

### EXAMPLES

### Example 1

A synthetic mineral product was prepared as follows. A mixture was prepared having the composition shown in Table 1. The mixture was co-milled in a ball mill to achieve a d₈₀ particle size, as measured by laser, of about 35 µm. After milling, the mixture was heated in a rotary kiln for about 30 minutes to produce the synthetic mineral product. The temperature of the rotary kiln was controlled such that the minimum temperature at the hot spot of the kiln during heating was 1450°C and the maximum temperature reached in the kiln during heating was 1550°C. The synthetic mineral product was cooled and then milled in a hammer mill up to 1 mm, and then in a jet mill.

**Table 1.**

| **Component of mixture** | **Amount present in mixture (wt. %)** |
|---|---|
| Silica sand* | 51 |
| Quicklime** | 48 |
| Non-silica and non-CaO compounds*** | 1 |

| | |
|---|---|
| * Silica sand H33 available from Quarzwerke, Germany ** QUICKLIME-CHEMICAL GRADE (Adams, MA) available from Specialty Minerals, Inc., USA *** For example, caustic calcined magnesia available from QMAG Pty Limited, Australia | |

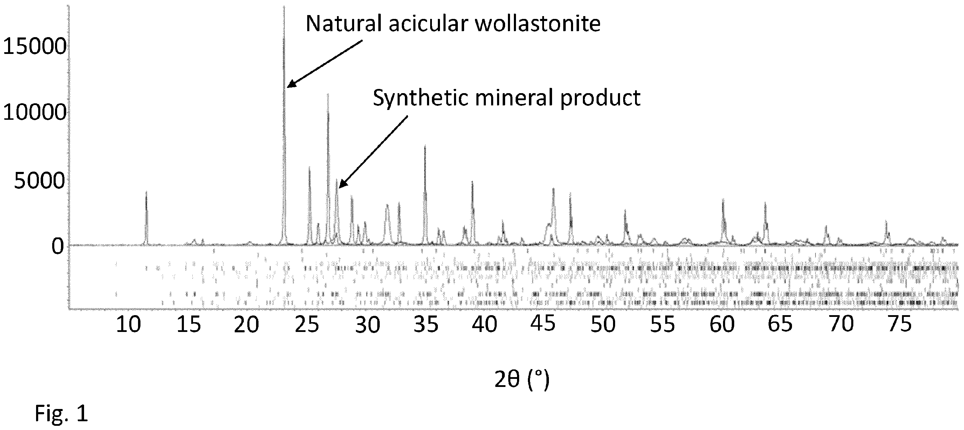

The synthetic mineral product was analysed by X-ray diffraction by the method set out in Example 7. The X-ray diffraction pattern obtained is shown in Figure 1, along with the X-ray diffraction for a commercially available grade of acicular natural wollastonite. As can be seen, a number of the peaks in the X-ray diffraction patterns are different. In particular, the synthetic mineral product exhibits a strong peak at a 2θ value of 27.58°, as compared to the peak at 23.14° for natural wollastonite. Based on the X-ray diffraction pattern, the synthetic mineral product was identified as having the same structure as pseudowollastonite. The peaks identified in the diffraction pattern for the synthetic mineral product were as follows (where: W = weak (> 0 to ≤ 20); M = medium (> 20 to ≤ 40); S = strong (> 40 to ≤ 60); VS = very strong (> 60 to ≤ 100)):

| 2-Theta | d-spacing (nm) | Relative Intensity |
|---|---|---|
| 14.92 ± 0.10 | 5.93 | W |
| 15.57 ± 0.10 | 5.69 | W |
| 17.4 ± 0.10 | 5.09 | W |
| 20.27 ± 0.10 | 4.38 | W |
| 23.48 ± 0.10 | 3.79 | W |
| 26 ± 0.10 | 3.42 | M |
| 27.56 ± 0.10 | 3.23 | VS |
| 31.84 ± 0.10 | 2.8 | VS |
| 33.07 ± 0.10 | 2.7 | W |
| 36.58 ± 0.10 | 2.45 | M |
| 38.06 ± 0.10 | 2.36 | W |
| 40.48 ± 0.10 | 2.22 | W |
| 41.23 ± 0.10 | 2.18 | W |
| 42.57 ± 0.10 | 2.12 | W |
| 44.21 ± 0.10 | 2.05 | W |
| 45.46 ± 0.10 | 1.99 | M |
| 45.86 ± 0.10 | 1.98 | VS |
| 49.62 ± 0.10 | 1.84 | W |
| 52.01 ± 0.10 | 1.76 | W |
| 53.5 ± 0.10 | 1.71 | W |
| 54.36 ± 0.10 | 1.68 | W |
| 56.95 ± 0.10 | 1.62 | W |
| 60.02 ± 0.10 | 1.54 | W |
| 62.94 ± 0.10 | 1.48 | W |
| 64.52 ± 0.10 | 1.44 | W |
| 65.69 ± 0.10 | 1.42 | W |
| 66.33 ± 0.10 | 1.4 | W |
| 66.7 ± 0.10 | 1.4 | W |
| 66.9 ± 0.10 | 1.39 | W |
| 67.25 ± 0.10 | 1.39 | W |
| 67.43 ± 0.10 | 1.38 | W |
| 73.04 ± 0.10 | 1.29 | W |
| 75.91 ± 0.10 | 1.25 | W |
| 77.77 ± 0.10 | 1.22 | W |

The particle size distribution for the synthetic mineral product was analysed by laser scattering and sedigraph methods as described in detail herein. The results obtained are shown in Tables 2 (laser) and 3 (sedigraph), as compared to the commercially available acicular natural wollastonite.

**Table 2.**

| | **Synthetic mineral product** | **Acicular natural wollastonite** |
|---|---|---|
| d₉₅ (µm) | 9.2 | 18.4 |
| d₇₅ (µm) | 5.7 | 7.5 |
| d₅₀ (µm) | 3.7 | 3.9 |
| d₂₅ (µm) | 2.0 | 2.0 |

**Table 3.**

| | **Synthetic mineral product** | **Acicular natural wollastonite** |
|---|---|---|
| d₉₅ (µm) | - | 13.0 |
| d₇₅ (µm) | 5.8 | 7.3 |
| d₅₀ (µm) | 4.6 | 4.0 |
| d₂₅ (µm) | 3.2 | 1.8 |

The specific surface area of the synthetic mineral product was measured by the BET method, as described in detail herein, as 2.1 m²/g. As a comparison, the BET specific surface area of the acicular natural wollastonite was measured as 3.4 m²/g.

The D65-10° brightness of the synthetic mineral product and the acicular natural wollastonite was measured by the method described hereinabove. The results for each of the tristimulus values, X, Y and Z, are shown in Table 4.

**Table 4.**

| **D65-10° Brightness (%)** | **Synthetic mineral product** | **Acicular natural wollastonite** |
|---|---|---|
| **X** | 87.1 | 87.1 |
| **Y** | 91.7 | 91.8 |
| **Z** | 93.9 | 96.0 |

The chemical composition of the synthetic mineral product was analysed by energy-dispersive X-ray fluorescence (XRF) spectroscopy by the method described in Example 8. The loss on ignition (LOI) was determined using thermogravimetric analysis before and after heating of the synthetic mineral product to 950°C. The results are shown in Table 5. The composition of the synthetic mineral product is expressed in terms of the oxide equivalents of the elements present.

**Table 5.**

| **Oxide equivalent of element** | **Amount present (wt. %)** |
|---|---|
| Al₂O₃ | 1.14 |
| SiO₂ | 50.10 |
| K₂O | 0.06 |
| Fe₂O₃ | 0.19 |
| TiO₂ | 0.04 |
| CaO | 47.10 |
| MgO | 0.93 |
| Na₂O* | 0.02 |
| P₂O₅ | 0.008 |
| Loss on ignition (LOI) | 0.44 |

The loose density of the synthetic mineral product was measured as 0.60 g/cm³. The tapped density of the synthetic mineral product was measured as 1.05 g/cm³.

The respirable crystalline silica content of the synthetic mineral product was measured by the XRD-SWeRF method as described hereinabove. The value obtained was 0.84 wt. %.

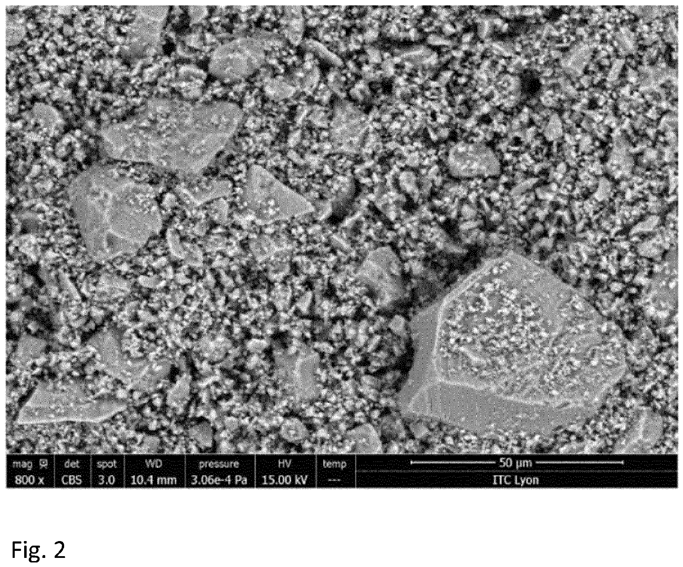

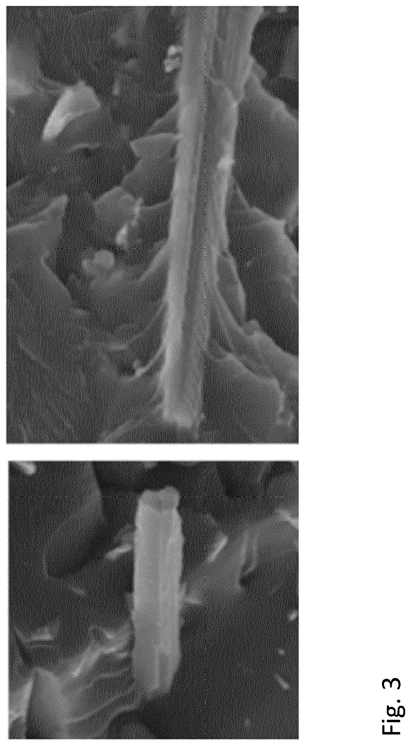

The synthetic mineral product was imaged in a scanning electron microscope (SEM). An SEM image of the synthetic mineral product is shown in Figure 2. A blocky particle morphology is visible. For comparison, Figure 3 shows SEM images of natural acicular wollastonite (left) and silane-treated natural acicular wollastonite (right).

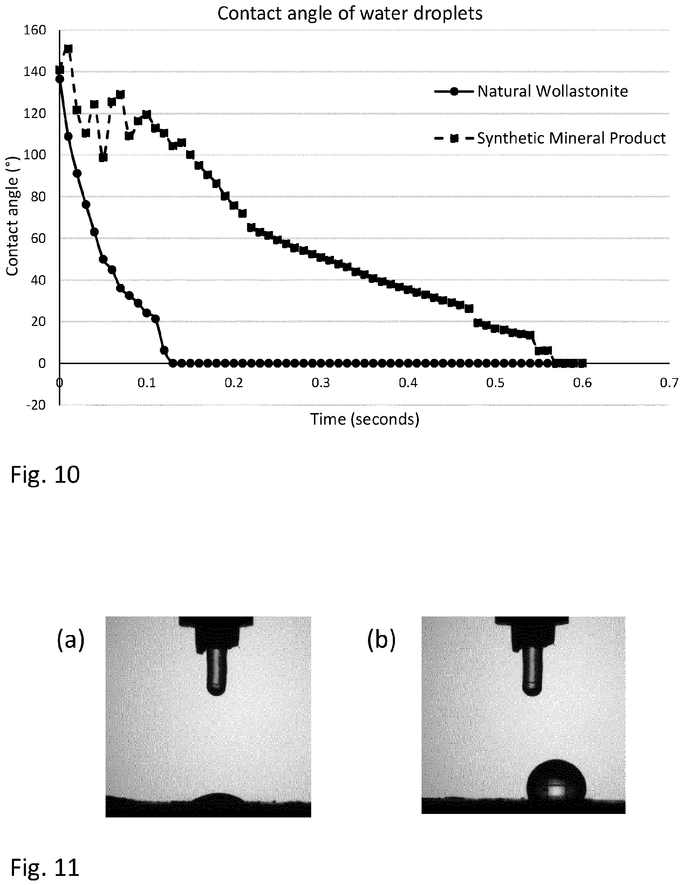

The contact angles of water droplets on the synthetic mineral product and on an acicular natural wollastonite Nyglos M4W, available from Imerys S.A., France, were analysed by Dynamic Absorption Tester by the method set out in Example 9. The results are shown as a function of time in Figure 10. An image was also taken of each sample 0.1 s after applying a water droplet; the images for (a) acicular natural wollastonite and (b) the synthetic mineral product are shown in Figure 11.

### Example 2

Three polymeric compositions PC1 to PC3 were prepared having the compositions (in parts per hundred rubber (phr)) set out in Table 6 using a two-roll mill by the method described hereinabove.

**Table 6.**

| | **PC1** | **PC2** | **PC3** |
|---|---|---|---|
| **Fluoreolastomer A** | 75 | 75 | 75 |
| **Fluoroelastomer B** | 25 | 25 | 25 |
| **Carnauba wax** | 0.6 | 0.6 | 0.6 |
| **Magnesium oxide** | 3 | 3 | 3 |
| **Polyethylene wax** | 0.6 | 0.6 | 0.6 |
| **Calcium hydroxide** | 6 | 6 | 6 |
| **Wollastonite A** | 38 | - | - |
| **Wollastonite B** | - | 38 | - |
| **Synthetic mineral product** | - | - | 38 |

Fluoroelastomers A and B were both medium-viscosity copolymers of vinylidene fluoride and hexafluoropropylene incorporating a bisphenol curing system. Fluoroelastomer A was 3M^{™} Dyneon^{™} FC 2174 available from Dyneon GmbH, 3M Advanced Materials Division, Germany. Fluoroelastomer B was 3M^{™} Dyneon^{™} FC 2181 available from Dyneon GmbH, 3M Advanced Materials Division, Germany. Wollastonite A (M1250 wollastonite available from Imerys S.A., France) was a natural acicular wollastonite having a median particle size, by laser, of 4 µm and a BET specific surface area of 3.0 m²/g. Wollastonite B (M1250 W20714 wollastonite available from Imerys S.A., France) corresponded to Wollastonite A following silane surface treatment.

The rheological properties of compositions PC1 to PC3 were evaluated by moving die rheometry according to ISO - 6502. The results are shown in Table 7.

**Table 7.**

| | **PC1** | **PC2** | **PC3** |
|---|---|---|---|
| **Minimum torque (dNm)** | 1.9 | 2.1 | 2.3 |
| **Maximum torque (dNm)** | 28. | 26.6 | 29.4 |
| **Crosslinking density (dNm)** | 26.5 | 24.5 | 27.1 |
| **ts2 scorch time (minutes)** | 2.05 | 1.96 | 2.02 |
| **t90 vulcanisation time (minutes)** | 6.78 | 4.68 | 5.05 |

The crosslinking density of PC3 was higher than that of PC1, indicating improved reactivity with the fluoroelastomer. The ts2 scorch time (i.e., the curing time) of PC3 was lower than that of PC1. The improvements were achieved without the need for silane treatment.

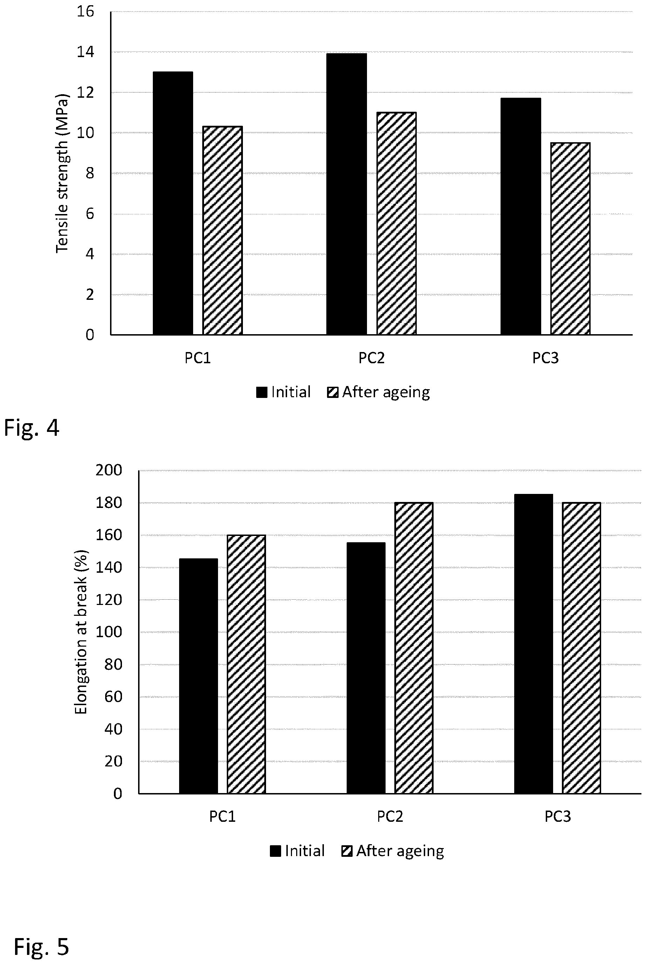

The tensile strength and elongation at break of PC1 to PC3 were tested according to ISO 37, both before and after air ageing at 275°C for 70 hours. The results are shown in Figures 4 and 5.

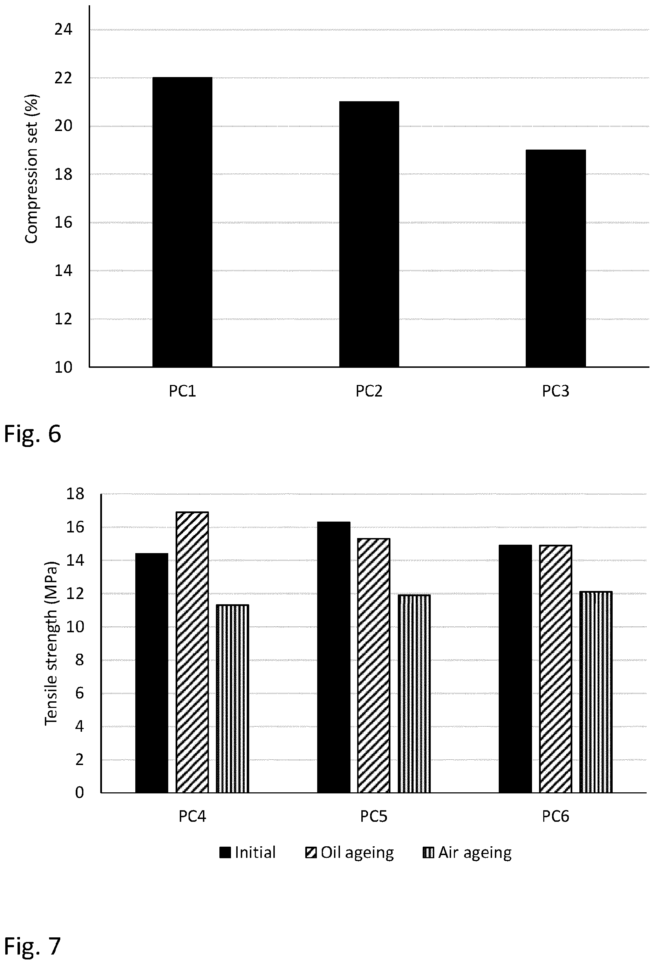

The compression set of PC1 to PC3 was measured according to ISO 815 after thermal treatment at 200°C for 70 hours. The results are shown in Figure 6. PC3 shows a lower compression set than PC1 or PC3, indicating that the filler fluoroelastomer is less deformable.

### Example 3

Three polymeric compositions PC4 to PC6 were prepared having the compositions (in parts per hundred rubber (phr)) set out in Table 8.

**Table 8.**

| | **PC4** | **PC5** | **PC6** |
|---|---|---|---|
| **Fluoreolastomer C** | 100 | 100 | 100 |
| **Crosslinking peroxide initiator on calcium carbonate** | 3 | 3 | 3 |
| **Crosslinking isocyanurate on calcium silicate** | 4 | 4 | 4 |
| **Zinc oxide** | 5 | 5 | 5 |
| **Wollastonite A** | 30 | - | - |
| **Wollastonite B** | - | 30 | - |
| **Synthetic mineral product** | - | - | 30 |

Fluoroelastomer C (Tecnoflon^{®} P 757 available from Solvay S.A., Belgium) was a medium-viscosity, peroxide-curable fluoroelastomer. Wollastonite A (M1250 wollastonite available from Imerys S.A., France) was a natural acicular wollastonite having a median particle size, by laser, of 4 µm and a BET specific surface area of 3.0 m²/g. Wollastonite B (M1250 W20714 wollastonite available from Imerys S.A., France) corresponded to Wollastonite A following silane surface treatment.

The rheological properties of compositions PC4 to PC6 were evaluated by moving die rheometry according to ISO - 6502. The results are shown in Table 9.

**Table 9.**

| | **PC4** | **PC5** | **PC6** |
|---|---|---|---|
| **Minimum torque (dNm)** | 1.81 | 1.87 | 2.06 |
| **Maximum torque (dNm)** | 20.83 | 30.0 | 32.5 |
| **Crosslinking density (dNm)** | 19.02 | 28.17 | 30.44 |
| **ts2 scorch time (minutes)** | 0.43 | 0.5 | 0.55 |
| **t90 vulcanisation time (minutes)** | 0.84 | 1.69 | 1.66 |

The crosslinking density of PC6 was higher than that of PC1, indicating improved reactivity with the fluoroelastomer.

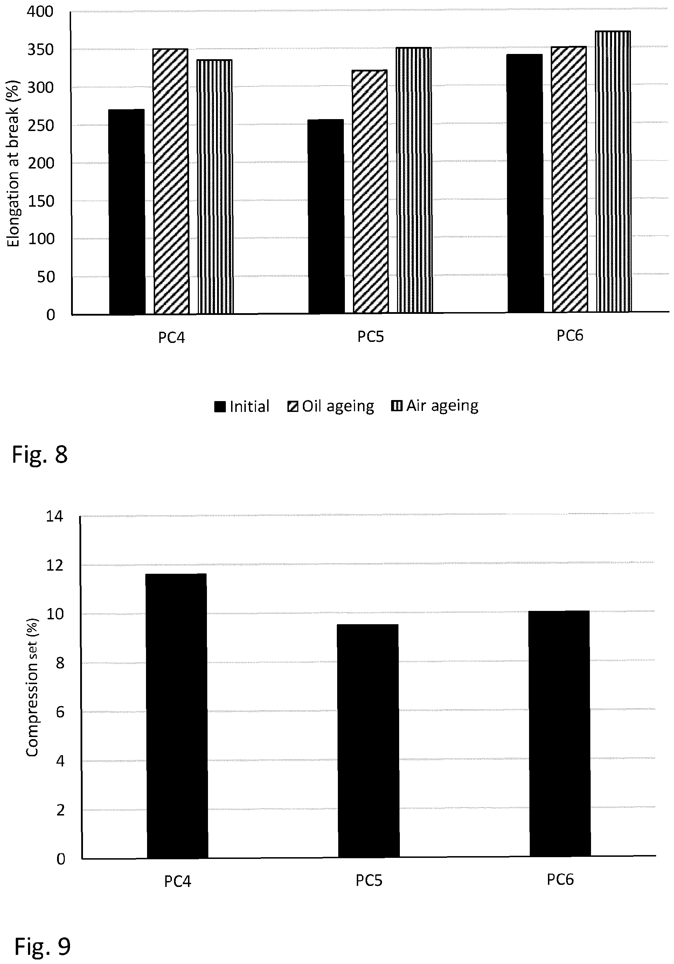

The tensile strength and elongation at break of PC4 to PC6 were tested according to ISO 37 before ageing, after air ageing at 275°C for 70 hours, and after oil ageing at 150°C for 168 hours. The results are shown in Figures 7 and 8. PC6 shows a similar tensile strength to PC4 and PC5, but an improved elongation at break.

The compression set of PC4 to PC6 was measured according to ISO 815 after thermal treatment at 200°C for 70 hours. The results are shown in Figure 9. PC6 shows a lower compression set than PC4.

### Example 4

Five polymeric compositions PC7 to PC11 were prepared having the compositions (in parts per hundred rubber (phr)) set out in Table 10.

**Table 10.**

| | **PC7** | **PC8** | **PC9** | **PC10** | **PC11** |
|---|---|---|---|---|---|
| **Fluoroelastomer A** | 75 | 75 | 75 | 75 | 75 |
| **Fluoroelastomer B** | 25 | 25 | 25 | 25 | 25 |
| **Carnauba wax** | 0.6 | 0.6 | 0.6 | 0.6 | 0.6 |
| **Magnesium oxide** | 3 | 3 | 3 | 3 | 3 |
| **Polyethylene wax** | 0.6 | 0.6 | 0.6 | 0.6 | 0.6 |
| **Calcium hydroxide** | 6 | 6 | 6 | 6 | 6 |
| **Wollastonite C** | 50 | | | | |
| **Wollastonite B** | | 50 | | | |
| **Synthetic mineral product** | | | 50 | | |
| **Calcined kaolin A** | | | | 40 | |
| **Talc A** | | | | | 40 |
| **Accelerator for bisphenol AF curing** | | | | | 1 |

Wollastonite C (Tremin^{®} 283-600 EST, available from Quarzweke GmbH, Germany) was a surface-treated, natural wollastonite having an average grain size of 3.5 µm. Calcined kaolin A (Polarite^{™} 102a, available from Imerys S.A., France) was an aminosilane-coated calcined kaolin having, prior to surface treatment, 0.05 mass % max. at +300 mesh, 10 mass % max. at +10 µm mesh and 45 mass % min. at -2 µm mesh. Talc A (Mistrobond^{®} R10C, available from Imerys S.A., France) was a very fine, silane-treated microlamellar talc. The accelerator for bisphenol AF curing was Viton^{™} curative No. 20.

The polymeric compositions were prepared using a two-roll mill by the protocol shown in Table 11.

**Table 11.**

| **Time (min)** | **Tasks** | **Temperature (°C)** | **Cylinder gap (mm)** |
|---|---|---|---|
| 10 | Plasticize the gum | 45 | 1/1.5 |
| 20 | Add Filler, MgO & Calcium hydroxide | | |
| | Increase temperature to 85/90°C | | |
| 10 | Add Carnauba wax, polyethylene wax & accelerator | 90 | 2/2.2 |
| | Decrease temperature to 45 | 45 | |
| 5 | Mixing & roll gap decrease 1mm (3/4 times) | 45 | 1 |
| 5 | Adjust sheet thickness before vulcanization | 45 | |

The rheological properties of compositions PC7 to PC11 at 170°C were evaluated by moving die rheometry according to ISO - 6502. The results are shown in Table 12.

**Table 12.**

| | **PC7** | **PC8** | **PC9** | **PC10** | **PC11** |
|---|---|---|---|---|---|
| **S' min (dNm)** | 2.26 | 1.93 | 2.37 | 2.6 | 2.27 |
| **S' max (dNm)** | 31.64 | 29.19 | 31.44 | 32.63 | 26.31 |
| **DC (dNm)** | 29.38 | 27.26 | 29.07 | 30.03 | 24.04 |
| **ts1 (min)** | 1.26 | 1.35 | 1.57 | 1.45 | 1.23 |
| **ts2 (min)** | 1.40 | 1.50 | 1.75 | 1.64 | 1.44 |
| **t50 (min)** | 1.83 | 1.95 | 2.23 | 2.19 | 2.19 |
| **t90 (min)** | 3.47 | 4.10 | 4.49 | 4.01 | 4.52 |
| **t90*1,5 (min)** | 5.12 | 6.09 | 6.44 | 6.01 | 6.47 |
| **t90*4,5 (min)** | 15.37 | 18.27 | 20.12 | 18.3 | 20.2 |

The rheological properties of compositions PC7 to PC11 were also evaluated by Mooney viscometry at 121°C according to ISO 289-1. The results are shown in Table 13.

**Table 13.**

| | **PC7** | **PC8** | **PC9** | **PC10** | **PC11** |
|---|---|---|---|---|---|
| **MU ini** | 85.00 | 91.30 | 97.97 | 114.65 | 110.07 |
| **MU 10** | 35.70 | 29.28 | 41.14 | 84.44 | 71.04 |
| **MU mini** | 35.70 | 29.09 | 40.95 | 84.38 | 71.04 |

The modulus at 50 % extension, the modulus at 100 % extension, the tensile strength, the elongation at break, the tear resistance, the Shore A hardness and the compression set were measured: before ageing; after oil ageing at 150°C for 70 hours; and after air ageing at 275°C for 70 hours. Tensile properties were measured according to ISO 37. Tear resistance was measured according to ISO 34. Shore A hardness was measured according to ISO 7619-1. Compression set was measured according to ISO 815. Each property was measured from ten different samples and an average obtained. The results are shown in Tables 14, 15 and 16. The results are shown along with corresponding standard deviations (σ) below each measurement.

**Table 14.**

| **Initial values** | ***Ref value*** | **PC7** | **PC8** | **PC9** | **PC10** | **PC11** |
|---|---|---|---|---|---|---|
| Modulus 50% (MPa) | | 7.0 | 13.6 | 11.8 | 14.1 | 14.3 |
| σ | | 0.6 | 0.8 | 0.3 | 0.6 | 0.2 |
| Modulus 100% (MPa) | | 13.4 | 20.4 | 16.5 | 22 | 18.6 |
| σ | | 0.7 | 0.5 | 0.2 | 0.7 | 0.4 |
| Tensile strength (MPa) | **>10** | 14.4 | 22.1 | 20.2 | 23.9 | 19.8 |
| σ | | 1.3 | 0.7 | 0.8 | 0.7 | 1.3 |
| Elongation at break (%) | **>175** | 120 | 120 | 165 | 125 | 145 |
| σ | | 5 | 0 | 15 | 5 | 10 |
| Tear resistance (N/mm) | | 17.9 | 17.7 | 19.4 | 20.6 | 24.1 |
| σ | | 0.8 | 0.6 | 0.5 | 0.3 | 1.2 |
| Hardness shore A (15s) | **73** | 78 | 78 | 77 | 80 | 80 |
| σ | **5** | 0.5 | 0.5 | 0.5 | 1 | 1 |
| Compressio n set [200°C-70h] (%) | **<15** | 13.9 | 15.4 | 14.7 | 13.7 | 23.1 |
| σ | | 1.5 | 1.9 | 1.4 | 1 | 1.3 |
| Post cure | | 16h-230°C | 16h-230°C | 16h-230°C | 16h-230°C | 16h-230°C |

**Table 15.**

| **Oil ageing (150°C-70h)** | **PC7** | **PC8** | **PC9** | **PC10** | **PC11** |
|---|---|---|---|---|---|
| Modulus 50% (MPa) | 14.5 | 13.7 | 12 | 14.1 | 14.1 |
| σ | 0.6 | 0.7 | 0.4 | 0.7 | 0.3 |
| **Gain or loss vs initial** | **107.0%** | **0.7%** | **1.7%** | **0%** | **-1.4%** |
| Modulus 100% (MPa) | 21.2 | 20.1 | 16.7 | 22.5 | 18.1 |
| σ | 0.8 | 1 | 0.5 | 0.9 | 0.3 |
| **Gain or loss vs initial** | **58.2%** | **-1.5%** | **1.2%** | **2.3%** | **-2.7%** |
| Tensile strength (MPa) | 22.5 | 21.3 | 19.1 | 24.8 | 19.8 |
| σ | 0.9 | 0.7 | 1.5 | 0.6 | 0.3 |
| **Gain or loss vs initial** | **56.3%** | **-3.6%** | **-5.4%** | **-3.8%** | **0.0%** |
| Elongation at break (%) | 115 | 115 | 150 | 120 | 145 |
| σ | 10 | 10 | 25 | 5 | 10 |
| **Gain or loss vs initial** | **-4.2%** | **-4.2%** | **-9.1%** | **-4.0%** | **0.0%** |
| Tear resistance (N/mm) | 16.8 | 17 | 19.5 | 20.2 | 22.7 |
| σ | 0.4 | 0.5 | 0.7 | 0.9 | 0.9 |
| **Gain or loss vs initial** | **-6.1%** | **-4.0%** | **0.5%** | **-1.9%** | **-5.8%** |
| Hardness shore A (15s) | 77 | 76 | 75 | 79 | 78 |
| σ | 0.5 | 0.5 | 0.5 | 0.5 | 0.5 |
| **Gain or loss vs initial** | **-1point** | **-1point** | **-2points** | **-1point** | **-2points** |

**Table 16.**

| **Air ageing** (275°C-70h) | **PC7** | **PC8** | **PC9** | **PC10** | **PC11** |
|---|---|---|---|---|---|
| Modulus 50% (MPa) | 15.4 | 16 | 12.9 | / | 15 |
| σ | 0.6 | 0.4 | 0.2 | / | 0.3 |
| **Gain or loss vs initial** | **120.0%** | **17.6%** | **9.3%** | **/** | **4.9%** |
| **Gain or loss vs oil ageing** | **6.21%** | **16.79%** | **7.50%** | **/** | **6.38%** |
| Modulus 100% (MPa) | 19.5 | 19.4 | 16.8 | | 17.9 |
| σ | 0.6 | 0.3 | 0.3 | / | 0.4 |
| **Gain or loss vs initial** | **45.5%** | **-4.9%** | **1.8%** | **/** | **-3.8%** |
| **Gain or loss vs oil ageing** | **-8.02%** | **-3.48%** | **0.60%** | **/** | **-1.10%** |
| Tensile strength (MPa) | 19.9 | 19.6 | 18.7 | 24.2 | 18.3 |
| σ | 0.4 | 0.1 | 0.9 | 1.5 | 1.4 |
| **Gain or loss vs initial** | **38.2%** | **-11.3%** | **-7.4%** | **1.3%** | **-7.6%** |
| **Gain or loss vs oil ageing** | **-11.6%** | **-8.0%** | **-2.1%** | **-2.4%** | **-7.6%** |
| Elongation at break (%) | 115 | 105 | 150 | 20 | 140 |
| σ | 5 | 5 | 5 | 5 | 10 |
| **Gain or loss vs initial** | **-4.2%** | **-12.5%** | **-9.1%** | **-84.0%** | **-3.4%** |
| **Gain or loss vs oil ageing** | **0.0%** | **-8.7%** | **0.0%** | **-83.3%** | **-3.4%** |
| Tear resistance (N/mm) | 18.8 | 18.1 | 21.7 | 30.3 | 24.1 |
| σ | 0.6 | 0.6 | 0.9 | 1.3 | 0.5 |
| **Gain or loss vs initial** | **5.0%** | **2.3%** | **11.9%** | **47.1%** | **0.0%** |
| **Gain or loss vs oil ageing** | **11.9%** | **6.5%** | **11.3%** | **50.0%** | **6.2%** |
| Hardness shore A (15s) | 80 | 79 | 77 | 86 | 80 |
| σ | 1 | 0.5 | 0.5 | 3 | 1 |
| **Gain or loss vs initial** | **+2 points** | **+2 points** | **0 point** | **+6 points** | **0 point** |
| **Gain or loss vs oil ageing** | **+3points** | **+3points** | **+2points** | **+7points** | **+2points** |

### Example 5

Five polymer compositions PC12 to PC16 were prepared having the compositions (in parts per hundred rubber (phr)) set out in Table 17.

**Table 17.**

| | **PC12** | **PC13** | **PC14** | **PC15** | **PC16** |
|---|---|---|---|---|---|
| **Fluoroelastomer C** | 100 | 100 | 100 | 100 | 100 |
| **Crosslinking peroxide initiator on calcium carbonate** | 3 | 3 | 3 | 3 | 3 |
| **Crosslinking isocyanurate on calcium silicate** | 4 | 4 | 4 | 4 | 4 |
| **Zinc oxide** | 5 | 5 | 5 | 5 | 5 |
| **Wollastonite A** | 30 | | | | |
| **Wollastonite B** | | 30 | | | |
| **Talc A** | | | 30 | | |
| **Calcined kaolin A** | | | | 30 | |
| **Synthetic mineral product** | | | | | 30 |

The polymeric compositions were prepared using a two-roll mill by the protocol shown in Table 18.

**Table 18.**

| **Time (min)** | **Tasks** | **Temperature (°C)** | **Cylinder gap (mm)** |
|---|---|---|---|
| 5 | Plasticize the gum | 50 | 1/1.5 |
| 15 | Add Filler | | 2/2.5 |
| 5 | Add additives | | 2/2.5 |
| 5 | Mixing & roll gap decrease 1mm (3/4 times) | 50 | 1 |
| 5 | Adjust sheet thickness before vulcanization | 50 | |

The rheological properties of compositions PC12 to PC16 at 170°C were evaluated by moving die rheometry at 170°C according to ISO - 6502. The results are shown in Table 19.

**Table 19.**

| | ***PC12*** | ***PC13*** | ***PC14*** | ***PC15*** | ***PC16*** |
|---|---|---|---|---|---|
| **S' min (dNm)** | 1.81 | 1.87 | 2.41 | 2.35 | 2.06 |
| **S' max (dNm)** | 20.83 | 30.0 | 37.37 | 34.99 | 32.5 |
| **DC (dNm)** | 19.02 | 28.13 | 34.96 | 32.64 | 30.44 |
| **ts1 (min)** | 0.39 | 0.51 | 0.46 | 0.48 | 0.5 |
| **ts2 (min)** | 0.43 | 0.57 | 0.5 | 0.53 | 0.55 |
| **t50 (min)** | 0.59 | 0.96 | 0.8 | 0.85 | 0.88 |
| **t90 (min)** | 0.84 | 1.69 | 1.52 | 1.61 | 1.66 |
| **t90*1,4 (min)** | 1.11 | 2.22 | 2.08 | 2.15 | 2.19 |
| **t90*4 (min)** | 3.22 | 6.46 | 6.05 | 6.26 | 6.38 |

The rheological properties of compositions PC12 to PC16 were also evaluated by Mooney viscometer at 121°C according to ISO 289-1. The results are shown in Table 20.

**Table 20.**

| | **PC12** | **PC13** | **PC14** | **PC15** | **PC16** |
|---|---|---|---|---|---|
| **MU ini** | 101.80 | 105.38 | 111.56 | 102.54 | 119.22 |
| **MU 10** | 46.82 | 47.56 | 50.59 | 57.45 | 50.03 |
| **MU mini** | 46.33 | 47.32 | 49.05 | 52.75 | 49.91 |

The modulus at 50 % extension, the modulus at 100 % extension, the tensile strength, the elongation at break, the tear resistance, the Shore A hardness and the compression set were measured: before ageing; after oil ageing at 150°C for 168 hours; and after air ageing at 275°C for 70 hours. Tensile properties were measured according to ISO 37. Tear resistance was measured according to ISO 34. Shore A hardness was measured according to ISO 7619-1. Compression set was measured according to ISO 815. Each property was measured from ten different samples and an average obtained. The results are shown in Tables 21, 22 and 23. The results are shown along with corresponding standard deviations (σ) below each measurement.

**Table 21.**

| ***Initial*** | **PC12** | **PC13** | **PC14** | **PC15** | **PC16** |
|---|---|---|---|---|---|
| **Modulus 50% (MPa)** | 2.7 | 2.8 | 6.4 | 3.8 | 2.2 |
| σ | 0.2 | 0.2 | 0.6 | 0.2 | 0.1 |
| **Modulus 100% (MPa)** | 6.1 | 6.8 | 13.2 | 10.5 | 4.3 |
| σ | 0.5 | 0.5 | 1.3 | 0.6 | 0.3 |
| **Modulus 300% (Mpa)** | | | | | 12.2 |
| σ | | | | | 0.7 |
| **Tensile strength (MPa)** | 14.4 | 16.3 | 21.3 | 19.8 | 15.3 |
| σ | 1.2 | 1.9 | 2.8 | 2 | 1 |
| **Elongation at break (%)** | 270 | 255 | 250 | 180 | 340 |
| σ | 20 | 30 | 20 | 20 | 10 |
| **Tear resistance (N/mm)** | 24.5 | 24.8 | 34.5 | 29.2 | 25.5 |
| σ | 1 | 0.9 | 0.9 | 1.6 | 1 |
| **Hardness Shore A (15s)** | 68 | 69 | 76 | 72 | 68 |
| σ | 0.5 | 1 | 0.5 | 1 | 0.5 |
| **Compressio n SET (70h-200°C)** | 11.6 | 9.5 | 14.3 | 9.2 | 10 |
| σ | 1.5 | 0.7 | 0.7 | 0.6 | 0.9 |
| **Post-cure** | 16h-230°C | 16h-230°C | 16h-230°C | 16h-230°C | 16h-230°C |

**Table 22.**

| ***Oil ageing (168h-150°)*** | **PC12** | **PC13** | **PC14** | **PC15** | **PC16** |
|---|---|---|---|---|---|
| **Modulus 50% (MPa)** | 2.5 | 2.6 | 5.0 | 3.7 | 2.1 |
| σ | 0.1 | 0.1 | 0.3 | 0.1 | 0.1 |
| **Gain or loss vs initial** | **-7.4%** | **-7.1%** | **-21.9%** | **-2.6%** | **-4.5%** |
| **Modulus 100% (MPa)** | 5.3 | 5.8 | 9.7 | 10 | 4.2 |
| σ | 0.2 | 0.3 | 0.5 | 0.5 | 0.1 |
| **Gain or loss vs initial** | **-13.1%** | **-14.7%** | **-26.5%** | **-4.8%** | **-2.3%** |
| **Modulus 300% (MPa)** | 13.3 | 14 | | | 11.5 |
| σ | 1 | 0.3 | | | 0.5 |
| **Tensile strength (MPa)** | 16.9 | 15.3 | 17.1 | 20.6 | 14.9 |
| σ | 2.2 | 1.3 | 1.2 | 1.6 | 1.3 |
| **Gain or loss vs initial** | **17.4%** | **-6.1%** | **-19.7%** | **4.0%** | **-2.6%** |
| **Elongation at break (%)** | 350 | 320 | 280 | 200 | 350 |
| **σ** | 30 | 25 | 15 | 15 | 15 |
| **Gain or loss vs initial** | **29.6%** | **25.5%** | **12.0%** | **11.1%** | **2.9%** |
| **Tear resistance (N/mm)** | 22.8 | 25.5 | 33.7 | 28.1 | 25.0 |
| σ | 0.8 | 1.6 | 1.3 | 1.5 | 1.5 |
| **Gain or loss vs initial** | **6.9%** | **-2.8%** | **2.3%** | **3.8%** | **2.0%** |
| **Hardness Shore A (15s)** | 68 | 68 | 75 | 72 | 67 |
| σ | 0.5 | 0.5 | 0.5 | 0.5 | 0.5 |
| **Gain or loss vs initial** | **0point** | **-1point** | **-1point** | **0point** | **-1point** |

**Table 23.**

| ***Air ageing (70h-275°C)*** | **PC12** | **PC13** | **PC14** | **PC15** | **PC16** |
|---|---|---|---|---|---|
| **Modulus 50% (MPa)** | 2.8 | 2.9 | 5.5 | 3.9 | 2.3 |
| σ | 0.3 | 0.3 | 0.1 | 0.2 | 0.05 |
| **Gain or loss vs initial** | **3.7%** | **3.6%** | **-14.1%** | **2.6%** | **4.5%** |
| **Gain or loss vs oil ageing** | **12.0%** | **11.5%** | **10.0%** | **5.4%** | **9.5%** |
| **Modulus 100% (MPa)** | 5.9 | 5.8 | *10.5* | 7.8 | 4.6 |
| σ | 0.5 | 0.5 | 0.1 | 0.3 | 0.1 |
| **Gain or loss vs initial** | **-3.3%** | **-14.7%** | **-20.5%** | **-25.7%** | **7.0%** |
| **Gain or loss vs oil ageing** | **11.3%** | **0.0%** | **8.2%** | **-22.0%** | **9.5%** |
| **Modulus 300% (MPa)** | 11 | 11.4 | | | 11.1 |
| σ | 0.6 | 0.6 | | | 0.3 |
| **Tensile strength (MPa)** | 11.3 | 11.9 | 14.5 | 13 | 12.1 |
| σ | 0.8 | 0.6 | 1 | 1 | 0.5 |
| **Gain or loss vs initial** | **-21.5%** | **-27.0%** | **-31.9%** | **-34.3%** | **-20.9%** |
| **Gain or loss vs oil ageing** | **-33.1 %** | **-22.2%** | **-15.2%** | **-36.9%** | **-18.8%** |
| **Elongation at break (%)** | 335 | 350 | 230 | 235 | 370 |
| σ | 25 | 20 | 5 | 15 | 20 |
| **Gain or loss vs initial** | **24.1%** | **37.3%** | **-8.0%** | **30.6%** | **8.8%** |
| **Gain or loss vs oil ageing** | **-4.3%** | **9.4%** | **-17.9%** | **17.5%** | **5.7%** |
| **Tear resistance (N/mm)** | 40.4 | 41.9 | 39.9 | 37.8 | 42.6 |
| σ | 1.5 | 1 | 1.6 | 1.1 | 1.7 |
| **Gain or loss vs initial** | **64.9%** | **69.0%** | **15.7%** | **29.5%** | **67.1%** |
| **Gain or loss vs oil ageing** | **77.2%** | **64.3%** | **18.4%** | **34.5%** | **70.4%** |
| **Hardness Shore A (15s)** | 66 | 65 | 73 | 69 | 66 |
| σ | 2 | 1 | 2 | 2 | 1 |
| **Gain or loss vs initial** | **-2points** | **-4points** | **-3points** | **-3points** | **-2points** |
| **Gain or loss vs oil ageing** | **-2points** | **-3points** | **-2points** | **-3points** | **-1point** |

### Example 6 - Method for determining BET Specific Surface Area

The BET specific surface area was determined using a method based on the standard NF X 11-621 titled "Determination de l'aire massique (surface spécifique) des poudres par adsorption de gaz - Méthode B.E.T. - Mesure volumétrique par adsorption d'azote à basse température" (Determination of mass area (specific surface) of powders by gas adsorption - BET Methods - Volumetric measurement by nitrogen adsorption at low temperature).

The method made use of a Micromeritics measurement apparatus (available from Micromeritics Instrument Corp., USA) including a vacuum pump, a VacPrep 061 degassing section, a Tristar 3000S measurement section and sample holders, a Mettler AG204 scale with a precision of 0.1 mg, Dewar flasks, nitrogen adsorbant gas and helium carrier gas.

### Example 7 - Method for X-ray Diffraction Analysis

### Sampling procedure:

The product is ground using an Aurec grinder. The median particle diameter of the powder is below 100 µm.

### Equipment:

In order to identify and obtain the crystallographic phases of each sample, X-ray diffraction analysis was carried out using a Bruker D8 advanced diffractometer in the usual theta-theta configuration.

### Post treatment analysis:

The quantification is made by the software Topas R version 3 with the Rietveld method as described in the article "Application of the Rietveld method to the analysis of anhydrous cement" written by Gwenn le Saout, Vanessa Kocaba and Karen Scrivener, published in Cement and Concrete Research 41 (2011), p133-148.

### Example 8 - Method for X-ray Fluorescence Analysis

The analysis is made according to the standard BS EN 196-2: Method of testing cement. Part 2: Chemical analysis of cement.

### Example 9 - Method for Contact Angle Measurement

Contact angle is measured using a Fibro System Dynamic Absorption Tester (FibroDAT) available, for example, from TQC Sheen. Samples are prepared by compacting a small amount of powder into the round holder. The FibroDAT device is set up using distilled water as the liquid. Water droplets with a volume of 4 µL are dropped onto the compacted powder surface. Photos of each droplet on the powder surface are taken at different intervals and the contact angle is measured over a set time period. The measured contact angles are plotted as a function of time.

Images of each sample 0.1 seconds after application of a water droplet can also be compared. 0.1 seconds is chosen as it represents a time at which the droplet is stable on the substrate surface, since a droplet can often bounce and deform during initial impact.

## Claims

1. A method of making a synthetic mineral product, the method comprising:
providing a mixture comprising a silica-containing material and a calcium-containing material; and
heating the mixture at no less than about 1200°C to form the synthetic mineral product.

2. The method according to claim 1, wherein providing the mixture comprises mixing the silica-containing material and the calcium-containing material together, for example, wherein mixing the silica-containing material and the calcium-containing material together comprises milling the silica-containing material and the calcium-containing material together, for example, to achieve a d₈₀, by laser, from about 10 µm to about 400 µm, for example, from about 20 µm to 50 µm.

3. The method according to claim 1 or claim 2, wherein:
(a) the silica-containing material is selected from silica sand, quartz, fused quartz, tridymite, cristobalite, keatite, moganite, coesite, stishovite, seifertite, melanophlogite, fumed silica, silica fume, silica gel, silica aerogel, and/or any combination thereof;
(b) the calcium-containing material comprises calcium oxide, calcium carbonate and/or calcium silicate, for example, wherein the calcium-containing material is selected from lime, quick lime, calcite, aragonite, vaterite, limestone, chalk, marble, travertine, ground calcium carbonate, precipitated calcium carbonate, calcium silicate, dolomite, and/or any combination thereof;
(c) the method comprises heating the mixture at no less than about 1450°C and/or at no greater than about 1550°C; and/or
(d) the method comprises milling the synthetic mineral product formed on heating the mixture, for example, to achieve a d₉₅, by laser, less than about 75 µm, for example, less than about 50 µm, or less than about 25 µm, or less than about 15 µm, or less than about 10 µm.

4. A synthetic mineral product, the synthetic mineral product obtained or obtainable by the method according to any preceding claim.

5. A synthetic mineral product, the synthetic mineral product having an X-ray diffraction pattern substantially as shown in the following Table:
| 2-Theta | d-spacing (nm) | Relative Intensity^{(a)} |
|---|---|---|
| 26 ± 0.10 | 3.42 | M |
| 27.56 ± 0.10 | 3.23 | VS |
| 31.84 ± 0.10 | 2.8 | VS |
| 45.46 ± 0.10 | 1.99 | M |
| 45.86 ± 0.10 | 1.98 | VS |
| | | |
|---|---|---|
| ^{(a)} W = weak (> 0 to ≤ 20); M = medium (> 20 to ≤ 40); S = strong (> 40 to ≤ 60); VS = very strong (> 60 to ≤ 100). | | |

6. The synthetic mineral product according to claim 4 or claim 5, wherein:
(a) the synthetic mineral product comprises, as determined by X-ray fluorescence spectroscopy:
from about 40 wt. % to about 60 wt. %, for example, from about 45 wt. % to about 55 wt. %, or from about 48 wt. % to about 52 wt. %, SiOz; and
from about 40 wt. % to about 60 wt. %, for example, from about 42 wt. % to about 52 wt. %, or from about 45 wt. % about 50 wt. %, CaO; and optionally:
no more than about 2 wt. %, for example, no more than about 1.5 wt. %, Al₂O₃;
no more than about 1 wt. %, for example, no more than about 0.1 wt. %, K₂O;
no more than about 1 wt. %, for example, no more than about 0.5 wt. %, Fe₂O₃;
no more than about 1 wt. %, for example, no more than about 0.1 wt. %, TiO₂;
no more than about 2 wt. %, for example, no more than about 1.5 wt. %, MgO;
no more than about 1 wt. %, for example, no more than about 0.1 wt. %, Na₂O; and/or
no more than about 1 wt. %, for example, no more than about 0.1 wt. %, P₂O₅;
(b) the synthetic mineral product comprises, as determined by X-ray fluorescence spectroscopy, no more than about 5 wt. %, for example, no more than about 4 wt. %, or no more than about 3 wt. %, constituents other than SiOz and CaO;
(c) the synthetic mineral product has a loss on ignition of no greater than about 2 wt. %, for example, no greater than about 1 wt. %;
(d) the synthetic mineral product has a d₉₅, by laser, less than about 75 µm, for example, less than about 50 µm, or less than about 25 µm, or less than about 15 µm, or less than about 10 µm;
(e) the synthetic mineral product has:
a d₉₅, by laser, from about 5 µm to about 15 µm, for example, from about 8 µm to about 10 µm;
a d₇₅, by laser, from about 3 µm to about 10 µm, for example, from about 4 µm to about 7 µm;
a d₅₀, by laser, from about 1 µm to about 8 µm, for example, from about 2 µm to about 5 µm;
a d₂₅, by laser, from about 0.5 µm to about 5 µm, for example, from about 1 µm to about 3 µm;
a d₉₅, by sedigraph, from about 5 µm to about 20 µm, for example, from about 7 µm to about 15 µm;
a d₇₅, by sedigraph, from about 3 µm to about 10 µm, for example, from about 4 µm to about 7 µm;
a d₅₀, by sedigraph, from about 1 µm to about 8 µm, for example, from about 3 µm to about 6 µm; and/or
a d₂₅, by sedigraph, from about 1 µm to about 5 µm, for example, from about 2 µm to about 4 µm;
(f) the synthetic mineral product has a BET surface area no greater than about 10 m²/g, for example, no greater than about 5 m²/g, or no greater than about 3 m²/g, or from about 0.1 m²/g to about 10 m²/g, or from about 0.1 m²/g to about 5 m²/g, or from about 0.1 m²/g to about 3 m²/g;
(g) the synthetic mineral product has D65-10° brightness **characterised by** tristimulus values:
X no less than about 80, for example, no less than about 85;
Y no less than about 85, for example, no less than about 90; and
Z no less than about 85, for example, no less than about 90;
(h) the synthetic mineral product has a loose density from about 0.4 g/cm³ to about 0.8 g/cm³ and/or a tapped density from about 0.8 g/cm³ to about 1.2 g/cm³;
(i) the synthetic mineral product has a non-acicular particle shape, for example, wherein the synthetic mineral product has a blocky particle shape;
(j) the synthetic mineral product contains less than about 1 wt. % crystalline silica; and/or
(k) the synthetic mineral product has a contact angle at 0.1 seconds from about 100° to about 150°.

7. A synthetic mineral product, the synthetic mineral product comprising, as determined by X-ray fluorescence spectroscopy:
from about 40 wt. % to about 60 wt. %, for example, from about 45 wt. % to about 55 wt. %, or from about 48 wt. % to about 52 wt. %, SiOz; and
from about 40 wt. % to about 60 wt. %, for example, from about 42 wt. % to about 52 wt. %, or from about 45 wt. % about 50 wt. %, CaO;
wherein the synthetic mineral product has a non-acicular particle shape, for example, wherein the synthetic mineral product has a blocky particle shape.

8. The synthetic mineral product according to claim 7, wherein:
(a) the synthetic mineral product has an X-ray diffraction pattern substantially as shown in the following Table:
| 2-Theta | d-spacing (nm) | Relative Intensity^{(a)} |
|---|---|---|
| 26 ± 0.10 | 3.42 | M |
| 27.56 ± 0.10 | 3.23 | VS |
| 31.84 ± 0.10 | 2.8 | VS |
| 45.46 ± 0.10 | 1.99 | M |
| 45.86 ± 0.10 | 1.98 | VS |
| | | |
|---|---|---|
| ^{(a)} W = weak (> 0 to ≤ 20); M = medium (> 20 to ≤ 40); S = strong (> 40 to ≤ 60); VS = very strong (> 60 to ≤ 100); | | |
(b) the synthetic mineral product has:
a d₉₅, by laser, from about 5 µm to about 15 µm, for example, from about 8 µm to about 10 µm;
a d₇₅, by laser, from about 3 µm to about 10 µm, for example, from about 4 µm to about 7 µm;
a d₅₀, by laser, from about 1 µm to about 8 µm, for example, from about 2 µm to about 5 µm;
a d₂₅, by laser, from about 0.5 µm to about 5 µm, for example, from about 1 µm to about 3 µm;
a d₉₅, by sedigraph, from about 5 µm to about 20 µm, for example,
from about 7 µm to about 15 µm;
a d₇₅, by sedigraph, from about 3 µm to about 10 µm, for example,
from about 4 µm to about 7 µm;
a d₅₀, by sedigraph, from about 1 µm to about 8 µm, for example,
from about 3 µm to about 6 µm; and/or
a d₂₅, by sedigraph, from about 1 µm to about 5 µm, for example,
from about 2 µm to about 4 µm;
(c) the synthetic mineral product has a BET surface area no greater than about 10 m²/g, for example, no greater than about 5 m²/g, or no greater than about 3 m²/g, or from about 0.1 m²/g to about 10 m²/g, or from about 0.1 m²/g to about 5 m²/g, or from about 0.1 m²/g to about 3 m²/g; and/or
(d) the synthetic mineral product contains less than about 1 wt. % crystalline silica.

9. A polymer composition comprising a polymer and the synthetic mineral product according to any of claims 4 to 8.

10. The polymer composition according to claim 9, wherein:
(a) the polymer composition comprises no less than about 5 wt. %, for example, no less than about 10 wt. %, or no less than about 15 wt. %, or no less than about 20 wt. %, of the synthetic mineral product;
(b) the polymer is an elastomer;
(c) the polymer is a fluoropolymer, for example, a fluoroelastomer, such as a bisphenol-cured fluoropolymer or a peroxide-cured fluoropolymer;
(d) the polymer composition has:
a minimum torque measure, by moving die rheometry according to ISO - 6502, from about 1.8 dNm to about 3 dNm, for example, from about 2.0 dNm to about 2.6 dNm, or from about 1.8 dNm to about 2.2 dNm, or from about 2.0 dNm to about 2.5 dNm;
a maximum torque measure, by moving die rheometry according to ISO - 6502, from about 25 dNm to about 35 dNm, for example, from about 28 dNm to about 32 dNm, or from about 30 dNm to about 35 dNm; and/or
a crosslink density, by moving die rheometry according to ISO - 6502, from about 20 dNm to about 35 dNm, for example, from about 25 dNm to about 30 dNm, or from about 28 dNm to about 32 dNm;
(e) a ts2 scorch time, by moving die rheometry according to ISO - 6502, from about 0.3 minutes to about 2.3 minutes, for example, from about 0.3 minutes to about 1.0 minutes, or from about 0.4 minutes to about 0.7 minutes, or from about 1.5 minutes to about 2.0 minutes, or from about 1.8 minutes to about 2.3 minutes, or from about 1.9 minutes to about 2.1 minutes; and/or
a t90 vulcanization time to 90 % cure, by moving die rheometry according to ISO - 6502, from about 1.0 minutes to about 6.0 minutes, for example, from about 1.0 minutes to about 2.0 minutes, or from about 1.4 minutes to about 1.9 minutes, or from about 4.5 minutes to about 6.0 minutes, or from about 4.8 minutes to about 5.2 minutes;
(f) the polymer composition has:
a tensile strength, measured according to ISO 37, no less than about 6 MPa and no greater than about 25 MPa;
an elongation at break, measured according to ISO 37, no less than about 140 % and no greater than about 600 %; and/or
a compression set, measured according to ISO 815, no less than about 6 % and no greater than about 20 %; and/or
(g) a compression set, measured according to ISO 815, no less than about 6 % and no greater than about 20 %.

11. A method of making the polymer composition according to claim 9 or claim 10, the method comprising combining a polymer or polymer precursors with the synthetic mineral product according to any of claims 4 to 8.

12. An article of manufacture formed from the polymer composition according to any of claims 9 to 10.

13. Use of the synthetic mineral product according to any of claims 4 to 8 in a polymer composition to:
(a) increase the crosslink density of the polymer composition;
(b) reduce the t90 vulcanization time to 90 % cure of the polymer composition;
(c) increase the elongation at break of the polymer composition; and/or
(d) reduce the compression set of the polymer composition;
as compared to a reference polymer composition comprising the same amount of natural wollastonite or a wollastonite substitute not according to claims 4 to 8.

14. A method of:
(a) increasing the crosslink density of a polymer composition;
(b) reducing the t90 vulcanization time to 90 % cure of the polymer composition;
(c) increasing the elongation at break of the polymer composition; and/or
(d) reducing the compression set of the polymer composition;
as compared to a reference polymer composition comprising a reference amount of natural wollastonite or a wollastonite substitute not according to claims 4 to 8, wherein the method comprises adding the synthetic mineral product according to any of claims 4 to 8 to the polymer composition in the reference amount.
